(19) Europäisches Patentamt
European Patent Office
Office européen des brevets

(11) EP 4 461 770 A1

(12) EUROPEAN PATENT APPLICATION
published in accordance with Art. 153(4) EPC

(43) Date of publication:
**13.11.2024 Bulletin 2024/46**

(21) Application number: **24744724.6**

(22) Date of filing: **18.01.2024**

(51) International Patent Classification (IPC):
***C08L 27/18*** *(2006.01)* ***C08K 5/09*** *(2006.01)*
***C08K 5/42*** *(2006.01)*

(52) Cooperative Patent Classification (CPC):
**C08F 14/26; C08K 5/09; C08K 5/42; C08L 27/18**

(86) International application number:
**PCT/JP2024/001345**

(87) International publication number:
**WO 2024/154804 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.01.2023 JP 2023006173**

(71) Applicant: **DAIKIN INDUSTRIES, LTD.**
**Osaka-shi, Osaka 530-0001 (JP)**

(72) Inventors:
- **KATO, Taketo**
**Osaka-Shi, Osaka 530-0001 (JP)**
- **YAMANAKA, Taku**
**Osaka-Shi, Osaka 530-0001 (JP)**
- **YAMAMOTO, Emi**
**Osaka-Shi, Osaka 530-0001 (JP)**
- **USAMI, Ryota**
**Osaka-Shi, Osaka 530-0001 (JP)**
- **NISHIMURA, Kenta**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) POLYTETRAFLUOROETHYLENE COMPOSITION

(57) The disclosure provides a PTFE composition containing smaller amounts of water and/or impurities even if it is a polytetrafluoroethylene composition prepared using a hydrocarbon surfactant. Provided is a PTFE composition containing: PTFE; and at least one compound selected from the group consisting of a compound represented by the formula (1) and a compound represented by the formula (2), the polytetrafluoroethylene composition being substantially free from water:

Formula (1): $(H\text{-}(CF_2)_{m-1}\text{-}COO)_pM^1$

wherein m is 4 to 20; $M^1$ is H, a metal atom, $NR^5_4$ (where $R^5$s are optionally the same as or different from each other and each represent H or a C1-C10 organic group), or the like; and p is 1 or 2, and

Formula (2) : $(H\text{-}(CF_2)_n\text{-}SO_3)_qM^2$

wherein n is 4 to 20; $M^2$ is H, a metal atom, $NR^5_4$ (where $R^5$ is as defined above), or the like; and q is 1 or 2.

EP 4 461 770 A1

## Description

TECHNICAL FIELD

The disclosure relates to polytetrafluoroethylene compositions.

BACKGROUND ART

Polytetrafluoroethylene (PTFE) fine powder is used for insulating tapes, coating materials for coaxial cables and oxygen sensors, or tubing for fuel and drinking water because of its excellent properties including electrical insulation, water resistance, chemical resistance, heat resistance, and cleanliness. These are produced by paste extrusion molding of PTFE fine powder. In recent years, the weight of components in various applications has been reduced, and coating materials, for example, are desired to be thinner.

Tapes produced by paste extrusion of PTFE fine powder can be processed into porous materials by high expansion, which therefore enables production of water-resistance moisture permeable films and filter materials and has a wide range of applications including clothing, separation membranes, and air filters.

PTFE fine powder is produced by emulsion polymerization of tetrafluoroethylene (TFE).

Patent Literature 1 discloses a method for reducing thermally induced discoloration of a fluoropolymer resin by exposing the fluoropolymer resin to an oxidizing agent, the fluoropolymer resin being obtained by emulsion polymerization in which a hydrocarbon surfactant is used.

CITATION LIST

- Patent Literature

Patent Literature 1: JP 2015-516029 T

SUMMARY OF INVENTION

- Technical Problem

The disclosure aims to provide a polytetrafluoroethylene composition containing smaller amounts of water and/or impurities even if it is a polytetrafluoroethylene composition prepared using a hydrocarbon surfactant.

- Solution to Problem

The disclosure (1) relates to a polytetrafluoroethylene composition containing: polytetrafluoroethylene; and

at least one compound selected from the group consisting of a compound represented by the following formula (1) and a compound represented by the following formula (2),
the polytetrafluoroethylene composition being substantially free from water:

Formula (1): $(H\text{-} (CF_2)_{m-1}\text{-}COO)_pM^1$

wherein m is 4 to 20; $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2; and

Formula (2): $(H\text{-} (CF_2)_n\text{-}SO_3)_qM^2$

wherein n is 4 to 20; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

The disclosure (2) relates to the polytetrafluoroethylene composition according to the disclosure (1), wherein $M^1$ in the formula (1) is H or $NH_4$ and $M^2$ in the formula (2) is H or $NH_4$.

The disclosure (3) relates to the polytetrafluoroethylene composition according to the disclosure (1) or (2), wherein the polytetrafluoroethylene is contained in an amount of 99.95% by mass or more relative to the polytetrafluoroethylene composition.

The disclosure (4) relates to the polytetrafluoroethylene composition according to any one of the disclosures (1) to (3), wherein the compound (1) is contained in an amount of 1 ppb by mass or more and 1000 ppb by mass or less and the compound (2) is contained in an amount of 5000 ppb by mass or less, relative to the polytetrafluoroethylene composition.

The disclosure (5) relates to the polytetrafluoroethylene composition according to the disclosure (4), wherein the polytetrafluoroethylene composition is substantially free from a compound represented by the following formula (3):

Formula (3): $(H\text{-}(CF_2)_8\text{-}SO_3)_qM^2$

wherein $M^2$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and q is 1 or 2.

The disclosure (6) relates to the polytetrafluoroethylene composition according to the disclosure (5), wherein the compound represented by the formula (3) amounts to 25 ppb by mass or less relative to the polytetrafluoroethylene.

The disclosure (7) relates to the polytetrafluoroethylene composition according to any one of the disclosures (1) to (6), wherein the polytetrafluoroethylene composition contains at least one compound selected from the group consisting of a compound represented by the following formula (4) and a compound represented by the following formula (4'), each in an amount of 1000 ppb by mass or less relative to the polytetrafluoroethylene composition:

Formula (4): $(H\text{-}(CF_2)_{15}\text{-}COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and

Formula (4'): $(H\text{-}(CF_2)_{16}\text{-}COO)_pM^1$

wherein $M^1$ is H, a metal atom, $NR^5_4$ (where $R^5$ is as defined above), imidazolium optionally containing a substituent, pyridinium optionally containing a substituent, or phosphonium optionally containing a substituent; and p is 1 or 2.

The disclosure (8) relates to the polytetrafluoroethylene composition according to any one of the disclosures (1) to (7), wherein the polytetrafluoroethylene composition contains at least one compound selected from the group consisting of a compound represented by the following formula (5) and a compound represented by the following formula (5'), each in an amount of 1000 ppb by mass or less relative to the polytetrafluoroethylene composition:

Formula (5): $(H\text{-}(CF_2)_{13}\text{-}COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and

Formula (5'): $(H\text{-}(CF_2)_{14}\text{-}COO)_pM^1$

wherein $M^1$ is H, a metal atom, $NR^5_4$ (where $R^5$ is as defined above), imidazolium optionally containing a substituent, pyridinium optionally containing a substituent, or phosphonium optionally containing a substituent; and p is 1 or 2.

The disclosure (9) relates to the polytetrafluoroethylene composition according to any one of the disclosures (1) to (8), wherein the polytetrafluoroethylene composition has an average primary particle size of 100 to 500 nm.

The disclosure (10) relates to the polytetrafluoroethylene composition according to any one of the disclosures (1) to (9), wherein the water amounts to 0.050% by mass or less relative to the polytetrafluoroethylene composition.

The disclosure (11) relates to the polytetrafluoroethylene composition according to any one of the disclosures (1) to (10), wherein the polytetrafluoroethylene composition has an extrusion pressure at a reduction ratio of 100 of 10 MPa or higher.

The disclosure (12) relates to the polytetrafluoroethylene composition according to any one of the disclosures (1) to (11), wherein the polytetrafluoroethylene composition is expandable.

The disclosure (13) relates to the polytetrafluoroethylene composition according to any one of the disclosures (1) to (12), wherein the polytetrafluoroethylene contains a tetrafluoroethylene unit and a modifying monomer unit based on a modifying monomer copolymerizable with tetrafluoroethylene.

The disclosure (14) relates to the polytetrafluoroethylene composition according to the disclosure (13), wherein

the modifying monomer includes at least one selected from the group consisting of perfluoro(methyl vinyl ether), hexafluoropropylene, vinylidene fluoride, and chlorotrifluoroethylene.

The disclosure (15) relates to a polytetrafluoroethylene composition having a tensile strength at break of 10.0 N or higher and a 0.1% mass reduction temperature of 400°C or lower, and being substantially free from water.

The disclosure (16) relates to a polytetrafluoroethylene composition having a tensile strength at break of 10.0 N or higher and a 1.0% mass reduction temperature of 492°C or lower, and being substantially free from water.

The disclosure (17) relates to a polytetrafluoroethylene composition having a tensile strength at break of 10.0 N or higher and a thermal stability index (TII) of 20 or higher, and being substantially free from water.

The disclosure (18) relates to a polytetrafluoroethylene composition having a standard specific gravity of 2.200 or less and a 0.1% mass reduction temperature of 400°C or lower, and being substantially free from water.

The disclosure (19) relates to a polytetrafluoroethylene composition having a standard specific gravity of 2.200 or less and a 1.0% mass reduction temperature of 492°C or lower, and being substantially free from water.

The disclosure (20) relates to the polytetrafluoroethylene composition according to the disclosure (19), wherein the polytetrafluoroethylene composition has a standard specific gravity of 2.130 or more and a 1.0% mass reduction temperature of 470°C or higher.

The disclosure (21) relates to the polytetrafluoroethylene composition according to the disclosure (19) or (20), wherein the polytetrafluoroethylene is contained in an amount of 99.95% by mass or more relative to the polytetrafluoroethylene composition.

The disclosure (22) relates to the polytetrafluoroethylene composition according to any one of the disclosures (1) to (21), wherein the polytetrafluoroethylene composition is used in a battery binder.

- Advantageous Effects of Invention

The disclosure can provide a polytetrafluoroethylene composition containing smaller amounts of water and/or impurities even if it is a polytetrafluoroethylene composition prepared using a hydrocarbon surfactant.

DESCRIPTION OF EMBODIMENTS

The term "organic group" as used herein means a group containing one or more carbon atoms or a group formed by removing one hydrogen atom from an organic compound.

The organic group is preferably an alkyl group optionally containing one or more substituents.

The organic group contained in a hydrocarbon surfactant herein is preferably free from a fluorine atom.

The disclosure will be specifically described below.

The disclosure provides a PTFE composition (hereafter, also referred to as PTFE composition (1) of the disclosure) containing: PTFE; and at least one compound selected from the group consisting of a compound represented by the following formula (1) and a compound represented by the following formula (2), the PTFE composition being substantially free from water:

Formula (1): $(H-(CF_2)_{m-1}-COO)_pM^1$

wherein m is 4 to 20; $M^1$ is H, a metal atom, $NR^5_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and p is 1 or 2; and

Formula (2) : $(H-(CF_2)_n-SO_3)_qM^2$

wherein n is 4 to 20; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

The disclosure also provides a PTFE composition (hereafter, also referred to as PTFE composition (2) of the disclosure) having a tensile strength at break of 10.0 N or higher and a 0.1% mass reduction temperature of 400°C or lower, and being substantially free from water.

The disclosure also provides a PTFE composition (hereafter, also referred to as PTFE composition (3) of the disclosure) having a tensile strength at break of 10.0 N or higher and a 1.0% mass reduction temperature of 492°C or lower, and being substantially free from water.

The disclosure also provides a PTFE composition (hereafter, also referred to as PTFE composition (4) of the disclosure) having a tensile strength at break of 10.0 N or higher and a thermal stability index (TII) of 20 or higher, and

being substantially free from water.

The disclosure also provides a PTFE composition (hereafter, also referred to as PTFE composition (5) of the disclosure) having a standard specific gravity of 2.200 or less and a 0.1% mass reduction temperature of 400°C or lower, and being substantially free from water.

The disclosure also provides a PTFE composition (hereafter, also referred to as PTFE composition (6) of the disclosure) having a standard specific gravity of 2.200 or less and a 1.0% mass reduction temperature of 492°C or lower, and being substantially free from water.

The PTFE compositions (1) to (6) of the disclosure are herein collectively referred to as "PTFE composition of the disclosure", unless otherwise stated.

The PTFE composition of the disclosure having the above structure, despite being prepared using a hydrocarbon surfactant, contains smaller amounts of water and impurities, and therefore is less prone to defects (e.g., coloring) caused by residual water and/or impurities.

The PTFE composition (1) of the disclosure contains at least one compound selected from the group consisting of a compound represented by the following formula (1) (hereafter, also referred to as compound (1)) and a compound represented by the following formula (2) (hereafter, also referred to as compound (2)). The PTFE compositions (2) to (6) of the disclosure may contain any of the above compounds.

Formula (1): $(H\text{-}(CF_2)_{m-1}\text{-}COO)_pM^1$

In the formula, m is 4 to 20; $M^1$ is H, a metal atom, $NR^5_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and p is 1 or 2.

Formula (2) : $(H\text{-}(CF_2)_n\text{-}SO_3)_qM^2$

In the formula, n is 4 to 20; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

The metal atom for $M^1$ or $M^2$ may be a monovalent or divalent metal atom, an alkali metal (Group 1), or an alkaline earth metal (Group 2). Specific examples thereof include Na, K, and Li.

The four $R^5$s may be the same as or different from each other. $R^5$ is preferably H or a C1-C10 organic group, more preferably H or a C1-C4 organic group.

$M^1$ and $M^2$ are each preferably H, an alkali metal, or $NH_4$, more preferably H or $NH_4$.

The metal atom for $M^1$ or $M^2$ may be a monovalent or divalent metal atom, an alkali metal (Group 1), or an alkaline earth metal (Group 2). Specific examples thereof include Na, K, and Li.

The four $R^5$s may be the same as or different from each other. $R^5$ is preferably H or a C1-C10 organic group, more preferably H or a C1-C4 organic group.

$R^5$ is preferably a fluorine-free organic group.

In the formula (1), m is preferably 6 or larger, more preferably 8 or larger, still more preferably 11 or larger, further more preferably 13 or larger, particularly preferably 15 or larger, while preferably 18 or smaller, more preferably 16 or smaller.

In the formula (2), n is preferably 6 or larger, more preferably 8 or larger, still more preferably 11 or larger, further more preferably 13 or larger, particularly preferably 15 or larger, while preferably 18 or smaller, more preferably 16 or smaller.

The PTFE composition containing the compound (1) and/or the compound (2) can be prepared using a hydrocarbon surfactant. In other words, the PTFE composition (1) of the disclosure may contain a hydrocarbon surfactant in addition to PTFE and the compound (1) and/or the compound (2). The amount of the hydrocarbon surfactant in the PTFE composition (1) of the disclosure is not limited, and is typically 100 ppm by mass to 10% by mass.

In the hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

When the PTFE composition of the disclosure contains the compound (1) (in an amount of greater than 0), the amount of the compound (1) may be 10 ppm by mass or less, preferably 5000 ppb by mass or less, more preferably 1000 ppb by mass or less, still more preferably 500 ppb by mass or less, further more preferably 100 ppb by mass or less, further more preferably 25 ppb by mass or less, further more preferably 15 ppb by mass or less, particularly preferably 10 ppb by mass or less, relative to the PTFE composition. The lower limit is not limited, and may be less than the lower limit of quantitation, 0.1 ppb by mass, or 1 ppb by mass.

When the PTFE composition of the disclosure contains the compound (2) (in an amount of greater than 0), the amount of the compound (2) may be 10 ppm by mass or less, preferably 5000 ppb by mass or less, more preferably 1000 ppb by mass or less, still more preferably 500 ppb by mass or less, further more preferably 100 ppb by mass or less, further more preferably 25 ppb by mass or less, further more preferably 15 ppb by mass or less, particularly preferably 10 ppb by mass or less, relative to the PTFE composition. The lower limit is not limited, and may be less than the lower limit of quantitation, 0.1 ppb by mass, or 1 ppb by mass.

The PTFE composition of the disclosure is preferably substantially free from a compound represented by the following formula (3) (hereafter, also referred to as compound (3)):

Formula (3): $(H\text{-}(CF_2)_8\text{-}SO_3)_qM^2$

wherein $M^2$ is H, a metal atom, $NR^5{}_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and q is 1 or 2.

The phrase "substantially free from the compound (3)" means that the amount of the compound (3) is 25 ppb by mass or less relative to the PTFE composition. The amount of the compound (3) is preferably 20 ppb by mass or less, more preferably 15 ppb by mass or less, still more preferably 10 ppb by mass or less, relative to the PTFE composition. The lower limit is not limited, and may be 0 ppb by mass, 0.1 ppb by mass, or 1 ppb by mass.

The PTFE composition of the disclosure preferably contains at least one compound selected from the group consisting of a compound represented by the following formula (4) (hereafter, also referred to as compound (4)) and a compound represented by the following formula (4') (hereafter, also referred to as compound (4')). The amounts thereof are each preferably 1000 ppb by mass or less relative to the PTFE composition.

Formula (4): $(H\text{-}(CF_2)_{15}\text{-}COO)_pM^1$

In the formula, $M^1$ is H, a metal atom, $NR^5{}_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and p is 1 or 2.

Formula (4'): $(H\text{-}(CF_2)_{16}\text{-}COO)_pM^1$

In the formula, $M^1$ is H, a metal atom, $NR^5{}_4$ (where $R^5$ is as defined above), imidazolium optionally containing a substituent, pyridinium optionally containing a substituent, or phosphonium optionally containing a substituent; and p is 1 or 2.

When the PTFE composition of the disclosure contains the compound (4) (in an amount of greater than 0), the amount of the compound (4) is more preferably 500 ppb by mass or less, still more preferably 250 ppb by mass or less, further more preferably 100 ppb by mass or less, further more preferably 50 ppb by mass or less, further more preferably 25 ppb by mass or less, further more preferably 15 ppb by mass or less, particularly preferably 10 ppb by mass or less, relative to the PTFE composition. The lower limit is not limited, and may be less than the lower limit of quantitation, 0.1 ppb by mass, or 1 ppb by mass.

When the PTFE composition of the disclosure contains the compound (4') (in an amount of greater than 0), the amount of the compound (4') is more preferably 500 ppb by mass or less, still more preferably 250 ppb by mass or less, further more preferably 100 ppb by mass or less, further more preferably 50 ppb by mass or less, further more preferably 25 ppb by mass or less, further more preferably 15 ppb by mass or less, particularly preferably 10 ppb by mass or less, relative to the PTFE composition. The lower limit is not limited, and may be less than the lower limit of quantitation, 0.1 ppb by mass, or 1 ppb by mass.

The PTFE composition of the disclosure preferably contains at least one compound selected from the group consisting of a compound represented by the following formula (5) (hereafter, also referred to as compound (5)) and a compound represented by the following formula (5') (hereafter, also referred to as compound (5')). The amounts thereof are each preferably 1000 ppb by mass or less relative to the PTFE composition.

Formula (5): $(H\text{-}(CF_2)_{13}\text{-}COO)_pM^1$

In the formula, $M^1$ is H, a metal atom, $NR^5{}_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and p is 1 or 2.

Formula (5'): $(H-(CF_2)_{14}-COO)_pM^1$

In the formula, $M^1$ is H, a metal atom, $NR^5_4$ (where $R^5$ is as defined above), imidazolium optionally containing a substituent, pyridinium optionally containing a substituent, or phosphonium optionally containing a substituent; and p is 1 or 2.

When the PTFE composition of the disclosure contains the compound (5) (in an amount of greater than 0), the amount of the compound (5) is more preferably 500 ppb by mass or less, still more preferably 250 ppb by mass or less, further more preferably 100 ppb by mass or less, further more preferably 50 ppb by mass or less, further more preferably 25 ppb by mass or less, further more preferably 15 ppb by mass or less, particularly preferably 10 ppb by mass or less, relative to the PTFE composition. The lower limit is not limited, and may be less than the lower limit of quantitation, 0.1 ppb by mass, or 1 ppb by mass.

When the PTFE composition of the disclosure contains the compound (5') (in an amount of greater than 0), the amount of the compound (5') is more preferably 500 ppb by mass or less, still more preferably 250 ppb by mass or less, further more preferably 100 ppb by mass or less, further more preferably 50 ppb by mass or less, further more preferably 25 ppb by mass or less, further more preferably 15 ppb by mass or less, particularly preferably 10 ppb by mass or less, relative to the PTFE composition. The lower limit is not limited, and may be less than the lower limit of quantitation, 0.1 ppb by mass, or 1 ppb by mass.

The amounts of the compounds (1), (2), (3), (4), (4'), (5), and (5') are values measured by liquid chromatography mass spectrometry as described later in EXAMPLES.

The PTFE in the PTFE composition of the disclosure may be a homopolymer of tetrafluoroethylene (TFE) or may be a modified PTFE containing a polymerized unit based on TFE (TFE unit) and a polymerized unit based on a modifying monomer (hereinafter, also referred to as a "modifying monomer unit"). The modified PTFE may contain 99.0% by mass or more of the TFE unit and 1.0% by mass or less of the modifying monomer unit. The modified PTFE may consist of the TFE unit and the modifying monomer unit.

In order to achieve improved expandability, the PTFE is preferably the modified PTFE.

The homopolymer of TFE refers to a polymer containing a polymerized unit based on a modifying monomer copolymerizable with TFE in an amount of less than 0.0001% by mass in all polymerized units.

In order to achieve improved expandability, the modified PTFE preferably contains the modifying monomer unit in an amount falling within a range of 0.00001 to 10% by mass in all polymerized units. The lower limit of the amount of the modifying monomer unit is more preferably 0.0001% by mass, still more preferably 0.001% by mass, further more preferably 0.005% by mass, even more preferably 0.010% by mass. The upper limit of the amount of the modifying monomer unit is preferably 5.0% by mass, more preferably 3.0% by mass, still more preferably 1.0% by mass, further more preferably 0.90% by mass, further more preferably 0.80% by mass, further more preferably 0.50% by mass, further more preferably 0.40% by mass, further more preferably 0.30% by mass, further more preferably 0.20% by mass, further more preferably 0.15% by mass, further more preferably 0.10% by mass, further more preferably 0.08% by mass, particularly preferably 0.05% by mass, most preferably 0.03% by mass.

The modifying monomer unit herein means a portion constituting the molecular structure of PTFE and derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include perfluoroolefins such as hexafluoropropylene (HFP); hydrogen-containing fluoroolefins such as trifluoroethylene and vinylidene fluoride (VDF); perhaloolefins such as chlorotrifluoroethylene (CTFE); perfluorovinyl ether; perfluoroallyl ether; a (perfluoroalkyl)ethylene; and ethylene. One modifying monomer may be used alone or two or more modifying monomers may be used in combination.

The perfluorovinyl ether may be, but is not limited to, an unsaturated perfluoro compound represented by the following formula (A):

$$CF_2=CF-ORf \qquad (A)$$

wherein Rf is a perfluoro organic group. The term "perfluoro organic group" herein means an organic group in which all hydrogen atoms bonded to any carbon atom are replaced by fluorine atoms. The perfluoro organic group may have ether oxygen.

An example of the perfluorovinyl ether is a perfluoro(alkyl vinyl ether) (PAVE) represented by the formula (A) wherein Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a

perfluoropropyl group, a perfluorobutyl group, a perfluoropentyl group, and a perfluorohexyl group.

Examples of the perfluorovinyl ether further include:

those represented by the formula (A) wherein Rf is a C4-C9 perfluoro(alkoxyalkyl) group;
those represented by the formula (A) wherein Rf is a group represented by the following formula:

[Chem. 1]

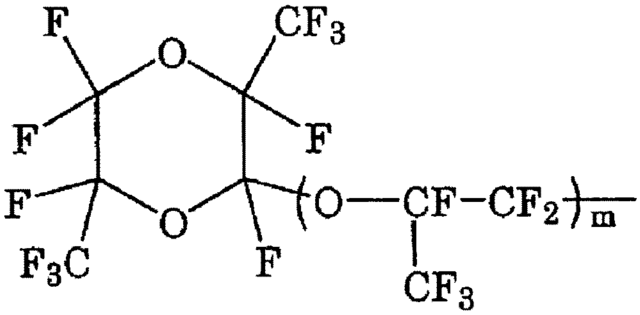

wherein m is 0 or an integer of 1 to 4; and
those represented by the formula (A) wherein Rf is a group represented by the following formula:

[Chem. 2]

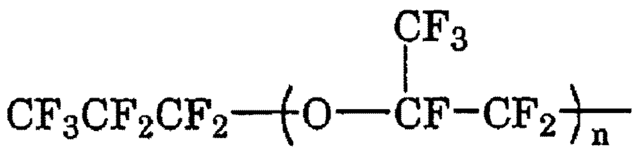

wherein n is an integer of 1 to 4.

Examples of the (perfluoroalkyl)ethylene (PFAE) include, but are not limited to, (perfluorobutyl)ethylene (PFBE) and (perfluorohexyl)ethylene.

An example of the perfluoroallyl ether is a fluoromonomer represented by the following formula (B):

$CF_2=CF-CF_2-ORf^1$ (B)

wherein $Rf^1$ is a perfluoro organic group.

$Rf^1$ is preferably a C1-C10 perfluoroalkyl group or a C1-C10 perfluoroalkoxyalkyl group. The perfluoroallyl ether preferably includes at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably includes at least one selected from the group consisting of $CF_2=CF-CF_2-O-C_2F_5$, $CF_2=CF-CF_2-O-C_3F_7$, and $CF_2=CF-CF_2-O-C_4F_9$, and is still more preferably $CF_2=CF-CF_2-O-CF_2CF_2CF_3$.

In order to achieve improved expandability, the modifying monomer preferably includes at least one selected from the group consisting of PAVE, HFP, VDF, and CTFE, more preferably includes at least one selected from the group consisting of perfluoro(methyl vinyl ether) (PMVE), HFP, VDF, and CTFE, more preferably includes at least one selected from the group consisting of PMVE and HFP.

The PTFE may have a core-shell structure. An example of the PTFE having a core-shell structure is a modified PTFE including a core of high-molecular-weight PTFE and a shell of lower-molecular-weight PTFE or modified PTFE in a particle. An example of such a modified PTFE is a PTFE disclosed in JP 2005-527652 T.

In order to achieve improved expandability, the PTFE preferably has an endothermic peak temperature of 320°C or higher, more preferably 325°C or higher, still more preferably 330°C or higher, further more preferably 335°C or higher, further more preferably 340°C or higher, further more preferably 342°C or higher, particularly preferably 344°C or higher. The endothermic peak temperature is preferably 350°C or lower.

The endothermic peak temperature is the temperature corresponding to the minimum point on a heat-of-fusion

curve obtained by performing differential scanning calorimetry (DSC) at a temperature-increasing rate of 10°C/min on a fluororesin that has never been heated to a temperature of 300°C or higher. When two or more minimum points are present in one melting peak, the temperatures corresponding to the respective peaks are considered as endothermic peak temperatures.

Preferably, the PTFE has at least one endothermic peak in a range of 333°C to 347°C on a heat-of-fusion curve drawn by increasing the temperature at a rate of 10°C/min using a differential scanning calorimeter (DSC), and has an enthalpy of fusion of 62 mJ/mg or higher at 290°C to 350°C calculated from the heat-of-fusion curve.

In order to achieve further reduced extrusion pressure and further improved tensile strength at break, the PTFE preferably has a number average molecular weight (Mn) of $0.5 \times 10^6$ or more, more preferably $1.0 \times 10^6$ or more, still more preferably $1.5 \times 10^6$ or more, further more preferably $2.0 \times 10^6$ or more, particularly preferably $3.0 \times 10^6$ or more. The number average molecular weight is preferably $20.0 \times 10^6$ or less, more preferably $15.0 \times 10^6$ or less, still more preferably $12.0 \times 10^6$ or less, further more preferably $10.0 \times 10^6$ or less, particularly preferably $8.0 \times 10^6$ or less.

The number average molecular weight is the molecular weight determined in conformity with the method described in the following literature, based on the heat of crystallization estimated by performing temperature drop measurement with a differential scanning calorimeter (DSC) on the molten fluororesin. The measurement is performed five times, and the average of the three values excluding the maximum and minimum values is used.

Literature: Suwa, T.; Takehisa, M.; Machi, S., J. Appl. Polym. Sci. vol. 17, pp. 3253 (1973).

The amount of the PTFE in the PTFE composition of the disclosure may be 95.0% by mass or more, preferably 98.0% by mass or more, more preferably 99.0% by mass or more, still more preferably 99.5% by mass or more, particularly preferably 99.9% by mass or more, most preferably 99.95% by mass or more, relative to the PTFE composition.

The PTFE composition of the disclosure is substantially free from water. This leads to stable extrusion pressure and enables the production of uniaxially expanded articles with stable expansion strength and biaxially expanded films with good appearance and stable film performance such as pressure loss and collection efficiency. The phrase "substantially free from water" means that the water content of the PTFE composition is 0.050% by mass or less.

The water content is preferably 0.040% by mass or less, more preferably 0.020% by mass or less, still more preferably 0.010% by mass or less, further more preferably 0.005% by mass or less, particularly preferably 0.002% by mass or less.

The water content is determined by the following method.

The mass of the PTFE composition is weighed before and after heating at 150°C for two hours, and the water content is calculated by the following expression. The sample is taken three times, and this calculation is performed for each sample and the values are averaged.

Water content (% by mass) = [(mass (g) of PTFE composition before heating) - (mass (g) of PTFE composition after heating)]/(mass (g) of PTFE composition before heating) $\times$ 100

The PTFE composition of the disclosure is preferably substantially free from a fluorine-containing compound (other than the compounds (1) and (2) described above) having a molecular weight of 1000 or less. The phrase "substantially free from a fluorine-containing compound" means that the amount of the fluorine-containing compound is 25 ppb by mass or less in the PTFE composition.

The amount of the fluorine-containing compound is preferably less than 25 ppb by mass, more preferably 10 ppb by mass or less, still more preferably less than 10 ppb by mass, further more preferably 5 ppb by mass or less, further more preferably 3 ppb by mass or less, further more preferably 1 ppb by mass or less, particularly preferably less than 1 ppb by mass. The lower limit is not limited, and may be an amount below the lower limit of quantitation.

The amount of the fluorine-containing compound having a molecular weight of 1000 or less is measured by the following method.

To a 1-g portion of a sample weighed out is added 10 g (12.6 mL) of methanol, followed by ultrasonication for 60 minutes, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Aqueous solutions having five or more different levels of standard substance concentrations are prepared, and LC/MS analysis is performed on the aqueous solutions containing varied amounts of the standard substance. The relation between the amount and the area relative to the amount is plotted, and a calibration curve is drawn. Based on the resulting calibration curve, the area of the fluorine-containing compound in the extract in the LC/MS chromatogram is converted to the amount of the fluorine-containing compound.

The lower limit of quantitation in this measurement method is 10 ppb by mass.

The amount of the fluorine-containing compound having a molecular weight of 1000 or less can also be measured by the following method.

To a 1-g portion of a sample weighed out is added 10 g (12.6 mL) of methanol, followed by ultrasonication at 60°C for two hours, standing at room temperature, and subsequent removal of solids, whereby an extract is obtained. The resulting extract is appropriately concentrated by nitrogen purge, and the fluorine-containing compound in the

concentrated extract is subjected to a LC/MS/MS assay. Based on the molecular weight information extracted from the LC/MS spectrum obtained, consistency with the structural formulas of the candidate fluorine-containing compounds is examined. Methanol standard solutions having five different known levels of fluorine-containing compound concentrations are prepared, and analyzed using a liquid chromatograph mass spectrometer. By first order approximation based on the methanol standard solution concentrations and the peak integral values in each concentration range, a calibration curve is created. The amount of the fluorine-containing compound contained in the extract is determined from the calibration curve, and converted to the amount of the fluorine-containing compound contained in the sample.

The lower limit of quantitation in this measurement method is 1 ppb by mass.

Examples of the fluorine-containing compound having a molecular weight of 1000 or less include a fluorine-containing compound containing a hydrophilic group having a molecular weight of 1000 g/mol or less. The molecular weight of the fluorine-containing compound is preferably 800 or less, more preferably 500 or less.

Polymerized particles obtained by polymerization performed in the presence of a fluorine-containing surfactant usually contain the fluorine-containing surfactant in addition to PTFE. The fluorine-containing surfactant herein is used in polymerization.

The fluorine-containing compound having a molecular weight of 1000 or less may be a compound that is not added in polymerization, for example, a compound that is produced as a by-product in polymerization.

When containing an anionic portion and a cationic portion, the fluorine-containing compound having a molecular weight of 1000 or less refers to a fluorine-containing compound in which the anionic portion has a molecular weight of 1000 or less. The fluorine-containing compound having a molecular weight of 1000 or less does not include PTFE.

The hydrophilic group may be, for example, -COOM, - $SO_2M$, or -$SO_3M$, and examples include anionic groups such as -COOM and -$SO_3M$ wherein M is H, a metal atom, $NR^1_4$, imidazolium optionally containing a substituent, pyridinium optionally containing a substituent, or phosphonium optionally containing a substituent, where $R^1$ is H or an organic group (preferably, a fluorine-free organic group).

The fluorine-containing surfactant may also be a fluorine-containing surfactant in which the anionic portion has a molecular weight of 1000 or less (fluorine-containing anionic surfactant). The "anionic portion" means a portion excluding the cation in the fluorine-containing surfactant. For example, in the case of $F(CF_2)_{n1}COOM$, the anionic portion refers to the portion "$F(CF_2)_{n1}COO$".

Examples of the fluorine-containing anionic surfactant include a compound represented by the following formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group containing 3 to 20 carbon atoms in which some or all of Hs are replaced by F; the alkylene group optionally containing one or more ether bonds in which some of Hs are replaced by Cl; and $Y^0$ is an anionic group.

The anionic group for $Y^0$ may be -COOM, -$SO_2M$, or - $SO_3M$, and may be -COOM or -$SO_3M$.

M is H, a metal atom, $NR^1_4$, imidazolium optionally containing a substituent, pyridinium optionally containing a substituent, or phosphonium optionally containing a substituent, wherein $R^1$ is H or an organic group.

Examples of the metal atom include an alkali metal (Group 1) and an alkaline earth metal (Group 2), such as Na, K, and Li.

$R^1$ may be H or a $C_{1-10}$ organic group, may be H or a $C_{1-4}$ organic group, and may be H or a $C_{1-4}$ alkyl group.

M may be H, a metal atom, or $NR^1_4$, may be H, an alkali metal (Group 1), an alkaline earth metal (Group 2), or $NR^1_4$, and may be H, Na, K, Li, or $NH_4$.

In $Rf^{n0}$, 50% or more of H atoms may be replaced by fluorine.

The fluorine-containing surfactant may be a single fluorine-containing surfactant or a mixture containing two or more fluorine-containing surfactants.

Examples of the fluorine-containing surfactant include compounds represented by the following formulas. The fluorine-containing surfactant may be a mixture of these compounds:

$F(CF_2)_7COOM$,

$F(CF_2)_5COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$,

$CF_2ClCF(CF_3)OCF_2CF(CF_3)OCF_2COOM$, and

[Chem. 3]

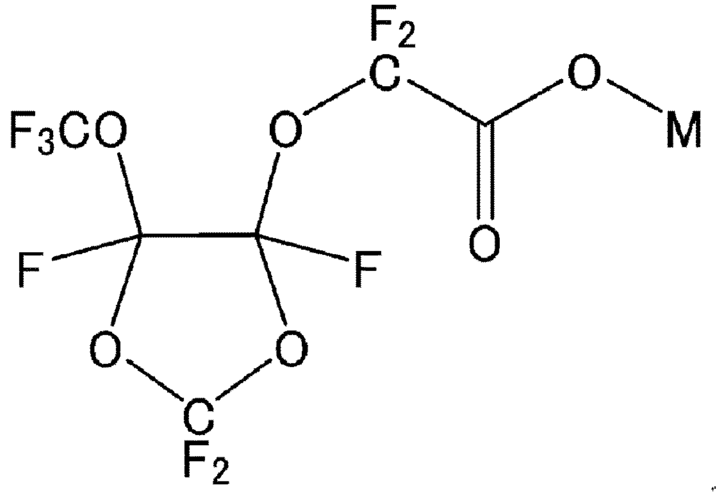

In each formula, M is H, a metal atom, $NR^1_4$, imidazolium optionally containing a substituent, pyridinium optionally containing a substituent, or phosphonium optionally containing a substituent, where $R^1$ is H or an organic group.
The PTFE composition of the disclosure is preferably substantially free from any of the fluorine-containing compounds represented by the above formulas.
In each of the above formulas, M may be H, a metal atom, or $NR^1_4$, may be H, an alkali metal (Group 1), an alkaline earth metal (Group 2), or $NR^1_4$, or may be H, Na, K, Li, or $NH_4$.
$R^1$ may be H or a $C_{1-10}$ organic group, may be H or a $C_{1-4}$ organic group, or may be H or a $C_{1-4}$ alkyl group.
The PTFE composition of the disclosure is substantially free from any of the fluorine-containing compounds represented by the above formulas, which leads to stable extrusion pressure and enables the production of uniaxially expanded articles with stable expansion strength and biaxially expanded films with good appearance and stable film performance such as pressure loss and collection efficiency.
The phrase "substantially free from any of the fluorine-containing compounds represented by the above formulas" means that the amount of any of the fluorine-containing compounds is 25 ppb by mass or less in the PTFE composition.
The amount of the fluorine-containing compound is preferably less than 25 ppb by mass, more preferably 10 ppb by mass or less, still more preferably less than 10 ppb by mass, further more preferably 5 ppb by mass or less, further more preferably 3 ppb by mass or less, further more preferably 1 ppb by mass or less, particularly preferably less than 1 ppb by mass. The lower limit is not limited, and may be an amount below the lower limit of quantitation.
The PTFE composition of the disclosure is also preferably substantially free from a fluorine-containing compound represented by the following formula:

$[C_{n-1}F_{2n-1}COO^-]M^+$

wherein n is an integer of 9 to 14, preferably 9 to 12; and $M^+$ is a cation. This leads to stable extrusion pressure and enables the production of uniaxially expanded articles with stable expansion strength and biaxially expanded films with good appearance and stable film performance such as pressure loss and collection efficiency.

M constituting the cation $M^+$ in the formula is the same as M mentioned above.

The phrase "substantially free from a fluorine-containing compound represented by the formula" means that the amount of the fluorine-containing compound is 25 ppb by mass or less in the PTFE composition.

The amount of the fluorine-containing compound is preferably less than 25 ppb by mass, more preferably 10 ppb by mass or less, still more preferably less than 10 ppb by mass, further more preferably 5 ppb by mass or less, further more preferably 3 ppb by mass or less, further more preferably 1 ppb by mass or less, particularly preferably less than 1 ppb by mass. The lower limit is not limited, and may be an amount below the lower limit of quantitation.

The PTFE composition of the disclosure preferably has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

The PTFE compositions (1), (3), (4), and (6) of the disclosure may have a 0.1% mass reduction temperature of 400°C or lower. The PTFE compositions (2) and (5) of the disclosure have a 0.1% mass reduction temperature of 400°C or lower.

The PTFE composition having a 0.1% mass reduction temperature of 400°C or lower can be obtained using a hydrocarbon surfactant.

The 0.1% mass reduction temperature may be 350°C or higher.

The 0.1% mass reduction temperature is a value measured by the following method.

About 10 mg of a composition of PTFE that has never been heated to 300°C or higher is precisely weighed out, and placed in a special aluminum pan, followed by thermogravimetry/differential thermal analysis (TG-DTA). The 0.1% mass reduction temperature is a temperature corresponding to a point at which the weight is reduced by 0.1 mass% when the temperature of the aluminum pan is increased in a temperature range from 25°C to 600°C at a rate of 10°C/min in the air atmosphere.

The PTFE compositions (1), (2), (4), and (5) of the disclosure may have a 1.0% mass reduction temperature of 492°C or lower. The PTFE compositions (3) and (6) of the disclosure may have a 1.0% mass reduction temperature of 492°C or lower.

The PTFE composition having a 1.0% mass reduction temperature of 492°C or lower can be obtained using a hydrocarbon surfactant.

The 1.0% mass reduction temperature may be 400°C or higher, 420°C or higher, 450°C or higher, or 470°C or higher.

The 1.0% mass reduction temperature is a value measured by the following method.

About 10 mg of a composition of PTFE that has never been heated to 300°C or higher is precisely weighed out, and placed in a special aluminum pan, followed by thermogravimetry/differential thermal analysis (TG-DTA). The 1.0% mass reduction temperature is a temperature corresponding to a point at which the weight is reduced by 1.0 mass% when the temperature of the aluminum pan is increased in a temperature range from 25°C to 600°C at a rate of 10°C/min in the air atmosphere.

The PTFE compositions (1) to (3), (5), and (6) of the disclosure preferably have a TII of 20 or higher. The PTFE composition (4) of the disclosure has a thermal instability index (TII) of 20 or higher,

The PTFE composition having a TII of 20 or higher can be obtained using a hydrocarbon surfactant. The TII is preferably 25 or higher, more preferably 30 or higher, still more preferably 35 or more, particularly preferably 40 or higher. The TII is preferably 100 or lower, more preferably 80 or lower, still more preferably 50 or lower.

The TII is measured in conformity with ASTM D4895-89.

The PTFE compositions (1), (5), and (6) of the disclosure preferably have a tensile strength at break of 10.0 N or higher. The PTFE compositions (2) to (4) of the disclosure have a tensile strength at break of 10.0 N or higher. When the PTFE composition has a tensile strength at break of 10.0 N or higher, the obtainable uniaxially expanded article of PTFE has further improved strength.

The tensile strength at break is more preferably 13.0 N or higher, still more preferably 16.0 N or higher, further more preferably 19.0 N or higher, further more preferably 22.0 N or higher, further more preferably 25.0 N or higher, further more preferably 28.0 N or higher, further more preferably 30.0 N or higher, further more preferably 32.0 N or higher, particularly preferably 35.0 N or higher. The higher the tensile strength at break, the better. Still, the tensile strength at break may be 100.0 N or lower, 80.0 N or lower, or 50.0 N or lower.

The tensile strength at break is a value obtained by the following method.

An expanded beading (article produced by stretching a beading) obtained in the expansion test described later is clamped between movable jaws with a gauge length of 5.0 cm to be fixed, and subjected to a tensile test at 25°C at a rate of 300 mm/min. The strength at break is measured as the tensile strength at break.

The PTFE compositions (1) to (4) of the disclosure preferably have a SSG of 2.200 or less. The PTFE compositions (5) and (6) of the disclosure have a standard specific gravity (SSG) of 2.200 or less. When the PTFE composition has a SSG of 2.200 or less, improved expandability can be achieved.

The SSG is more preferably 2.190 or less, still more preferably 2.180 or less, further more preferably 2.175 or less, even more preferably 2.170 or less, particularly preferably 2.165 or less.

The SSG is also preferably 2.130 or more.

The SSG is determined by the water displacement method in conformity with ASTM D792 using a sample molded in conformity with ASTM D4895.

In order to achieve improved strength of the extrudate, the PTFE composition of the disclosure preferably has an extrusion pressure at a reduction ratio (RR) of 100 of 10 MPa or higher, more preferably 12 MPa or higher, still more preferably 15 MPa or higher, further more preferably 16 MPa or higher, particularly preferably 17 MPa or higher.

In order to achieve improved processibility, the extrusion pressure at a RR of 100 is preferably 50 MPa or lower, more preferably 40 MPa or lower, still more preferably 35 MPa or lower, further more preferably 30 MPa or lower, further more preferably 25 MPa or lower, particularly preferably 20 MPa or lower.

The extrusion pressure at a RR of 100 is measured by the following method in conformity with the method described in JP 2002-201217 A.

To 100 g of the PTFE composition is added 21.7 g of lubricant (trade name: Isopar H (registered trademark), ExxonMobil Corp.), followed by mixing at room temperature for three minutes in a glass bottle. Next, the glass bottle is left to stand for at least one hour at room temperature (25°C) before extrusion, whereby a lubricated resin is obtained. The lubricated resin is paste-extruded through an orifice (diameter: 2.5 mm, land length: 11 mm, introduction angle: 30°) at room temperature at a reduction ratio of 100:1, whereby uniform beadings (extrudates) are obtained. The extrusion speed, i.e., ram speed is set to 20 inches/min (51 cm/min). The load at which the pressure is in equilibrium in the paste extrusion is measured, and the obtained value is divided by the cross-sectional area of the cylinder used in the paste extrusion, whereby the extrusion pressure is calculated.

In order to achieve improved strength of the extrudate, the PTFE composition of the disclosure preferably has an extrusion pressure at a RR of 300 of preferably 18 MPa or higher, more preferably 23 MPa or higher, still more preferably 25 MPa or higher, further more preferably 28 MPa or higher, even more preferably 30 MPa or higher, particularly preferably 32 MPa or higher.

In order to achieve improved processibility, the extrusion pressure at a RR of 300 is preferably 45 MPa or lower, more preferably 40 MPa or lower.

The extrusion pressure at a RR of 300 is measured by the following method.

Fifty grams of the PTFE composition and 11.00 g of hydrocarbon oil (trade name: Isopar-E, available from ExxonMobil Corporation) as an extrusion aid are mixed for three minutes in a polyethylene container. A cylinder of an extruder is filled with the resulting mixture at room temperature (25 ± 2°C). A load of 0.47 MPa is applied to a piston inserted into the cylinder and maintained for one minute. Then, the mixture is extruded through an orifice at a ram speed of 18 mm/min. The ratio of the cross-sectional area of the cylinder to the cross-sectional area of the orifice (reduction ratio) is 300. The value obtained by dividing the load (N) at which the pressure is in equilibrium in the latter half of the extrusion operation by the cylinder cross-sectional area is defined as the extrusion pressure (MPa).

In order to achieve improved strength of the obtainable uniaxially expanded article of PTFE, the PTFE composition of the disclosure is preferably expandable.

The term "expandable" means that an expanded article is obtainable in the following expansion test.

A beading obtained by the above paste extrusion at a RR of 100 is heated at 230°C for 30 minutes, whereby the lubricant is removed from the beading. The beading (extrudate) is cut to an appropriate length and the resulting sample is clamped at each end with a gap between the clamps of 1.5 inches (38 mm), followed by heating to 300°C in an air-circulating furnace. The clamps are then moved apart at a desired speed (stretching speed) until the separation distance corresponds to the desired degree of stretching (total degree of stretching). The expansion test (stretching test) is performed in this manner. The stretching method is essentially in conformity with the method disclosed in US 4576869 B, except that the extrusion speed is different (51 cm/min, not 84 cm/min). The "degree of stretching" shows the increase in length attributable to expansion, and is typically expressed in relation to the original length. In the above stretching method, the stretching speed is 1000%/sec and the total degree of stretching is 2400%.

In order to achieve further improved strength of the obtainable uniaxially expanded article of PTFE, the PTFE composition of the disclosure is preferably expandable to 24 times its size.

The PTFE composition being expandable to 24 times its size means that it does not break in the above expansion test.

The PTFE composition of the disclosure preferably has an average primary particle size of 100 to 500 nm. The PTFE composition having an average primary particle size within the above range contains PTFE with a high molecular weight, which leads to stable extrusion pressure and enables the production of uniaxially expanded articles with stable expansion strength and biaxially expanded films with good appearance and stable film performance such as pressure

loss and collection efficiency.

The average primary particle size is more preferably 400 nm or smaller, still more preferably 350 nm or smaller, further more preferably 330 nm or smaller, further more preferably 320 nm or smaller, further more preferably 300 nm or smaller, further more preferably 280 nm or smaller, particularly preferably 250 nm or smaller, while more preferably 150 nm or greater, still more preferably 170 nm or greater, further more preferably 200 nm or greater.

The average primary particle size is measured by the following method.

A PTFE aqueous dispersion was diluted with water to a solid content concentration of 0.15% by mass. The transmittance of 550-nm light relative to the unit length of the resulting diluted latex was measured. The Feret diameters in a transmission electron microscopic image were measured and the number-based length average primary particle size was determined therefrom. A calibration curve was obtained from these values. Using this calibration curve, the average primary particle size is determined from the measured transmittance of 550-nm light incident on each sample.

The average primary particle size can be also measured by dynamic light scattering. In dynamic light scattering, a PTFE aqueous dispersion with a solid content concentration adjusted to about 1.0% by mass is prepared. The average primary particle size is determined from total 70 measured values using ELSZ-1000S (available from Otsuka Electronics Co., Ltd.) at 25°C. The refractive index of the solvent (water) is 1.3328 and the viscosity of the solvent (water) is 0.8878 mPa·s.

The PTFE composition of the disclosure may have an average secondary particle size of 350 μm or greater, preferably 400 μm or greater, more preferably 450 μm or greater, still more preferably 500 μm or greater, further more preferably 550 μm or greater, particularly preferably 600 μm or greater, while preferably 1000 μm or smaller, more preferably 900 μm or smaller, still more preferably 800 μm or smaller, further more preferably 700 μm or smaller.

The average secondary particle size is measured in conformity with JIS K 6891.

In order to achieve excellent handleability, the PTFE composition of the disclosure may have an average aspect ratio of 2.0 or lower, preferably 1.8 or lower, more preferably 1.7 or lower, still more preferably 1.6 or lower, further more preferably 1.5 or lower, further more preferably 1.4 or lower, even more preferably 1.3 or lower, particularly preferably 1.2 or lower, most preferably 1.1 or lower. The average aspect ratio may also be 1.0 or higher.

The average aspect ratio is determined as follows. A PTFE composition or a PTFE aqueous dispersion diluted to a solid content concentration of about 1% by mass is observed using a scanning electron microscope (SEM) and 200 or more randomly extracted particles are imaged. The average of the ratios of the major axes to the minor axes of the particles is determined as the average aspect ratio.

In order to achieve excellent handleability, the PTFE composition of the disclosure preferably has an apparent density of 0.40 g/mL or higher, more preferably 0.43 g/mL or higher, still more preferably 0.45 g/mL or higher, further more preferably 0.48 g/mL or higher, particularly preferably 0.50 g/mL or higher. The upper limit is not limited, and may be 0.70 g/mL.

The apparent density is determined in conformity with JIS K 6892.

The PTFE composition of the disclosure can be suitably produced by, for example, a production method including: (A) preparing an aqueous dispersion of PTFE by emulsion polymerization using a hydrocarbon surfactant; (B) coagulating the aqueous dispersion to obtain a wet powder; and (C) drying the wet powder.

In the hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The hydrocarbon surfactant is preferably a carboxylic acid-type hydrocarbon surfactant. The carboxylic acid-type hydrocarbon surfactant may be any surfactant that contains a carboxy group (-COOH) or a group where a hydrogen atom of a carboxy group is replaced by an inorganic cation (e.g., metal atom, ammonium). Usable is, for example, a hydrocarbon surfactant containing a carboxy group or a group where a hydrogen atom of a carboxy group is replaced by an inorganic cation, from among specific hydrocarbon surfactants described later and other compounds with surface activity.

The hydrocarbon surfactant is also preferably a sulfonic acid-type hydrocarbon surfactant. The sulfonic acid-type hydrocarbon surfactant may be any surfactant that contains a $-SO_3H$ group, a $-OSO_3H$ group, or a group where a hydrogen atom of any of these groups is replaced by an inorganic cation (e.g., metal atom, ammonium). Usable is, for example, a hydrocarbon surfactant containing a $-SO_3H$ group, a $-OSO_3H$ group, or a group where a hydrogen atom of any of these groups is replaced by an inorganic cation, from among specific hydrocarbon surfactants described later and other compounds with surface activity.

In order to achieve good emulsification performance, the hydrocarbon surfactant is preferably water-soluble. The phrase "the hydrocarbon surfactant is water-soluble" means that the maximum concentration of the hydrocarbon surfactant dissolved in water is 100 ppm by mass or higher at 85°C. The maximum concentration in water is preferably 500 ppm by mass or higher, more preferably 1000 ppm by mass or higher, still more preferably 2000 ppm by mass or higher, further more preferably 3000 ppm by mass or higher, further more preferably 5000 ppm by mass or higher, further more preferably 1% by mass or higher, further more preferably 3% by mass or higher, further more preferably 5% by

mass or higher, particularly preferably 10% by mass or higher, while it may be 50% by mass or lower.

The step (A) preferably includes a step of performing emulsion polymerization of tetrafluoroethylene alone or emulsion polymerization of tetrafluoroethylene and a modifying monomer copolymerizable with the tetrafluoroethylene, in the presence of a specific hydrocarbon surfactant in an aqueous medium and a step of adding the specific hydrocarbon surfactant continuously in the emulsion polymerization step.

Adding the specific hydrocarbon surfactant continuously means, for example, adding the specific hydrocarbon surfactant not all at once, but adding over time and without interruption or adding in portions. The specific hydrocarbon surfactant is, for example, a hydrocarbon surfactant containing one or more carbonyl groups which are not in a carboxy group or a hydrocarbon surfactant obtained by radically treating or oxidizing the hydrocarbon surfactant containing one or more carbonyl groups which are not in a carboxyl group. The radical treatment may be any treatment that generates radicals in the hydrocarbon surfactant containing one or more carbonyl groups which are not in a carboxy group. Examples include a treatment in which deionized water and the hydrocarbon surfactant are added to a reactor, the reactor is hermetically sealed, the inside of the reactor is replaced with nitrogen, the reactor is heated and pressurized, a polymerization initiator is charged, the contents are stirred for a certain time, and then the reactor is depressurized to the atmospheric pressure, and the reactor is cooled. The oxidation treatment is a treatment in which an oxidizing agent is added to a hydrocarbon surfactant containing one or more carbonyl groups which are not in a carboxy group. Examples of the oxidizing agent include oxygen, ozone, hydrogen peroxide solution, manganese(IV) oxide, potassium permanganate, potassium dichromate, nitric acid, and sulfur dioxide. The above production method enables, even without a conventional fluorine-containing surfactant, the production of PTFE having a molecular weight equivalent to PTFE obtained by a conventional production method using a fluorine-containing surfactant.

In the production method, the step of continuously adding the specific hydrocarbon surfactant is preferably a step of starting to add the hydrocarbon surfactant to the aqueous medium when the solid content of PTFE formed in the aqueous medium is less than 0.60% by mass. The specific hydrocarbon surfactant is preferably started to be added to the aqueous medium when the solid content is 0.5% by mass or less. The specific hydrocarbon surfactant is more preferably started to be added when the solid content is 0.3% by mass or less, still more preferably started to be added when the solid content is 0.2% by mass or less, further more preferably started to be added when the solid content is 0.1% by mass or less, particularly preferably started to be added when the polymerization is initiated. The solid content is a concentration based on the total amount of the aqueous medium and the PTFE.

In the step of continuously adding the specific hydrocarbon surfactant, the amount of the specific hydrocarbon surfactant added is preferably 0.01 to 10% by mass based on 100% by mass of the aqueous medium. The lower limit thereof is more preferably 0.05% by mass, still more preferably 0.1% by mass, while the upper limit thereof is more preferably 5% by mass, still more preferably 1% by mass.

In the step of performing emulsion polymerization of tetrafluoroethylene alone or emulsion polymerization of tetrafluoroethylene and a modifying monomer copolymerizable with the tetrafluoroethylene in the presence of a specific hydrocarbon surfactant in an aqueous medium, the amount of the specific hydrocarbon surfactant is preferably large, and is preferably 0.0001 to 10% by mass based on 100% by mass of the aqueous medium. The lower limit thereof is more preferably 0.001% by mass, while the upper limit thereof is more preferably 1% by mass. Less than 0.0001% by mass of the surfactant may cause insufficient dispersibility. More than 10% by mass of the surfactant may fail to give the effects corresponding to its amount; on the contrary, such an amount of the surfactant may cause a reduction in the polymerization rate or even stop the reaction. The amount of the specific hydrocarbon surfactant is appropriately determined depending on the type of monomer used, the molecular weight of the target PTFE, and the like.

The specific hydrocarbon surfactant preferably includes at least one selected from the group consisting of surfactants represented by the formula: R-X (wherein R is a fluorine-free organic group containing one or more carbonyl groups which are not in a carboxy group and containing 1 to 2000 carbon atoms, X is, $-OSO_3X^1$, $-COOX^1$, or $-SO_3X^1$, wherein $X^1$ is H, a metal atom, $NR^1_4$, imidazolium optionally containing a substituent, pyridinium optionally containing a substituent, or phosphonium optionally containing a substituent, wherein $R^1$s are each H or an organic group (preferably, a fluorine-free organic group) and may be the same as or different from each other) and surfactants (e) described later. R preferably contains 500 or less carbon atoms, more preferably 100 or less carbon atoms, still more preferably 50 or less carbon atoms, further more preferably 30 or less carbon atoms.

The specific hydrocarbon surfactant more preferably includes at least one selected from the group consisting of: surfactants (a) represented by the following formula (a) :

[Chem. 4]

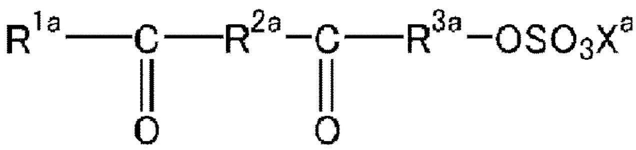

wherein $R^{1a}$ is a linear or branched alkyl group containing 1 or more carbon atoms or a cyclic alkyl group containing 3 or more carbon atoms, with a hydrogen atom bonded to a carbon atom therein being optionally replaced by a hydroxy group or a monovalent organic group (preferably, a fluorine-free organic group) containing an ester bond, optionally contains a carbonyl group when containing 2 or more carbon atoms, and optionally contains a monovalent or divalent heterocycle or optionally forms a ring when containing 3 or more carbon atoms; $R^{2a}$ and $R^{3a}$ are each independently a single bond or a divalent linking group; the total number of carbon atoms of $R^{1a}$, $R^{2a}$, and $R^{3a}$ is 6 or more; $X^a$ is H, a metal atom, $NR^{4a}{}_4$, imidazolium optionally containing a substituent, pyridinium optionally containing a substituent, or phosphonium optionally containing a substituent, wherein $R^{4a}$s are each H or an organic group (preferably a fluorine-free organic group) and may be the same as or different from each other; and any two of $R^{1a}$, $R^{2a}$, and $R^{3a}$ optionally bind to each other to form a ring;
surfactants (b) represented by the following formula (b) :

[Chem. 5]

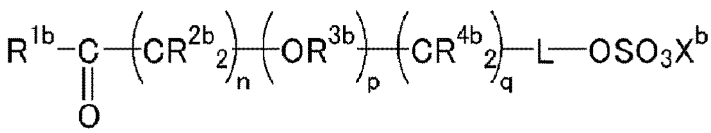

wherein $R^{1b}$ is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; $R^{2b}$ and $R^{4b}$ are each independently H or a substituent; $R^{3b}$ is an alkylene group containing 1 to 10 carbon atoms and optionally containing a substituent; n is an integer of 1 or more; p and q are each independently an integer of 0 or more; $X^b$ is H, a metal atom, $NR^{5b}{}_4$, imidazolium optionally containing a substituent, pyridinium optionally containing a substituent, or phosphonium optionally containing a substituent, wherein $R^{5b}$s are each H or an organic group (preferably a fluorine-free organic group) and may be the same as or different from each other; and any two of $R^{1b}$, $R^{2b}$, $R^{3b}$, and $R^{4b}$ optionally bind to each other to form a ring; L is a single bond, $-CO_2-B-*$, -OCO-B-*, $-CONR^{6b}-B-*$, $-NR^{6b}CO-B-*$, or -CO- other than the carbonyl groups in $-CO_2-B-$, -OCO-B-, $-CONR^{6b}-B-$, and $-NR^6CO-B-$, wherein B is a single bond or an alkylene group containing 1 to 10 carbon atoms and optionally containing a substituent, $R^{6b}$ is H or an alkyl group containing 1 to 4 carbon atoms and optionally containing a substituent; and * indicates the side bonded to $-OSO_3X^b$ in the formula;
surfactants (c) represented by the following formula (c) :

[Chem. 6]

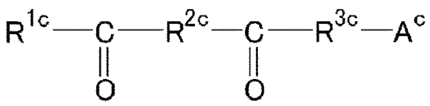

wherein $R^{1c}$ is a linear or branched alkyl group containing 1 or more carbon atoms or a cyclic alkyl group containing 3 or more carbon atoms, with a hydrogen atom bonded to a carbon atom therein being optionally replaced by a hydroxy group or a monovalent organic group (preferably, a fluorine-free organic group) containing an ester bond, optionally contains a carbonyl group when containing 2 or more carbon atoms, and optionally contains a monovalent or divalent heterocycle or optionally forms a ring when containing 3 or more carbon atoms; $R^{2c}$ and $R^{3c}$ are each independently a single bond or a divalent linking group; the total number of carbon atoms of $R^{1c}$, $R^{2c}$, and $R^{3c}$ is 5 or more; $A^c$ is $-COOX^c$ or $-SO_3X^c$, wherein $X^c$ is H, a metal atom, $NR^{4c}{}_4$, imidazolium optionally containing a substituent, pyridinium optionally containing a substituent, or phosphonium optionally containing a substituent, wherein $R^{4c}$s are each H or an organic group (preferably, a fluorine-free organic group) and are the same as or different from each other; and any two of $R^{1c}$, $R^{2c}$, and $R^{3c}$ optionally bind to each other to form a ring;
surfactants (d) represented by the following formula (d) :

[Chem. 7]

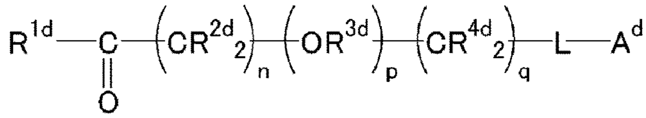

wherein $R^{1d}$ is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; $R^{2d}$ and $R^{4d}$ are each independently H or a substituent; $R^{3d}$ is an alkylene group containing 1 to 10 carbon atoms and optionally containing a substituent; n is an integer of 1 or more; p and q are each independently an integer of 0 or more; $A^d$ is $-SO_3X^d$ or $-COOX^d$, wherein $X^d$ is H, a metal atom, $NR^{5d}_4$, imidazolium optionally containing a substituent, pyridinium optionally containing a substituent, or phosphonium optionally containing a substituent, wherein $R^{5d}$s are each H or an organic group (preferably a fluorine-free organic group) and are the same as or different from each other; any two of $R^{1d}$, $R^{2d}$, $R^{3a}$ and $R^{4d}$ optionally bind to each other to form a ring; L is a single bond, $-CO_2-B-*$, -OCO-B-*, $-CONR^{6d}-B-*$, $-NR^{6d}CO-B-*$, or -CO- other than the carbonyl groups in $-CO_2-B-$, -OCO-B-, $-CONR^{6d}-B-$, and $-NR^{6d}CO-B-$, wherein B is a single bond or an alkylene group containing 1 to 10 carbon atoms and optionally containing a substituent, $R^{6d}$ is H or an alkyl group containing 1 to 4 carbon atoms and optionally containing a substituent; and * indicates the side bonded to $A^d$ in the formula; and
surfactants (e) represented by the following formula (e) :

[Chem. 8]

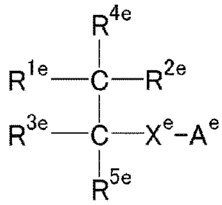

wherein $R^{1e}$ to $R^{5e}$ each represent H or a monovalent substituent, with the proviso that at least one of $R^{1e}$ or $R^{3e}$ represents a group represented by the formula: $-Y^e-R^{6e}$ and at least one of $R^{2e}$ or $R^{5e}$ represents a group represented by the formula: $-X^e-A^e$ or a group represented by the formula: $-Y^e-R^{6e}$;
$X^e$s at respective appearances are the same as or different from each other, and are each a divalent linking group or a bond;
$A^e$s at respective appearances are the same as or different from each other, and are each $-COOM^e$, $-SO_3M^e$, or $-OSO_3M^e$, wherein $M^e$ is H, a metal atom, $NR^{7e}_4$, imidazolium optionally containing a substituent, pyridinium optionally containing a substituent, or phosphonium optionally containing a substituent, wherein $R^{7e}$ is H or an organic group (preferably, a fluorine-free organic group); and
$Y^e$s at respective appearances are the same as or different from each other, and are each a divalent linking group selected from the group consisting of $-S(=O)_2-$, -O-, -COO-, -OCO-, $-CONR^{8e}-$, and $-NR^{8e}CO-$, or a bond, wherein $R^{8e}$ is H or an organic group (preferably, a fluorine-free organic group);
$R^{6e}$s at respective appearances are the same as or different from each other, and are each an alkyl group containing 2 or more carbon atoms and optionally containing, between carbon atoms, at least one selected from the group consisting of a carbonyl group, an ester group, an amide group, and a sulfonyl group; and
any two of $R^{1e}$ to $R^{5e}$ optionally bind to each other to form a ring.

The surfactant (a) is described below.

In the formula (a), $R^{1a}$ is a linear or branched alkyl group containing 1 or more carbon atoms or a cyclic alkyl group containing 3 or more carbon atoms.

When containing 3 or more carbon atoms, the alkyl group optionally contains a carbonyl group (-C(=O)-) between two carbon atoms. When containing 2 or more carbon atoms, the alkyl group optionally contains the carbonyl group at an end of the alkyl group. In other words, acyl groups such as an acetyl group represented by $CH_3-C(=O)-$are also included in the alkyl group.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1a}$, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the carbonyl groups and the number of carbon atoms constituting the heterocycles. For example, the number of carbon atoms in the group represented by $CH_3$-C(=O)-$CH_2$- is 3, the number of carbon atoms in the group represented by $CH_3$-C(=O)-$C_2H_4$-C(=O)-$C_2H_4$- is 7, and the number of carbon atoms in the group represented by $CH_3$-C(=O)- is 2.

In the alkyl group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-$R^{101a}$ (wherein $R^{101a}$ is an alkyl group).

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula, $R^{2a}$ and $R^{3a}$ are each independently a single bond or a divalent linking group.

Preferably, $R^{2a}$ and $R^{3a}$ are each independently a single bond, or a linear or branched alkylene group containing 1 or more carbon atoms, or a cyclic alkylene group containing 3 or more carbon atoms.

The alkylene group constituting $R^{2a}$ and $R^{3a}$ is preferably free from a carbonyl group.

In the alkylene group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C (=O) -$R^{102a}$ (wherein $R^{102a}$ is an alkyl group).

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms of $R^{1a}$, $R^{2a}$, and $R^{3a}$ is 6 or more. The total number of carbon atoms is preferably 8 or more, more preferably 9 or more, still more preferably 10 or more, and preferably 20 or less, more preferably 18 or less, still more preferably 15 or less.

Any two of $R^{1a}$, $R^{2a}$, and $R^{3a}$ optionally bind to each other to form a ring.

In the formula (a), $X^a$ is H, a metal atom, $NR^{4a}_4$, imidazolium optionally containing a substituent, pyridinium optionally containing a substituent, or phosphonium optionally containing a substituent, wherein $R^{4a}$ is H or an organic group (preferably, a fluorine-free organic group). The four $R^{4a}$s may be the same as or different from each other. The organic group in $R^{4a}$ is preferably an alkyl group. $R^{4a}$ is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li.

$X^a$ is preferably H, an alkali metal (Group 1), an alkaline earth metal (Group 2), or $NR^{4a}_4$, more preferably H, Na, K, Li, or $NH_4$ because they are easily dissolved in water, still more preferably Na, K, or $NH_4$ because they are more easily dissolved in water, particularly preferably Na or $NH_4$, most preferably $NH_4$ because it can be easily removed. When $X^a$ is $NH_4$, the solubility of the surfactant in an aqueous medium is excellent, and the metal component is unlikely to remain in the PTFE or the final product.

$R^{1a}$ is preferably a linear or branched alkyl group containing 1 to 8 carbon atoms and free from a carbonyl group, a cyclic alkyl group containing 3 to 8 carbon atoms and free from a carbonyl group, a linear or branched alkyl group containing 2 to 45 carbon atoms and containing 1 to 10 carbonyl groups, a cyclic alkyl group containing 3 to 45 carbon atoms and containing a carbonyl group, or an alkyl group containing 3 to 45 carbon atoms and containing a monovalent or divalent heterocycle.

$R^{1a}$ is more preferably a group represented by the following formula:

[Chem. 9]

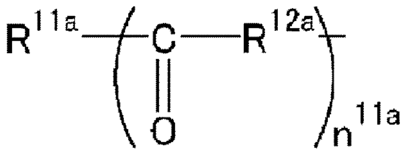

wherein $n^{11a}$ is an integer of 0 to 10; $R^{11a}$ is a linear or branched alkyl group containing 1 to 5 carbon atoms or a cyclic alkyl group containing 3 to 5 carbon atoms; $R^{12a}$ is an alkylene group containing 0 to 3 carbon atoms; and when $n^{11a}$ is an integer of 2 to 10, $R^{12a}$s may be the same as or different from each other.

$n^{11a}$ is preferably an integer of 0 to 5, more preferably an integer of 0 to 3, still more preferably an integer of 1 to 3.

The alkyl group for $R^{11a}$ is preferably free from a carbonyl group.

In the alkyl group for $R^{11a}$, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: $-O-C(=O)-R^{103a}$ (wherein $R^{103a}$ is an alkyl group).

In the alkyl group for $R^{11a}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^{12a}$ is an alkylene group containing 0 to 3 carbon atoms. The alkylene group preferably contains 1 to 3 carbon atoms.

The alkylene group for $R^{12a}$ may be either linear or branched.

The alkylene group for $R^{12a}$ is preferably free from a carbonyl group. $R^{12a}$ is more preferably an ethylene group ($-C_2H_4-$) or a propylene group ($-C_3H_6-$).

In the alkylene group for $R^{12a}$, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: $-O-C(=O)-R^{104a}$ (wherein $R^{104a}$ is an alkyl group).

In the alkylene group for $R^{12a}$, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

$R^{2a}$ and $R^{3a}$ are preferably each independently an alkylene group containing 1 or more carbon atoms and free from a carbonyl group, more preferably an alkylene group containing 1 to 3 carbon atoms and free from a carbonyl group, still more preferably an ethylene group ($-C_2H_4-$) or a propylene group ($-C_3H_6-$).

Examples of the surfactant (a) include the following surfactants. In each formula, $X^a$ is as defined above.

[Chem. 10]

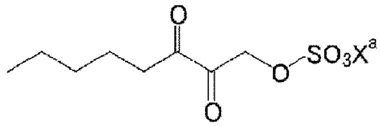
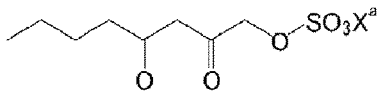
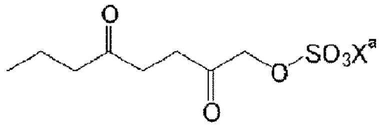
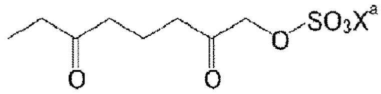
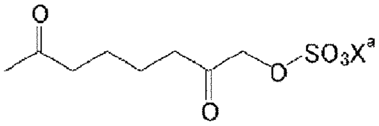
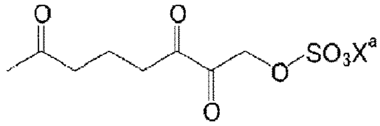
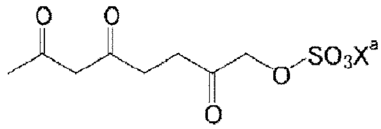
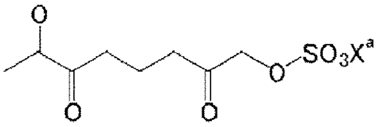
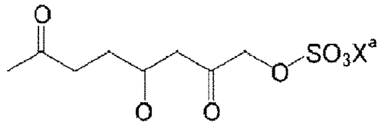

[Chem. 11]

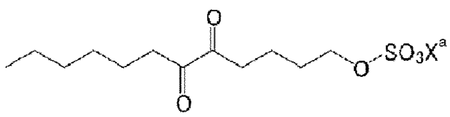
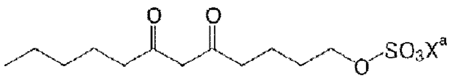
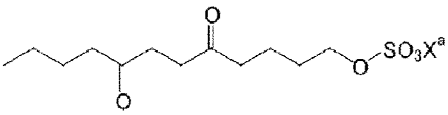
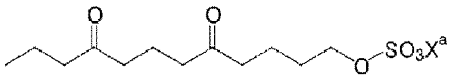
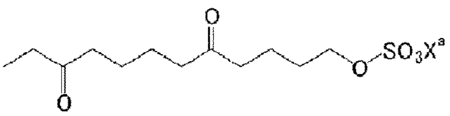
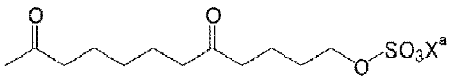
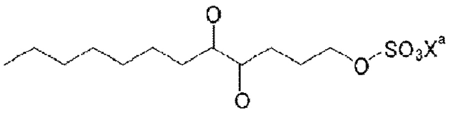
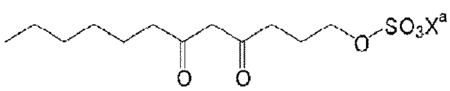
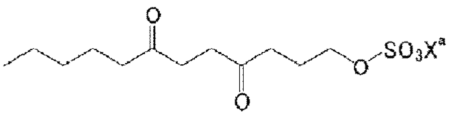
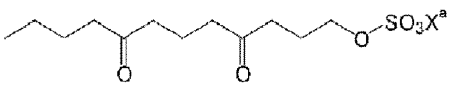
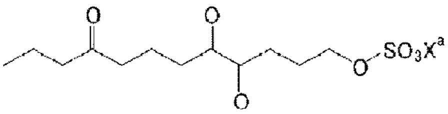
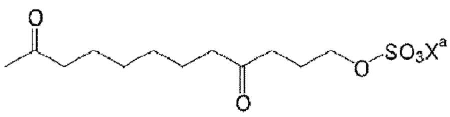

[Chem. 12]

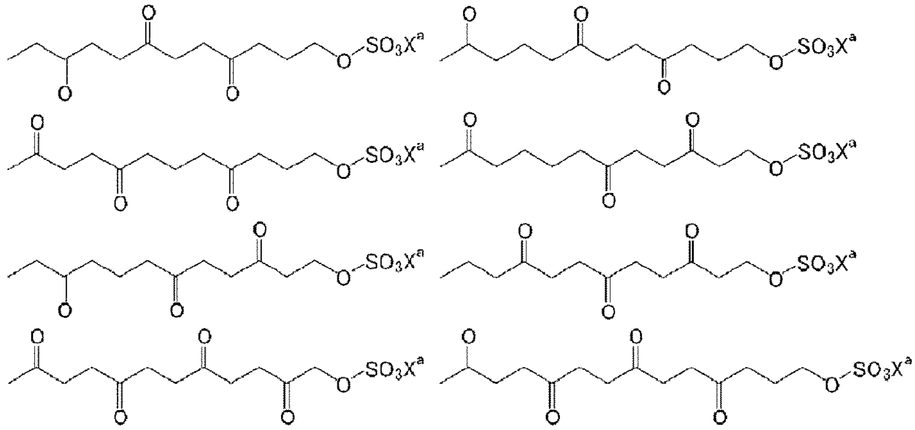

[Chem. 13]

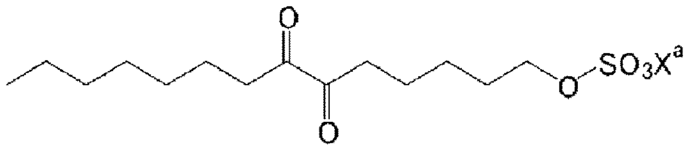

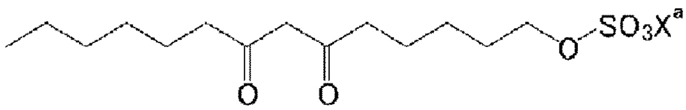

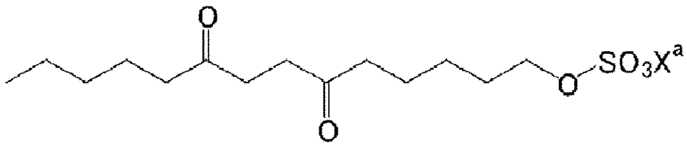

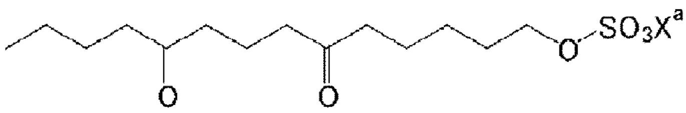

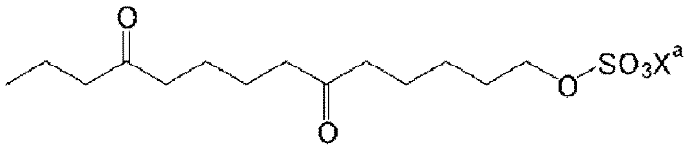

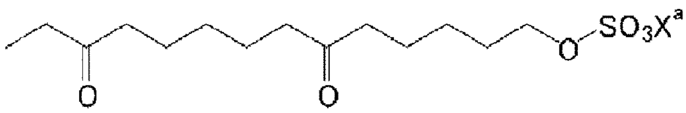

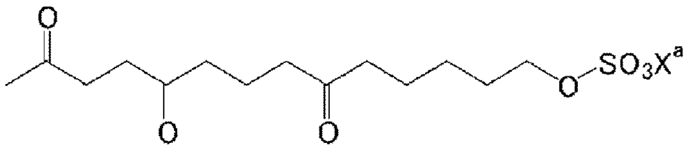

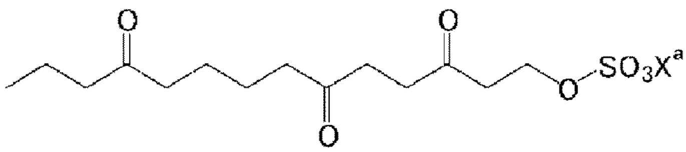

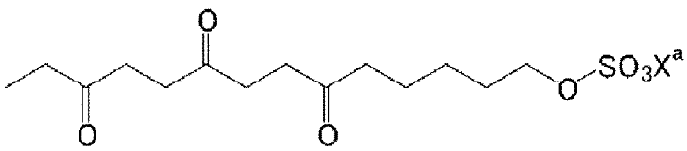

[Chem. 14]

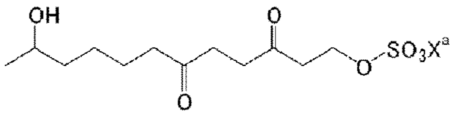
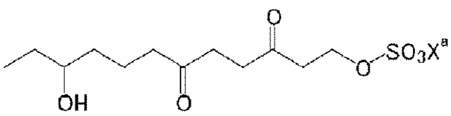
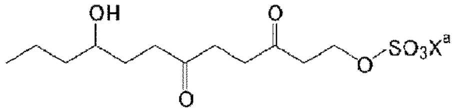
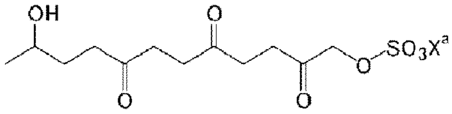
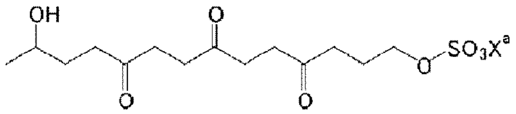

[Chem. 15]

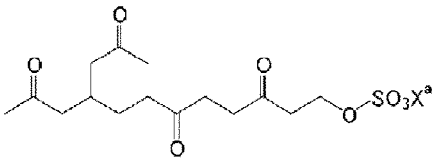
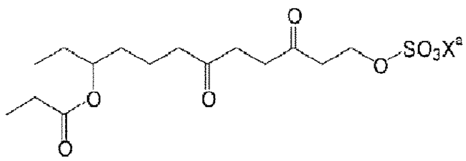
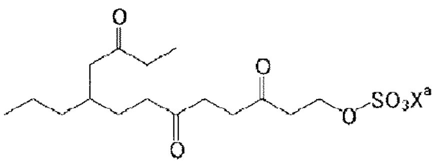
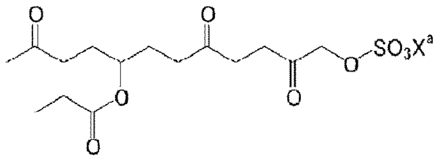
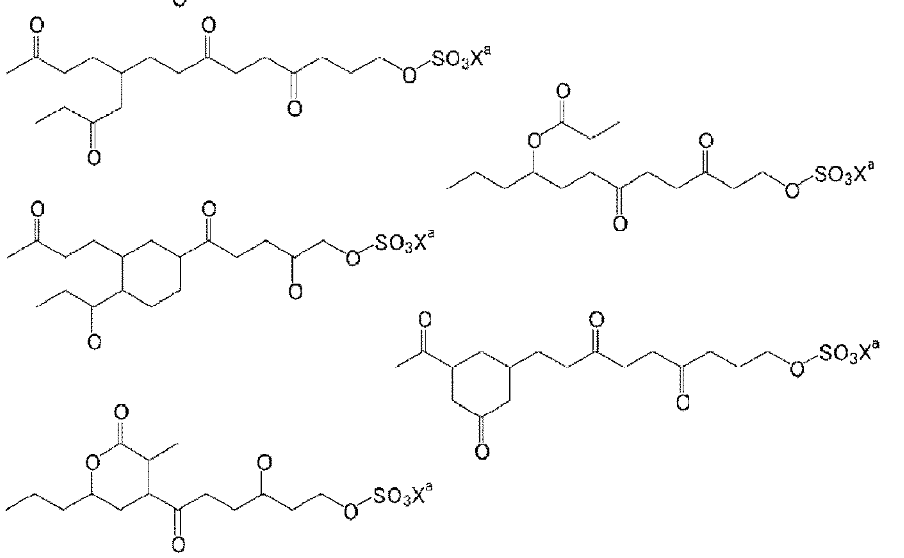

[Chem. 16]

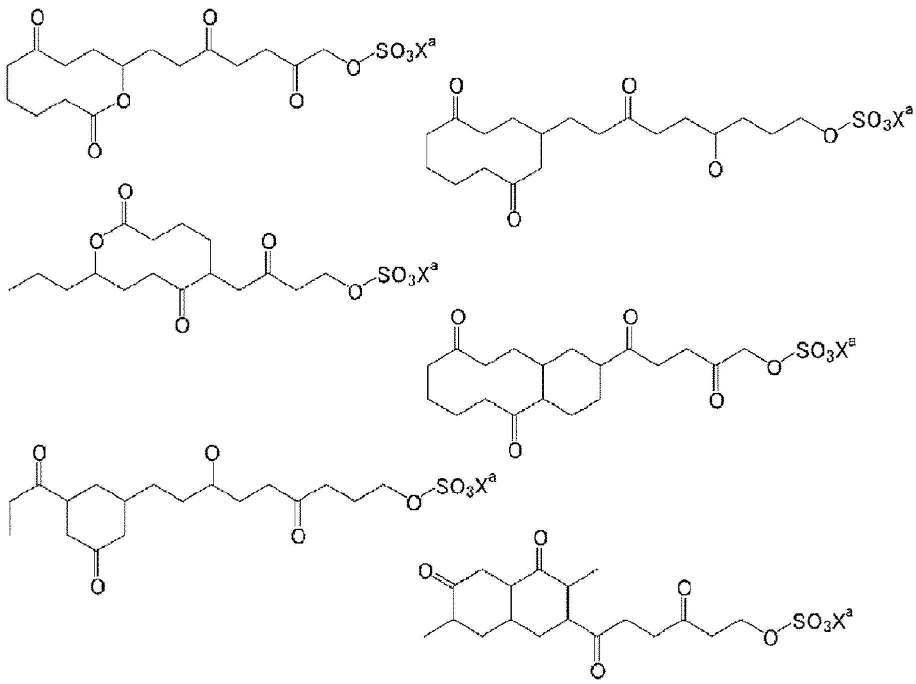

[Chem. 17]

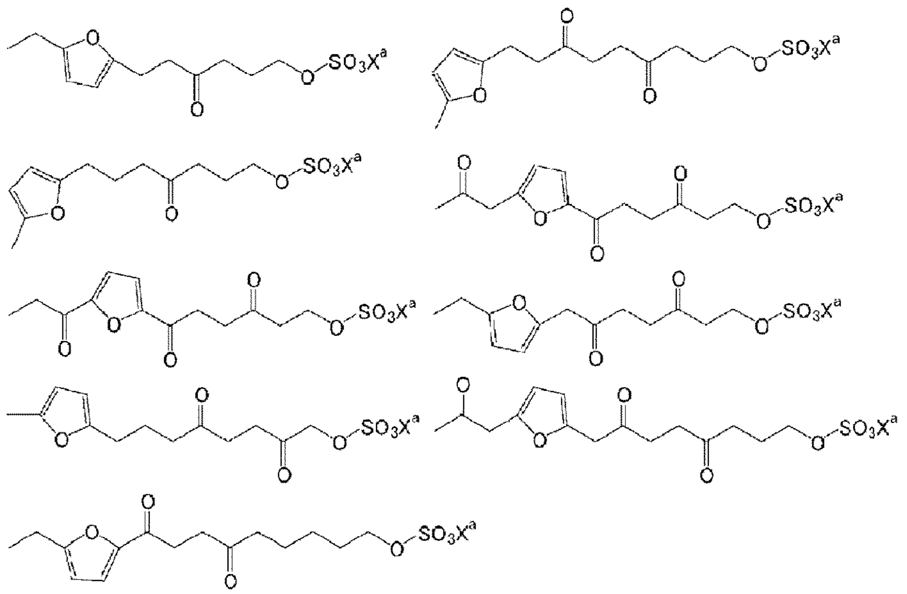

The surfactant (a) can be produced by the production method disclosed in WO 2020/022355.

Next, the surfactant (b) is described below.

In the formula (b), $R^{1b}$ is a linear or branched alkyl group containing 1 or more carbon atoms and optionally containing a substituent or a cyclic alkyl group containing 3 or more carbon atoms and optionally containing a substituent.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1b}$, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the heterocycles.

The substituent which may be contained in the alkyl group for $R^{1b}$ is preferably a halogen atom, a linear or

branched alkyl group containing 1 to 10 carbon atoms, or a cyclic alkyl group containing 3 to 10 carbon atoms, or a hydroxy group, particularly preferably a methyl group or an ethyl group.

The alkyl group for $R^{1b}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

$R^{1b}$ is preferably a linear or branched alkyl group containing 1 to 10 carbon atoms and optionally containing a substituent or a cyclic alkyl group containing 3 to 10 carbon atoms and optionally containing a substituent, more preferably a linear or branched alkyl group containing 1 to 10 carbon atoms and free from a carbonyl group or a cyclic alkyl group containing 3 to 10 carbon atoms and free from a carbonyl group, still more preferably a linear or branched alkyl group containing 1 to 10 carbon atoms and not containing a substituent, further more preferably a linear or branched alkyl group containing 1 to 3 carbon atoms and not containing a substituent, particularly preferably a methyl group ($-CH_3$) or an ethyl group ($-C_2H_5$), most preferably a methyl group ($-CH_3$).

In the formula (b), $R^{2b}$ and $R^{4b}$ are each independently H or a substituent. A plurality of $R^{2b}$s and $R^{4b}$s may be the same as or different from each other.

The substituent for each of $R^{2b}$ and $R^{4b}$ is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for each of $R^{2b}$ and $R^{4b}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

The alkyl group for each of $R^{2b}$ and $R^{4b}$ is preferably a linear or branched alkyl group containing 1 to 10 carbon atoms and free from a carbonyl group or a cyclic alkyl group containing 3 to 10 carbon atoms and free from a carbonyl group, more preferably a linear or branched alkyl group containing 1 to 10 carbon atoms and free from a carbonyl group, still more preferably a linear or branched alkyl group containing 1 to 3 carbon atoms and not containing a substituent, particularly preferably a methyl group ($-CH_3$) or an ethyl group ($-C_2H_5$).

$R^{2b}$ and $R^{4b}$ are preferably each independently H or a linear or branched alkyl group containing 1 to 10 carbon atoms and free from a carbonyl group, more preferably H or a linear or branched alkyl group containing 1 to 3 carbon atoms and not containing a substituent, still more preferably H, a methyl group ($-CH_3$), or an ethyl group ($-C_2H_5$), particularly preferably H.

In the formula (b), $R^{3b}$ is an alkylene group containing 1 to 10 carbon atoms and optionally containing a substituent. When a plurality of $R^{3b}$s are present, they may be the same as or different from each other.

The alkylene group is preferably free from a carbonyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkyl group free from halogen atoms such as fluorine atoms and chlorine atoms.

The alkylene group preferably contains no substituent.

The alkylene group is preferably a linear or branched alkylene group containing 1 to 10 carbon atoms and optionally containing a substituent or a cyclic alkylene group containing 3 to 10 carbon atoms and optionally containing a substituent, preferably a linear or branched alkylene group containing 1 to 10 carbon atoms and free from a carbonyl group or a cyclic alkylene group containing 3 to 10 carbon atoms and free from a carbonyl group, more preferably a linear or branched alkylene group containing 1 to 10 carbon atoms and not containing a substituent, still more preferably a methylene group ($-CH_2-$), an ethylene group ($-C_2H_4-$), an isopropylene group ($-CH(CH_3)CH_2-$), or a propylene group ($-C_3H_6-$).

Any two of $R^{1b}$, $R^{2b}$, $R^{3b}$, and $R^{4b}$ optionally bind to each other to form a ring, but preferably not to form a ring.

In the formula (b), n is an integer of 1 or more. In the formula, n is preferably an integer of 1 to 40, more preferably an integer of 1 to 30, still more preferably an integer of 5 to 25, particularly preferably an integer of 5 to 9 and 11 to 25.

In the formula (b), p and q are each independently an integer of 0 or more. p is preferably an integer of 0 to 10, more preferably 0 or 1. q is preferably an integer of 0 to 10, more preferably an integer of 0 to 5.

The sum of n, p, and q is preferably an integer of 5 or more. The sum of n, p, and q is more preferably an integer of 8 or more. The sum of n, p, and q is also preferably an integer of 60 or less, more preferably an integer of 50 or less, still more preferably an integer of 40 or less.

In the formula (b), $X^b$ is H, a metal atom, $NR^{5b}{}_4$, imidazolium optionally containing a substituent, pyridinium optionally containing a substituent, or phosphonium optionally containing a substituent, wherein $R^{5b}$ is H or an organic group (preferably, a fluorine-free organic group). The four $R^{5b}$s may be the same as or different from each other. The organic group in $R^{5b}$ is preferably an alkyl group. $R^{5b}$ is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li. $X^b$ may be a metal atom or $NR^{5b}{}_4$ (wherein $R^{5b}$ is as defined above).

$X^b$ is preferably H, an alkali metal (Group 1), an alkaline earth metal (Group 2), or $NR^{5b}{}_4$, more preferably H, Na, K, Li, or $NH_4$ because they are easily dissolved in water, still more preferably Na, K, or $NH_4$ because they are more easily dissolved in water, particularly preferably Na or $NH_4$, most preferably $NH_4$ because it can be easily removed. When $X^b$ is $NH_4$, the solubility of the surfactant in an aqueous medium is excellent, and the metal component is unlikely to remain in the PTFE or the final product.

In the formula (b), L is a single bond, $-CO_2-B-*$, $- OCO-B-*$, $-CONR^{6b}-B-*$, $-NR^{6b}CO-B-*$, or -CO- other than the carbonyl groups in $-CO_2-B-$, -OCO-B-, $-CONR^{6b}-B-$, and $-NR^6COB-$, wherein B is a single bond or an alkylene group containing 1 to 10 carbon atoms and optionally containing a substituent, $R^{6b}$ is H or an alkyl group containing 1 to 4 carbon atoms and optionally containing a substituent. The alkylene group more preferably contains 1 to 5 carbon atoms. $R^{6b}$ is more preferably H or a methyl group; and * indicates the side bonded to $-OSO_3X^b$ in the formula.

L is preferably a single bond.

The surfactant (b) is preferably a compound represented by the following formula:

[Chem. 18]

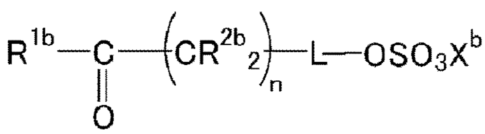

wherein $R^{1b}$, $R^{2b}$, L, n, and $X^b$ are as defined above.

The surfactant (b) preferably has a $^1H$-NMR spectrum in which all peak intensities observed in a chemical shift range of 2.0 to 5.0 ppm give an integral value of 10% or higher.

The surfactant (b) preferably has a $^1H$-NMR spectrum in which all peak intensities observed in a chemical shift range of 2.0 to 5.0 ppm give an integral value within the above range. In this case, the surfactant preferably has a ketone structure in the molecule.

The integral value of the surfactant (b) is more preferably 15 or more, and preferably 95 or less. The integral value is more preferably 80 or less, still more preferably 70 or less.

The integral value is determined using a heavy water solvent at room temperature. The heavy water content is adjusted to 4.79 ppm.

Examples of the surfactant (b) include

$CH_3C(O)CH_2CH_2CH_2CH_2CH_2CH_2CH_2CH_2CH_2OSO_3Na$,
$CH_3C(O)CH_2CH_2CH_2CH_2CH_2CH_2CH_2CH_2OSO_3Na$,
$CH_3C(O)CH_2CH_2CH_2CH_2CH_2CH_2CH_2OSO_3Na$,
$CH_3C(O)CH_2CH_2CH_2CH_2CH_2CH_2OSO_3Na$,
$CH_3C(O)CH_2CH_2CH_2CH_2CH_2OSO_3Na$,
$CH_3C(O)CH_2CH_2CH_2CH_2OSO_3Na$,
$(CH_3)_3CC(O)CH_2CH_2CH_2CH_2CH_2CH_2CH_2CH_2CH_2OSO_3Na$,
$(CH_3)_2CHC(O)\ CH_2CH_2CH_2CH_2CH_2CH_2CH_2CH_2CH_2OSO_3Na$,
$(CH_2)_5CHC(O)CH_2CH_2CH_2CH_2CH_2CH_2CH_2CH_2CH_2OSO_3Na$,
$CH_3CH_2C(O)CH_2CH_2CH_2CH_2CH_2CH_2CH_2CH_2OSO_3Na$,
$CH_3CH_2CH_2C(O)CH_2CH_2CH_2CH_2CH_2CH_2CH_2OSO_3Na$,
$CH_3CH_2CH_2CH_2C(O)\ CH_2CH_2CH_2CH_2CH_2CH_2OSO_3Na$,
$CH_3CH_2CH_2CH_2CH_2C(O)CH_2CH_2CH_2CH_2CH_2OSO_3Na$,
$CH_3CH_2CH_2CH_2CH_2CH_2C(O)CH_2CH_2CH_2CH_2OSO_3Na$,
$CH_3CH_2CH_2CH_2CH_2CH_2CH_2C(O)CH_2CH_2CH_2OSO_3Na$,
$CH_3CH_2CH_2CH_2CH_2CH_2CH_2CH_2C(O)CH_2CH_2OSO_3Na$,
$CH_3CH_2CH_2CH_2CH^2CH_2CH_2CH_2CH_2C(O)CH_2OSO_3Na$,
$CH_3C(O)CH_2CH_2CH_2CH_2CH_2CH_2CH_2CH_2CH_2OCH_2CH_2OSO_3Na$,
$CH_3C(O)CH_2CH_2CH_2CH_2CH_2CH_2CH_2CH_2CH_2C(O)NHCH_2OSO_3Na$,

$CH_3C(O)CH_2CH_2CH_2CH_2CH_2CH_2CH_2CH_2CH_2NHC(O)CH_2OSO_3Na$,
$CH_3C(O)CH_2CH_2CH_2CH_2CH_2CH_2CH_2CH_2CH_2C(O)OSO_3Na$,
$CH_3C(O)CH_2CH_2CH_2CH_2CH_2CH_2CH_2CH_2CH_2C(O)OCH_2OSO_3Na$,
$CH_3C(O)CH_2CH_2CH_2CH_2CH_2CH_2CH_2CH_2CH_2OC(O)CH_2OSO_3Na$,
$CH_3C(O)CH_2CH_2CH_2CH_2CH_2CH_2CH_2CH_2CH_2OSO_3H$,
$CH_3C(O)CH_2CH_2CH_2CH_2CH_2CH_2CH_2CH_2CH_2OSO_3Li$,
$CH_3C(O)CH_2CH_2CH_2CH_2CH_2CH_2CH_2CH_2CH_2OSO_3K$,
$CH_3C(O)CH_2CH_2CH_2CH_2CH_2CH_2CH_2CH_2CH_2OSO_3NH_4$,
$CH_3C(O)CH_2CH_2CH_2CH_2CH_2CH_2CH_2CH_2CH(CH_3)_2OSO_3Na$,
$CH_3C(O)CH_2CH_2CH_2CH_2CH_2CH_2CH_2CH_2CH_2CH_2CH_2CH_2CH_2CH_2CH_2CH_2CH_2O SO_3Na$,
$CH_3C(O)CH_2CH_2CH_2CH_2CH_2CH_2CH_2CH_2CH_2CH_2CH_2CH_2CH_2CH_2CH_2CH_2OSO_3 Na$,
$CH_3C(O)CH_2CH_2CH_2CH_2CH_2CH_2CH_2CH_2CH_2CH_2CH_2CH_2CH_2CH_2CH_2OSO_3Na$,
$CH_3C(O)CH_2CH_2CH_2CH_2CH_2CH_2CH_2CH_2CH_2CH_2CH_2CH_2CH_2CH_2OSO_3Na$,
$CH_3C(O)CH_2CH_2CH_2CH_2CH_2CH_2CH_2CH_2CH_2CH_2CH_2CH_2CH_2OSO_3Na$,
$CH_3C(O)CH_2CH_2CH_2CH_2CH_2CH_2CH_2CH_2CH_2CH_2CH_2CH_2OSO_3Na$,
$CH_3C(O)CH_2CH_2CH_2CH_2CH_2CH_2CH_2CH_2CH_2CH_2CH_2OSO_3Na$,
$CH_3C(O)CH_2CH_2CH_2CH_2CH_2CH_2CH_2CH_2CH_2CH_2OSO_3Na$,
$(CH_3)_3CC(O)CH_2CH_2CH_2CH_2CH_2CH_2CH_2CH_2CH_2CH_2CH_2CH_2CH_2CH_2CH_2CH_2 CH_2OSO_3Na$,
$(CH_3)_2CHC(O)CH_2CH_2CH_2CH_2CH_2CH_2CH_2CH_2CH_2CH_2CH_2CH_2CH_2CH_2CH_2C H_2CH_2OSO_3Na$,
$(CH_2)_5CHC(O)CH_2CH_2CH_2CH_2CH_2CH_2CH_2CH_2CH_2CH_2CH_2CH_2CH_2CH_2CH_2C H_2CH_2OSO_3Na$,
$CH_3CH_2C(O)CH_2CH_2CH_2CH_2CH_2CH_2CH_2CH_2CH_2CH_2CH_2CH_2CH_2CH_2CH_2CH_2O SO_3Na$,
$CH_3CH_2CH_2CH_2CH_2C(O)CH_2CH_2CH_2CH_2CH_2CH_2CH_2CH_2CH_2CH_2CH_2CH_2CH_2O SO_3Na$,
$CH_3CH_2CH_2CH_2CH_2CH_2CH_2CH_2C(O)CH_2CH_2CH_2CH_2CH_2CH_2CH_2CH_2CH_2CH_2O SO_3Na$,
$CH_3CH_2CH_2CH_2CH_2CH_2CH_2CH_2CH_2CH_2C(O)CH_2CH_2CH_2CH_2CH_2CH_2CH_2CH_2O SO_3Na$,
$CH_3CH_2CH_2CH_2CH_2CH_2CH_2CH_2CH_2CH_2CH_2CH_2CH_2CH_2C(O)CH_2CH_2CH_2CH_2O SO_3Na$,
$CH_3CH_2C(O)CH_2CH_2CH_2CH_2CH_2CH_2CH_2CH_2CH_2CH_2CH_2CH_2CH_2CH_2CH_2CH_2O CH_2CH_2OSO_3Na$,
$CH_3CH_2C(O)CH_2CH_2CH_2CH_2CH_2CH_2CH_2CH_2CH_2CH_2CH_2CH_2CH_2CH_2CH_2CH_2C (O)NHCH_2CH_2OSO_3Na$,
$CH_3CH_2C(O)CH_2CH_2CH_2CH_2CH_2CH_2CH_2CH_2CH_2CH_2CH_2CH_2CH_2CH_2CH_2CH_2N HC(O)CH_2CH_2OSO_3Na$,
$CH_3CH_2C(O)CH_2CH_2CH_2CH_2CH_2CH_2CH_2CH_2CH_2CH_2CH_2CH_2CH_2CH_2CH_2CH_2C (O)OCH_2CH_2OSO_3Na$,
$CH_3CH_2C(O)CH_2CH_2CH_2CH_2CH_2CH_2CH_2CH_2CH_2CH_2CH_2CH_2CH_2CH_2CH_2CH_2O C(O)CH_2CH_2OSO_3Na$,
$CH_3CH_2C(O)CH_2CH_2CH_2CH_2CH_2CH_2CH_2CH_2CH_2CH_2CH_2CH_2CH_2CH_2CH_2CH_2C (O)OSO_3Na$,
$CH_3CH_2C(O)CH_2CH_2CH_2CH_2CH_2CH_2CH_2CH_2CH_2CH_2CH_2CH_2CH_2CH_2CH_2CH_2O SO_3H$,
$CH_3CH_2C(O)CH_2CH_2CH_2CH_2CH_2CH_2CH_2CH_2CH_2CH_2CH_2CH_2CH_2CH_2CH_2CH_2O SO_3Li$,
$CH_3CH_2C(O)CH_2CH_2CH_2CH_2CH_2CH_2CH_2CH_2CH_2CH_2CH_2CH_2CH_2CH_2CH_2CH_2O SO_3K$,
$CH_3CH_2C(O)CH_2CH_2CH_2CH_2CH_2CH_2CH_2CH_2CH_2CH_2CH_2CH_2CH_2CH_2CH_2CH_2O SO_3NH_4$, and
$CH_3C(O)CH_2CH_2CH_2CH_2CH_2CH_2CH_2CH_2CH_2CH_2CH_2CH_2CH_2CH_2CH_2CH_2CH_2C H_2CH_2CH_2CH_2OSO_3Na$.

The surfactant (b) can be produced by the production method disclosed in WO 2020/022355.

Next, the surfactant (c) is described below.

In the formula (c), $R^{1c}$ is a linear or branched alkyl group containing 1 or more carbon atoms or a cyclic alkyl group containing 3 or more carbon atoms.

When containing 3 or more carbon atoms, the alkyl group optionally contains a carbonyl group (-C(=O)-) between two carbon atoms. When containing 2 or more carbon atoms, the alkyl group optionally contains the carbonyl group at an end of the alkyl group. In other words, acyl groups such as an acetyl group represented by $CH_3$-C(=O)-are also included in the alkyl group.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1c}$, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the carbonyl groups and the number of carbon atoms constituting the heterocycles. For example, the number of carbon atoms in the group represented by $CH_3$-C(=O)-$CH_2$- is 3, the number of carbon atoms in the group represented by $CH_3$-C(=O)-$C_2H_4$-C(=O)-$C_2H_4$- is 7, and the number of carbon atoms in the group represented by $CH_3$-C(=O)- is 2.

In the alkyl group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula:

-O-C (=O) -$R^{101c}$ (wherein $R^{101c}$ is an alkyl group).

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula (c), $R^{2c}$ and $R^{3c}$ are each independently a single bond or a divalent linking group.

Preferably, $R^{2c}$ and $R^{3c}$ are each independently a single bond, or a linear or branched alkylene group containing 1 or more carbon atoms, or a cyclic alkylene group containing 3 or more carbon atoms.

The alkylene group constituting $R^{2c}$ and $R^{3c}$ is preferably free from a carbonyl group.

In the alkylene group, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms of $R^{1c}$, $R^{2c}$, and $R^{3c}$ is 5 or more. The total number of carbon atoms is preferably 7 or more, more preferably 9 or more, and preferably 20 or less, more preferably 18 or less, still more preferably 15 or less.

Any two of $R^{1c}$, $R^{2c}$, and $R^{3c}$ optionally bind to each other to form a ring.

In the formula (c), $A^c$ is -$COOX^c$ or -$SO_3X^c$, wherein $X^c$ is H, a metal atom, $NR^{4c}{}_4$, imidazolium optionally containing a substituent, pyridinium optionally containing a substituent, or phosphonium optionally containing a substituent, wherein $R^{4c}$s are each H or an organic group (preferably, a fluorine-free organic group) and are the same as or different from each other. The organic group in $R^{4c}$ is preferably an alkyl group. $R^{4c}$ is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li.

$X^c$is preferably H, an alkali metal (Group 1), an alkaline earth metal (Group 2), or $NR^{4c}{}_4$, more preferably H, Na, K, Li, or $NH_4$ because they are easily dissolved in water, still more preferably Na, K, or $NH_4$ because they are more easily dissolved in water, particularly preferably Na or $NH_4$, most preferably $NH_4$ because it can be easily removed. When $X^c$ is $NH_4$, the solubility of the surfactant in an aqueous medium is excellent, and the metal component is unlikely to remain in the PTFE or the final product.

$R^{1c}$ is preferably a linear or branched alkyl group containing 1 to 8 carbon atoms and free from a carbonyl group, a cyclic alkyl group containing 3 to 8 carbon atoms and free from a carbonyl group, a linear or branched alkyl group containing 2 to 45 carbon atoms and containing 1 to 10 carbonyl groups, a cyclic alkyl group containing 3 to 45 carbon atoms and containing a carbonyl group, or an alkyl group containing 3 to 45 carbon atoms and containing a monovalent or divalent heterocycle.

$R^{1c}$ is more preferably a group represented by the following formula:

[Chem. 19]

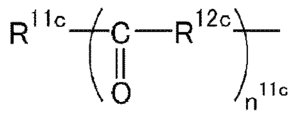

wherein $n^{11c}$ is an integer of 0 to 10; $R^{11c}$ is a linear or branched alkyl group containing 1 to 5 carbon atoms or a cyclic alkyl group containing 3 to 5 carbon atoms; $R^{12c}$ is an alkylene group containing 0 to 3 carbon atoms; and when $n^{11c}$ is an integer of 2 to 10, $R^{12c}$s may be the same as or different from each other.

$n^{11c}$ is preferably an integer of 0 to 5, more preferably an integer of 0 to 3, still more preferably an integer of 1 to 3.

The alkyl group for $R^{11c}$ is preferably free from a carbonyl group.

In the alkyl group for $R^{11c}$, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C(=O)-$R^{103c}$ (wherein $R^{103c}$ is an alkyl group).

In the alkyl group for $R^{11c}$, 75% or less of the hydrogen atoms bonded to the carbon atoms may be replaced by halogen atoms, 50% or less thereof may be replaced by halogen atoms, or 25% or less thereof may be replaced by

halogen atoms. The alkyl group is preferably a non-halogenated alkyl group free from halogen atoms such as fluorine atoms and chlorine atoms.

$R^{12c}$ is an alkylene group containing 0 to 3 carbon atoms. The alkylene group preferably contains 1 to 3 carbon atoms.

The alkylene group for $R^{12c}$ may be either linear or branched.

The alkylene group for $R^{12c}$ is preferably free from a carbonyl group. $R^{12c}$ is more preferably an ethylene group ($-C_2H_4-$) or a propylene group ($-C_3H_6-$).

In the alkylene group for $R^{12c}$, a hydrogen atom bonded to a carbon atom may be replaced by a functional group such as a hydroxy group (-OH) or a monovalent organic group (preferably, a fluorine-free organic group) containing an ester bond. Still, it is preferably not replaced by any functional group.

An example of the monovalent organic group containing an ester bond is a group represented by the formula: -O-C (=O) -$R^{104c}$ (wherein $R^{104c}$ is an alkyl group).

In the alkylene group for $R^{12c}$, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

$R^{2c}$ and $R^{3c}$ are preferably each independently an alkylene group containing 1 or more carbon atoms and free from a carbonyl group, more preferably an alkylene group containing 1 to 3 carbon atoms and free from a carbonyl group, still more preferably an ethylene group ($-C_2H_4-$) or a propylene group ($-C_3H_6-$).

Examples of the surfactant (c) include the following surfactants. In each formula, $A^c$ is as defined above.

[Chem. 20]

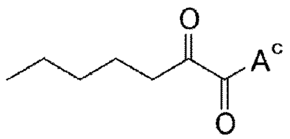
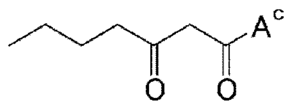

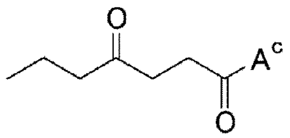
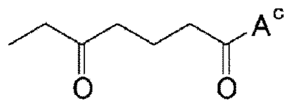

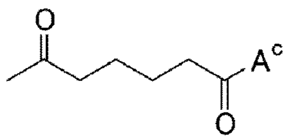
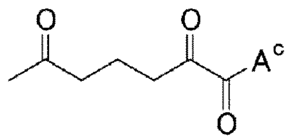

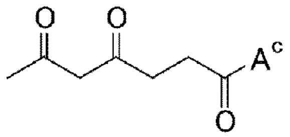

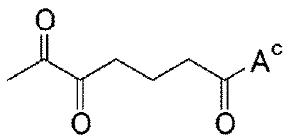
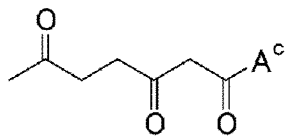

[Chem. 21]

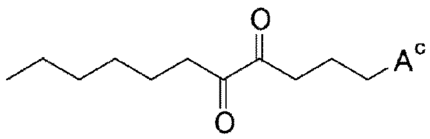
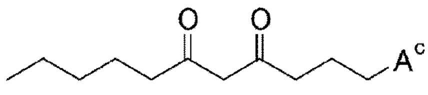
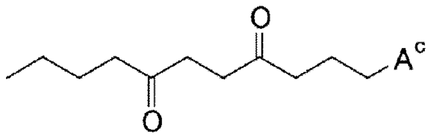
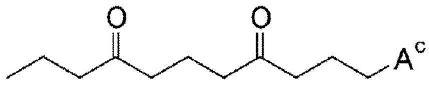
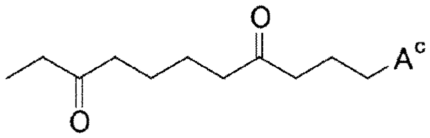
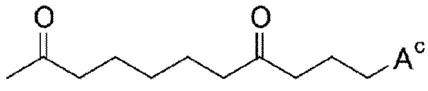
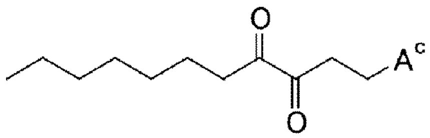
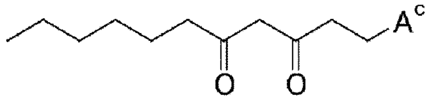
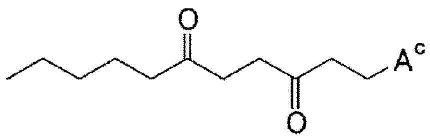
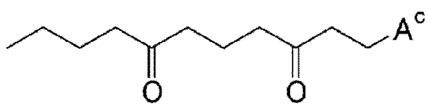
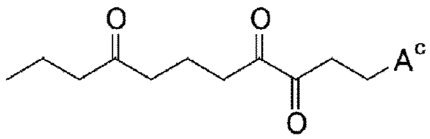
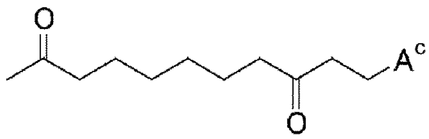

[Chem. 22]

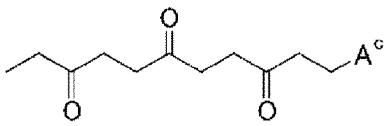
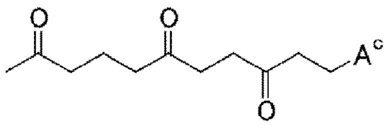
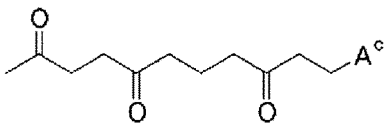
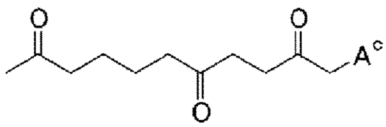
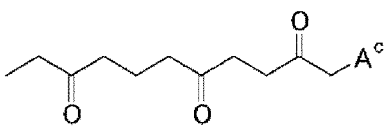
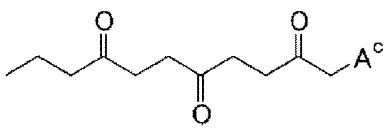
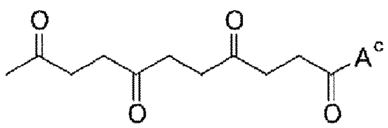
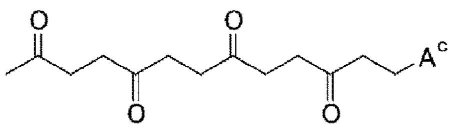

[Chem. 23]

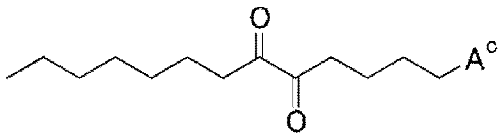

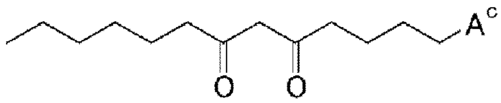

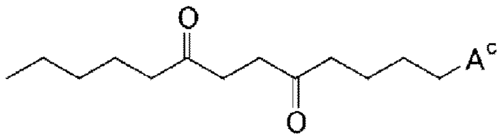

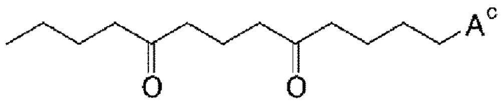

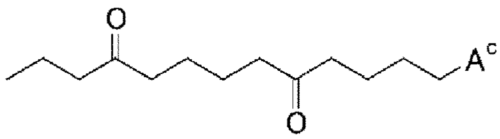

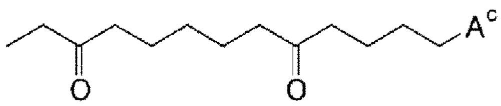

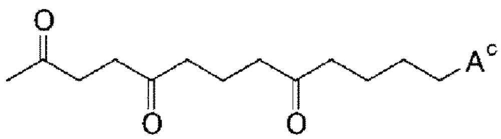

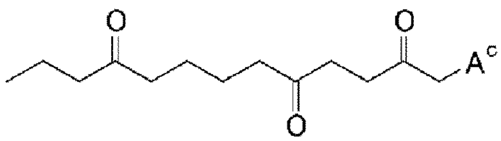

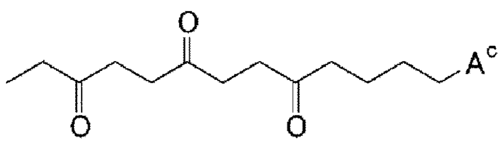

[Chem. 24]

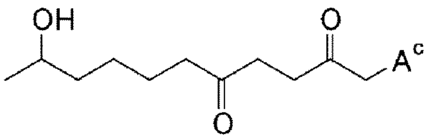
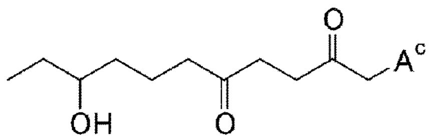
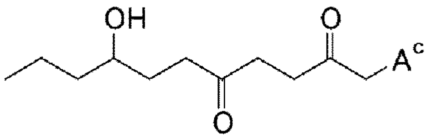
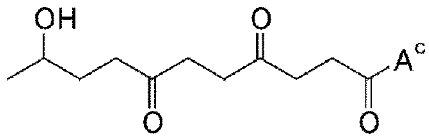
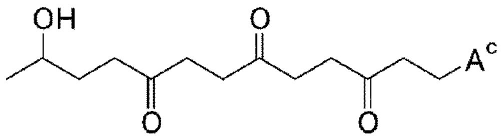

[Chem. 25]

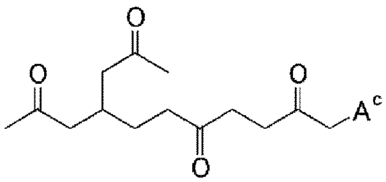
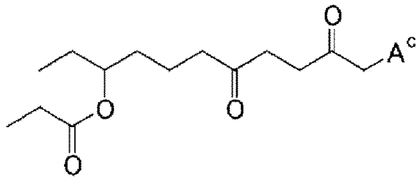
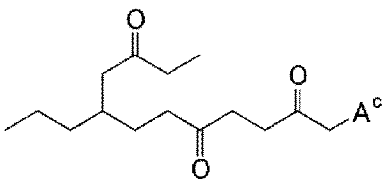
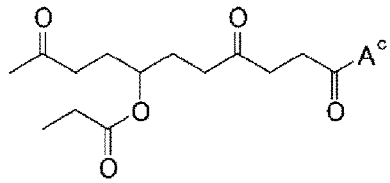
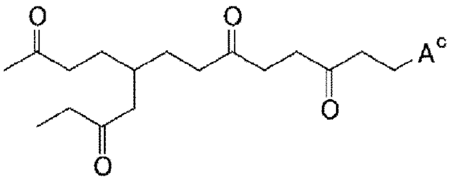
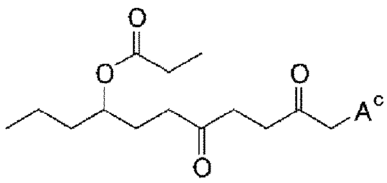
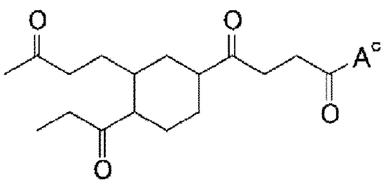
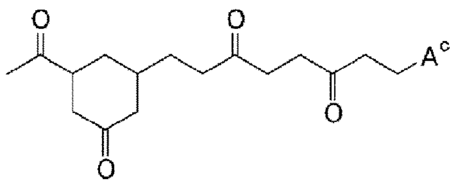
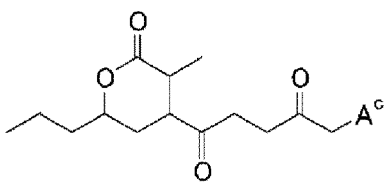

[Chem. 26]

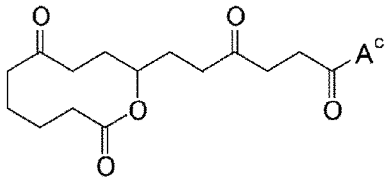
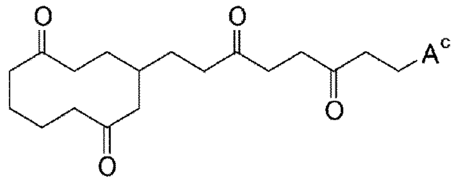

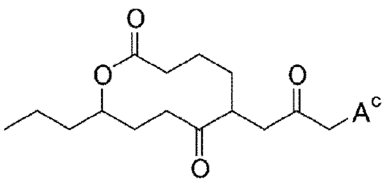
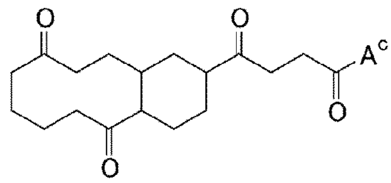

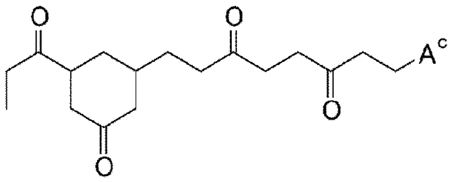
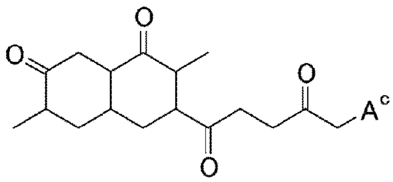

[Chem. 27]

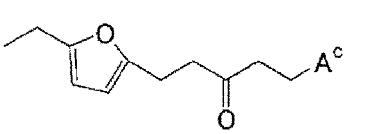
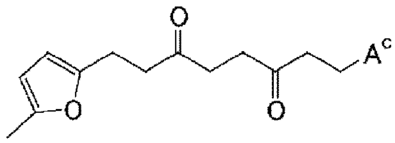

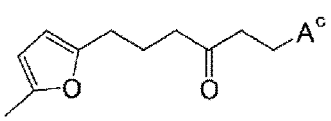
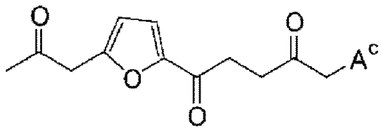

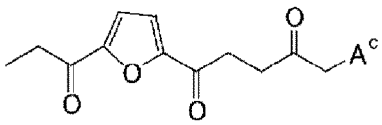
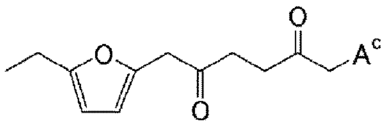

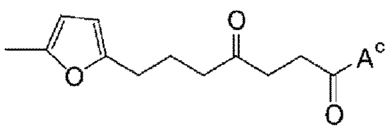
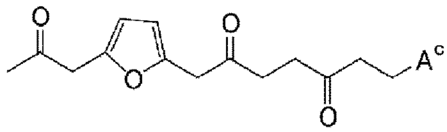

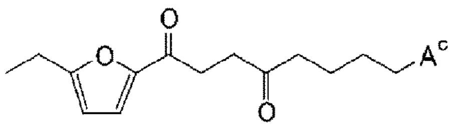

The surfactant (c) can be produced by the production method disclosed in WO 2020/022355.

Next, the surfactant (d) is described below.

In the formula (d), $R^{1d}$ is a linear or branched alkyl group containing 1 or more carbon atoms and optionally containing a substituent or a cyclic alkyl group containing 3 or more carbon atoms and optionally containing a substituent.

When containing 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In $R^{1d}$, a divalent heterocycle may be present between two carbon atoms, or a divalent heterocycle may be present at an end and bind to - C(=O)-, or a monovalent heterocycle may be present at an end of the alkyl group.

The "number of carbon atoms" in the alkyl group as used herein includes the number of carbon atoms constituting the heterocycles.

The substituent which may be contained in the alkyl group for $R^{1d}$ is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for $R^{1d}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

$R^{1d}$ is preferably a linear or branched alkyl group containing 1 to 10 carbon atoms and optionally containing a substituent or a cyclic alkyl group containing 3 to 10 carbon atoms and optionally containing a substituent, more preferably a linear or branched alkyl group containing 1 to 10 carbon atoms and free from a carbonyl group or a cyclic alkyl group containing 3 to 10 carbon atoms and free from a carbonyl group, still more preferably a linear or branched alkyl group containing 1 to 10 carbon atoms and not containing a substituent, further more preferably a linear or branched alkyl group containing 1 to 3 carbon atoms and not containing a substituent, particularly preferably a methyl group ($-CH_3$) or an ethyl group ($-C_2H_5$), most preferably a methyl group ($-CH_3$).

In the formula (d), $R^{2d}$ and $R^{4d}$ are each independently H or a substituent. A plurality of $R^{2d}$s and $R^{4d}$s may be the same as or different from each other.

The substituent for each of $R^{2d}$ and $R^{4d}$ is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for each of $R^{2d}$ and $R^{4d}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

The alkyl group for each of $R^{2d}$ and $R^{4d}$ is preferably a linear or branched alkyl group containing 1 to 10 carbon atoms and free from a carbonyl group or a cyclic alkyl group containing 3 to 10 carbon atoms and free from a carbonyl group, more preferably a linear or branched alkyl group containing 1 to 10 carbon atoms and free from a carbonyl group, still more preferably a linear or branched alkyl group containing 1 to 3 carbon atoms and not containing a substituent, particularly preferably a methyl group ($-CH_3$) or an ethyl group ($-C_2H_5$).

$R^{2d}$ and $R^{4d}$ are preferably each independently H or a linear or branched alkyl group containing 1 to 10 carbon atoms and free from a carbonyl group, more preferably H or a linear or branched alkyl group containing 1 to 3 carbon atoms and not containing a substituent, still more preferably H, a methyl group ($-CH_3$), or an ethyl group ($-C_2H_5$), particularly preferably H.

In the formula (d), $R^{3d}$ is an alkylene group containing 1 to 10 carbon atoms and optionally containing a substituent. When a plurality of $R^{3d}$s are present, they may be the same as or different from each other.

The alkylene group is preferably free from a carbonyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkyl group free from halogen atoms such as fluorine atoms and chlorine atoms.

The alkylene group preferably contains no substituent.

The alkylene group is preferably a linear or branched alkylene group containing 1 to 10 carbon atoms and optionally containing a substituent or a cyclic alkylene group containing 3 to 10 carbon atoms and optionally containing a substituent, preferably a linear or branched alkylene group containing 1 to 10 carbon atoms and free from a carbonyl group or a cyclic alkylene group containing 3 to 10 carbon atoms and free from a carbonyl group, more preferably a linear or branched alkylene group containing 1 to 10 carbon atoms and not containing a substituent, still more preferably a methylene group ($-CH_2-$), an ethylene group ($-C_2H_4-$), an isopropylene group ($-CH(CH_3)CH_2-$), or a propylene group ($-C_3H_6-$).

Any two of $R^{1d}$, $R^{2d}$, $R^{3d}$ and $R^{4d}$ optionally bind to each other to form a ring.

In the formula (d), n is an integer of 1 or more. In the formula, n is preferably an integer of 1 to 40, more preferably an integer of 1 to 30, still more preferably an integer of 5 to 25.

In the formula (d), p and q are each independently an integer of 0 or more. p is preferably an integer of 0 to 10, more preferably 0 or 1. q is preferably an integer of 0 to 10, more preferably an integer of 0 to 5.

The sum of n, p, and q is preferably an integer of 6 or more. The sum of n, p, and q is more preferably an integer of 8 or more. The sum of n, p, and q is also preferably an integer of 60 or less, more preferably an integer of 50 or less,

still more preferably an integer of 40 or less.

In the formula (d), $A^d$ is $-SO_3X^d$ or $-COOX^d$, wherein $X^d$ is H, a metal atom, $NR^{5d}_4$, imidazolium optionally containing a substituent, pyridinium optionally containing a substituent, or phosphonium optionally containing a substituent, wherein $R^{5d}$s are each H or an organic group (preferably a fluorine-free organic group) and are the same as or different from each other. The organic group in $R^{5d}$ is preferably an alkyl group. $R^{5d}$ is preferably H or an organic group containing 1 to 10 carbon atoms, more preferably H or an organic group containing 1 to 4 carbon atoms, still more preferably H or an alkyl group containing 1 to 4 carbon atoms. Examples of the metal atom include alkali metals (Group 1) and alkaline earth metals (Group 2), and preferred is Na, K, or Li. $X^d$ may be a metal atom or $NR^{5d}_4$ (wherein $R^{5d}$ is as defined above) .

$X^d$ is preferably H, an alkali metal (Group 1), an alkaline earth metal (Group 2), or $NR^{5d}_4$, more preferably H, Na, K, Li, or $NH_4$ because they are easily dissolved in water, still more preferably Na, K, or $NH_4$ because they are more easily dissolved in water, particularly preferably Na or $NH_4$, most preferably $NH_4$ because it can be easily removed. When $X^d$ is $NH_4$, the solubility of the surfactant in an aqueous medium is excellent, and the metal component is unlikely to remain in the PTFE or the final product.

In the formula (d), L is a single bond, $-CO_2$-B-*, - OCO-B-*, $-CONR^{6d}$-B-*, $-NR^{6d}CO$-B-*, or -CO- other than the carbonyl groups in $-CO_2$-B-, -OCO-B-, $-CONR^{6d}$-B-, and - $NR^{6d}CO$-B-, wherein B is a single bond or an alkylene group containing 1 to 10 carbon atoms and optionally containing a substituent, $R^{6d}$ is H or an alkyl group containing 1 to 4 carbon atoms and optionally containing a substituent. The alkylene group more preferably contains 1 to 5 carbon atoms. $R^{6d}$ is more preferably H or a methyl group; and * indicates the side bonded to $A^d$ in the formula.

L is preferably a single bond.

The surfactant preferably has a $^1$H-NMR spectrum in which all peak intensities observed in a chemical shift range of 2.0 to 5.0 ppm give an integral value of 10 or higher.

The surfactant preferably has a $^1$H-NMR spectrum in which all peak intensities observed in a chemical shift range of 2.0 to 5.0 ppm give an integral value within the above range. In this case, the surfactant preferably has a ketone structure in the molecule.

The integral value of the surfactant is more preferably 15 or more, and preferably 95 or less. The integral value is more preferably 80 or less, still more preferably 70 or less.

The integral value is determined using a heavy water solvent at room temperature. The heavy water content is adjusted to 4.79 ppm.

Examples of the surfactant (d) include

$CH_3C(O)CH_2CH_2CH_2CH_2CH_2CH_2CH_2CH_2COOK$,
$CH_3C(O)CH_2CH_2CH_2CH_2CH_2CH_2CH_2COONa$,
$CH_3C(O)CH_2CH_2CH_2CH_2CH_2CH_2COONa$,
$CH_3C(O)CH_2CH_2CH_2CH_2CH_2COONa$,
$CH_3C(O)CH_2CH_2CH_2CH_2COONa$,
$CH_3C(O)CH_2CH_2CH_2COONa$,
$CH_3C(O)CH_2CH_2CH_2CH_2CH_2CH_2CH_2CH_2CH_2CH_2CH_2CH_2CH_2COONa$,
$CH_3C(O)CH_2CH_2CH_2CH_2CH_2CH_2CH_2CH_2CH_2CH_2CH_2CH_2CH_2CH_2CH_2CH_2CH_2C\ H_2COONa$,
$(CH_3)_3CC(O)CH_2CH_2CH_2CH_2CH_2CH_2CH_2CH_2COONa$,
$(CH_3)_2CHC(O)CH_2CH_2CH_2CH_2CH_2CH_2CH_2CH_2COONa$,
$(CH_2)_5CHC(O)CH_2CH_2CH_2CH_2CH_2CH_2CH_2CH_2COONa$,
$CH_3CH_2C(O)CH_2CH_2CH_2CH_2CH_2CH_2CH_2COONa$,
$CH_3CH_2CH_2C(O)CH_2CH_2CH_2CH_2CH_2CH_2COONa$,
$CH_3CH_2CH_2CH_2C(O)CH_2CH_2CH_2CH_2CH_2COONa$,
$CH_3CH_2CH_2CH_2CH_2C(O)CH_2CH_2CH_2CH_2COONa$,
$CH_3CH_2CH_2CH_2CH_2CH_2C(O)CH_2CH_2CH_2COONa$,
$CH_3CH_2CH_2CH_2CH_2CH_2CH_2C(O)CH_2CH_2COONa$,
$CH_3CH_2CH_2CH_2CH_2CH_2CH_2CH_2C(O)CH_2COONa$,
$CH_3C(O)CH_2CH_2CH_2CH_2CH_2CH_2CH_2CH_2OCH_2CH_2COONa$,
$CH_3C(O)CH_2CH_2CH_2CH_2CH_2CH_2CH_2CH_2C(O)NHCH_2COOK$,
$CH_3C(O)CH_2CH_2CH_2CH_2CH_2CH_2CH_2CH_2NHC(O)CH_2COOK$,
$CH_3C(O)CH_2CH_2CH_2CH_2CH_2CH_2CH_2CH_2C(O)OCH_2COONa$,
$CH_3C(O)CH_2CH_2CH_2CH_2CH_2CH_2CH_2CH_2OC(O)CH_2COONa$,
$CH_3C(O)CH_2CH_2CH_2CH_2CH_2CH_2CH_2CH_2C(O)COONa$,
$CH_3C(O)CH_2CH_2CH_2CH_2CH_2CH_2CH_2CH_2C(O)COOH$,
$CH_3C(O)CH_2CH_2CH_2CH_2CH_2CH_2CH_2CH_2C(O)COOLi$,
$CH_3C(O)CH_2CH_2CH_2CH_2CH_2CH_2CH_2CH_2C(O)COONH_4$,

$CH_3C(O)CH_2CH_2CH_2CH_2CH_2CH_2CH_2CH_2C(O)COONa$, $CH_3C(O)CH_2CH_2CH_2CH_2CH_2CH_2CH_2C(CH_3)_2COOK$,
$CH_3C(O)CH_2CH_2CH_2CH_2CH_2CH_2CH_2CH_2CH_2SO_3Na$,
$CH_3C(O)CH_2CH_2CH_2CH_2CH_2CH_2CH_2CH_2SO_3Na$,
$CH_3C(O)CH_2CH_2CH_2CH_2CH_2CH_2CH_2SO_3Na$,
$CH_3C(O)CH_2CH_2CH_2CH_2CH_2CH_2SO_3Na$,
$CH_3C(O)CH_2CH_2CH_2CH_2CH_2SO_3Na$,
$CH_3C(O)CH_2CH_2CH_2CH_2SO_3Na$,
$CH_3C(O)CH_2CH_2CH_2CH_2CH_2CH_2CH_2CH_2CH_2CH_2CH_2CH_2CH_2SO_3Na$,
$CH_3C(O)CH_2CH_2CH_2CH_2CH_2CH_2CH_2CH_2CH_2CH_2CH_2CH_2CH_2CH_2CH_2CH_2CH_2C\ H_2SO_3Na$,
$CH_3C(O)CH_2CH_2CH_2CH_2CH_2CH_2CH_2CH_2CH_2CH_2SO_3Na$,
$(CH_3)_3CC(O)CH_2CH_2CH_2CH_2CH_2CH_2CH_2CH_2CH_2SO_3Na$,
$(CH_3)_2CHC(O)CH_2CH_2CH_2CH_2CH_2CH_2CH_2CH_2CH_2SO_3Na$,
$(CH_2)_5CHC(O)CH_2CH_2CH_2CH_2CH_2CH_2CH_2CH_2CH_2SO_3Na$,
$CH_3C(O)CH_2CH_2CH_2CH_2CH_2CH_2CH_2CH_2SO_3Na$,
$CH_3C(O)CH_2CH_2CH_2CH_2CH_2CH_2CH_2SO_3Na$,
$CH_3C(O)CH_2CH_2CH_2CH_2CH_2CH_2SO_3Na$,
$CH_3C(O)CH_2CH_2CH_2CH_2CH_2SO_3Na$,
$CH_3C(O)CH_2CH_2CH_2CH_2SO_3Na$,
$CH_3C(O)CH_2CH_2CH_2SO_3Na$,
$CH_3C(O)CH_2CH_2SO_3Na$,
$CH_3C(O)CH_2SO_3Na$,
$CH_3C(O)CH_2CH_2CH_2CH_2CH_2CH_2CH_2CH_2CH_2OCH_2CH_2CH_2SO_3Na$,
$CH_3C(O)CH_2CH_2CH_2CH_2CH_2CH_2CH_2CH_2CH_2C(O)NHCH_2SO_3Na$,
$CH_3C(O)CH_2CH_2CH_2CH_2CH_2CH_2CH_2CH_2CH_2NHC(O)CH_2SO_3Na$,
$CH_3C(O)CH_2CH_2CH_2CH_2CH_2CH_2CH_2CH_2CH_2C(O)SO_3Na$,
$CH_3C(O)CH_2CH_2CH_2CH_2CH_2CH_2CH_2CH_2CH_2C(O)OCH_2SO_3Na$,
$CH_3C(O)CH_2CH_2CH_2CH_2CH_2CH_2CH_2CH_2CH_2OC(O)CH_2SO_3Na$,
$CH_3C(O)CH_2CH_2CH_2CH_2CH_2CH_2CH_2CH_2CH_2SO_3H$,
$CH_3C(O)CH_2CH_2CH_2CH_2CH_2CH_2CH_2CH_2CH_2SO_3K$,
$CH_3C(O)CH_2CH_2CH_2CH_2CH_2CH_2CH_2CH_2CH_2SO_3Li$,
$CH_3C(O)CH_2CH_2CH_2CH_2CH_2CH_2CH_2CH_2CH_2SO_3NH_4$, and
$CH_3C(O)CH_2CH_2CH_2CH_2CH_2CH_2CH_2CH_2C(CH_3)_2SO_3Na$.

The surfactant (d) can be produced by the production method disclosed in WO 2020/022355.

Next, the surfactant (e) is described below.

In the formula (e), $R^{1e}$ to $R^{5e}$ each represent H or a monovalent substituent, with the proviso that at least one of $R^{1e}$ or $R^{3e}$ represents a group represented by the formula: $-Y^e-R^{6e}$ and at least one of $R^{2e}$ or $R^{5e}$ represents a group represented by the formula: $-X^e-A^e$ or a group represented by the formula: $-Y^e-R^{6e}$. Any two of $R^{1e}$ to $R^{5e}$ optionally bind to each other to form a ring.

The substituent which may be contained in the alkyl group for $R^{1e}$ is preferably a halogen atom, a linear or branched alkyl group containing 1 to 10 carbon atoms, or a cyclic alkyl group containing 3 to 10 carbon atoms, or a hydroxy group, particularly preferably a methyl group or an ethyl group.

The alkyl group for $R^{1e}$ is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

$R^{1e}$ is preferably a linear or branched alkyl group containing 1 to 10 carbon atoms and optionally containing a substituent or a cyclic alkyl group containing 3 to 10 carbon atoms and optionally containing a substituent, more preferably a linear or branched alkyl group containing 1 to 10 carbon atoms and free from a carbonyl group or a cyclic alkyl group containing 3 to 10 carbon atoms and free from a carbonyl group, still more preferably a linear or branched alkyl group containing 1 to 10 carbon atoms and not containing a substituent, further more preferably a linear or branched alkyl group containing 1 to 3 carbon atoms and not containing a substituent, particularly preferably a methyl group ($-CH_3$) or an ethyl group ($-C_2H_5$), most preferably a methyl group ($-CH_3$).

The monovalent substituent is preferably a group represented by the formula: $-Y^e-R^{6e}$, a group represented by the formula: $-X^e-A^e$, -H, and an alkyl group containing 1 to 20 carbon atoms and optionally containing a substituent, $-NH_2$, $-NHR^{9e}$ (wherein $R^{9e}$ is an organic group (preferably, a fluorine-free organic group), -OH, $-COOR^{9e}$ (wherein $R^{9e}$

is an organic group (preferably, a fluorine-free organic group)) or $-OR^{9e}$ ($R^{9e}$ is an organic group (preferably, a fluorine-free organic group)). The alkyl group preferably contains 1 to 10 carbon atoms.

$R^{9e}$ is preferably an alkyl group containing 1 to 10 carbon atoms or an alkylcarbonyl group containing 1 to 10 carbon atoms, more preferably an alkyl group containing 1 to 4 carbon atoms or an alkylcarbonyl group containing 1 to 4 carbon atoms.

In the formula, $X^e$s at respective appearances are the same as or different from each other and are each a divalent linking group or a bond.

When $R^{6e}$ contains none of a carbonyl group, an ester group, an amide group, and a sulfonyl group, $X^e$ is preferably a divalent linking group containing at least one selected from the group consisting of a carbonyl group, an ester group, an amide group, and a sulfonyl group.

$X^e$ is preferably a divalent linking group containing at least one bond selected from the group consisting of -CO-, $-S(=O)_2-$, -O-, -COO-, -OCO-, $-S(=O)_2-O-$, $-O-S(=O)_2-$, $-CONR^{6e}-$, and $-NR^{8e}CO-$, a C1-C10 alkylene group, or a bond. $R^{8e}$ represents H or an organic group (preferably, a fluorine-free organic group).

The organic group in $R^{8e}$ is preferably an alkyl group. $R^{8e}$ is preferably H or an organic group containing 1 to 10 carbon atoms, more preferably H or an organic group containing 1 to 4 carbon atoms, still more preferably H or an alkyl group containing 1 to 4 carbon atoms, further more preferably H.

In the formula (e), $A^e$s at respective appearances are the same as or different from each other and are each $-COOM^e$, $-SO_3M^e$, or $-OSO_3M^e$, wherein $M^e$ is H, a metal atom, $NR^{7e}_4$, imidazolium optionally containing a substituent, pyridinium optionally containing a substituent, or phosphonium optionally containing a substituent, wherein $R^{7e}$ is H or an organic group (preferably, a fluorine-free organic group); and the four $R^{7e}$s may be the same as or different from each other. In a preferred embodiment, in the formula (e), $A^e$ is $-COOM^e$.

The organic group in $R^{7e}$ is preferably an alkyl group. $R^{7e}$ is preferably H or an organic group containing 1 to 10 carbon atoms, more preferably H or an organic group containing 1 to 4 carbon atoms, still more preferably H or an alkyl group containing 1 to 4 carbon atoms.

Examples of the metal atom include alkali metals (Group 1) and alkaline earth metals (Group 2), and preferred is Na, K, or Li.

$M^e$ is preferably H, a metal atom, or $NR^{7e}_4$, more preferably H, an alkali metal (Group 1), an alkaline earth metal (Group 2), or $NR^{7e}_4$, still more preferably H, Na, K, Li, or $NH_4$, further more preferably Na, K, or $NH_4$, particularly preferably Na or $NH_4$, most preferably $NH_4$.

In the formula (e), $Y^e$s at respective appearances are the same as or different from each other and are each a divalent linking group selected from the group consisting of $-S(=O)_2-$, -O-, -COO-, -OCO-, $-CONR^{8e}-$, and $-NR^{8e}CO-$, or a bond, wherein $R^{8e}$ is H or an organic group (preferably, a fluorine-free organic group).

$Y^e$ is preferably a bond or a divalent linking group selected from the group consisting of -O-, -COO-, -OCO-, $-CONR^{6e}-$, and $-NR^{8e}CO-$, more preferably a divalent linking group selected from the group consisting of a bond, -COO-, and -OCO-.

The organic group in $R^{8e}$ is preferably an alkyl group. $R^{8e}$ is preferably H or an organic group containing 1 to 10 carbon atoms, more preferably H or an organic group containing 1 to 4 carbon atoms, still more preferably H or an alkyl group containing 1 to 4 carbon atoms, further more preferably H.

In the formula (e), $R^{6e}$s at respective appearances are the same as or different from each other and are each an alkyl group containing 2 or more carbon atoms and optionally containing, between carbon atoms, at least one selected from the group consisting of a carbonyl group, an ester group, an amide group, and a sulfonyl group. The organic group (preferably, a fluorine-free organic group) represented by $R^{6e}$ preferably contains 2 to 20 carbon atoms, more preferably 2 to 10 carbon atoms.

The alkyl group for $R^{6e}$ can contain, between carbon atoms, one or two or more of at least one selected from the group consisting of a carbonyl group, an ester group, an amide group, and a sulfonyl group, but the alkyl group contains no such groups at ends. In the alkyl group for $R^{6e}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^{6e}$ is preferably

a group represented by the formula: $-R^{10e}-CO-R^{11e}$,
a group represented by the formula: $-R^{10e}-COO-R^{11e}$,
a group represented by the formula: $-R^{11e}$,
a group represented by the formula: $-R^{10e}-NR^{8e}CO-R^{11e}$, or
a group represented by the formula: $-R^{10e}-CONR^{8e}-R^{11e}$,
wherein $R^{8e}$ is H or an organic group (preferably, a fluorine-free organic group); $R^{10e}$ is an alkylene group; and $R^{11e}$ is an alkyl group optionally containing a substituent.

$R^{6e}$ is more preferably a group represented by the formula: $-R^{10e}$-CO-$R^{11e}$.

The organic group in $R^{8e}$ is preferably an alkyl group. $R^{8e}$ is preferably H or an organic group containing 1 to 10 carbon atoms, more preferably H or an organic group containing 1 to 4 carbon atoms, still more preferably H or an alkyl group containing 1 to 4 carbon atoms, further more preferably H.

The alkylene group for $R^{10e}$ preferably contains 1 or more, more preferably 3 or more carbon atoms, and preferably 20 or less, more preferably 12 or less, still more preferably 10 or less, particularly preferably 8 or less carbon atoms. Further, the alkylene group for $R^{10e}$ preferably contains 1 to 20, more preferably 1 to 10, still more preferably 3 to 10 carbon atoms.

The alkyl group for $R^{11e}$ may contain 1 to 20 carbon atoms, and preferably contains 1 to 15, more preferably 1 to 12, still more preferably 1 to 10, further more preferably 1 to 8, even more preferably 1 to 6, still much more preferably 1 to 3, particularly preferably 1 or 2, most preferably 1 carbon atom. The alkyl group for $R^{11e}$ preferably consists only of primary carbons, secondary carbons, and tertiary carbons, particularly preferably consists only of primary carbons and secondary carbons. In other words, $R^{11e}$ is preferably a methyl group, an ethyl group, an n-propyl group, or an isopropyl group, most preferably a methyl group.

In a preferred embodiment, in the formula (e), at least one of $R^{2e}$ or $R^{5e}$ is a group represented by the formula: $-X^e-A^e$, and $A^e$ is $-COOM^e$.

The surfactant (e) is preferably a compound represented by the following formula (e-1), a compound represented by the following formula (e-2), or a compound represented by the following formula (e-3), more preferably a compound represented by the formula (e-1) or a compound represented by the formula (e-2):

Formula (e-1):

[Chem. 28]

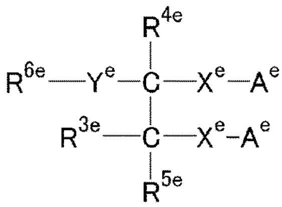

wherein $R^{3e}$ to $R^{6e}$, $X^e$, $A^e$, and $Y^e$ are as defined above;

Formula (e-2):

[Chem. 29]

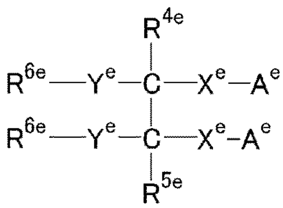

wherein $R^{4e}$ to $R^{6e}$, Xe, $A^e$, and $Y^e$ are as defined above;

Formula (e-3):

[Chem. 30]

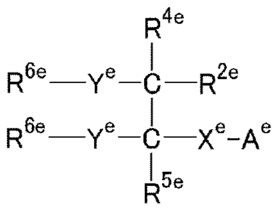

wherein $R^{2e}$, $R^{4e}$ to $R^{6e}$, $X^e$, $A^e$, and $Y^e$ are as defined above.

The group represented by the formula: $-X^e-A^e$ is preferably

$-COOM^e$,
$-R^{12e}COOM^e$,
$-SO_3M^e$,
$-OSO_3M^e$,
$-R^{12e}SO_3M^e$,
$-R^{12e}OSO_3M^e$,
$-OCO-R^{12e}-COOM^e$,
$-OCO-R^{12e}-SO_3M^e$,
$-OCO-R^{12e}-OSO_3M^e$ ,
$-COO-R^{12e}-COOMe$,
$-COO-R^{12e}-SO_3M^e$,
$-COO-R^{12e}-OSO_3M^e$ ,
$-CONR^{8e}-R^{12e}-COOM^{e,}$
$-CONR^{8e}-R^{12e}-SO_3M^e$,
$-CONR^{8e}-R^{12e}-OSO_3M^e$ ,
$-NR^{8e}CO-R^{12e}-COOM^e$,
$-NR^{8e}CO-R^{12e}-SO_3M^e$,
$-NR^{8e}CO-R^{12e}-OSO_3M^e$ ,
$-OS(=O)_2-R^{12e}-COOM^e$,
$-OS(=O)_2-R^{12e}-SO_3M^e$, or
$-OS(=O)_2-R^{12e}-OSO_3M^e$

(wherein $R^{8e}$ and $M^e$ are as defined above; and $R^{12e}$ is an alkylene group containing 1 to 10 carbon atoms).

In the alkylene group for $R^{12e}$, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The group represented by the formula: $-Y^e-R^{6e}$ is preferably

a group represented by the formula: $-R^{10e}-CO-R^{11e}$,
a group represented by the formula: $-OCO-R^{10e}-CO-R^{11e}$,
a group represented by the formula: $-COO-R^{10e}-CO-R^{11e}$,
a group represented by the formula: $-OCO-R^{10e}-COO-R^{11e}$,
a group represented by the formula: $-COO-R^{11e}$,
a group represented by the formula: $-NR^{8e}CO-R^{10e}-COR^{11e}$, or
a group represented by the formula: $-CONR^{8e}-R^{10e}-NR^{8e}CO-R^{11e}$

(wherein $R^{6e}$, $R^{10e}$, and $R^{11e}$ are as defined above) .

In the formula, $R^{4e}$ and $R^{5e}$ are each independently preferably H or an alkyl group containing 1 to 4 carbon atoms.

In the alkyl group for $R^{4e}$ and $R^{5e}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^{3e}$ in the formula (e-1) is preferably H or an alkyl group containing 1 to 20 carbon atoms and optionally containing a substituent, more preferably H or an alkyl group containing 1 to 20 carbon atoms and containing no substituent, still more preferably H.

In the alkyl group for $R^{3e}$, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

$R^{2e}$ in the formula (e-3) is preferably H, OH, or an alkyl group containing 1 to 20 carbon atoms and optionally containing a substituent, more preferably H, OH, or an alkyl group containing 1 to 20 carbon atoms and containing no substituent, still more preferably H or OH.

In the alkyl group for $R^{2e}$, 75% or less of the hydrogen atoms bonded to the carbon atoms may be replaced by halogen atoms, 50% or less thereof may be replaced by halogen atoms, or 25% or less thereof may be replaced by

halogen atoms. The alkyl group is preferably a non-halogenated alkyl group free from halogen atoms such as fluorine atoms and chlorine atoms.

The surfactant (e) can be produced by a known production method.

It is also preferable that the specific hydrocarbon surfactant is a carboxylic acid-type hydrocarbon surfactant. The carboxylic acid-type hydrocarbon surfactant may be any surfactant that contains a carboxy group (-COOH) or a group where a hydrogen atom of a carboxy group is replaced by an inorganic cation (e.g., metal atom, ammonium). Usable is, for example, a hydrocarbon surfactant containing a carboxy group or a group where a hydrogen atom of a carboxy group is replaced by an inorganic cation, from among specific hydrocarbon surfactants described above.

In the carboxylic acid-type hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The carboxylic acid-type hydrocarbon surfactant is preferably one containing a carboxy group (-COOH) or a group where a hydrogen atom of a carboxy group is replaced by an inorganic cation (e.g., metal atom, ammonium), among at least one selected from the group consisting of the surfactant (c) represented by the formula (c) and the surfactant (d) represented by the formula (d).

The specific hydrocarbon surfactant is also preferably a sulfonic acid-type hydrocarbon surfactant. The sulfonic acid-type hydrocarbon surfactant may be any surfactant that contains a $-SO_3H$ group, a $-OSO_3H$ group, or a group where a hydrogen atom of any of these groups is replaced by an inorganic cation (e.g., metal atom, ammonium). Usable is, for example, a hydrocarbon surfactant containing a $-SO_3H$ group, a $-OSO_3H$ group, or a group where a hydrogen atom of any of these groups is replaced by an inorganic cation, from among specific hydrocarbon surfactants described above.

In the sulfonic acid-type hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The PTFE composition of the disclosure can be efficiently produced by using at least one of the specific hydrocarbon surfactants. The PTFE composition of the disclosure may be produced by simultaneously using two or more of the specific hydrocarbon surfactants, or may be produced by simultaneously using a different compound with surface activity in addition to any of the specific hydrocarbon surfactants, as long as the compound is volatile or may remain in a molded article or the like of PTFE.

The different compound with surface activity used may be any of those disclosed in JP 2013-542308 T, JP 2013-542309 T, and JP 2013-542310 T, for example.

Examples of the different compound with surface activity include surfactants including a hydrophilic moiety and a hydrophobic moiety on the same molecule, such as hydrocarbon surfactants (other than the specific hydrocarbon surfactants). These may be cationic, nonionic, or anionic.

In the compound, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Cationic surfactants usually have a positively charged hydrophilic moiety such as alkylated ammonium halide (e.g., alkylated ammonium bromide) and a hydrophobic moiety such as long chain fatty acids.

In the cationic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Anionic surfactants usually have a hydrophilic moiety such as a carboxylate, a sulfonate, or a sulfate and a hydrophobic moiety that is a long chain hydrocarbon moiety such as alkyl.

In the anionic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Nonionic surfactants are usually free from charged groups, but have a hydrophobic moiety that is a long-chain hydrocarbon. The hydrophilic moiety of nonionic surfactants contains a water-soluble functional group such as an ethylene ether chain derived from polymerization with ethylene oxide.

In the nonionic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Examples of nonionic surfactants:

polyoxyethylene alkyl ether, polyoxyethylene alkyl phenyl ether, polyoxyethylene alkyl ester, sorbitan alkyl ester, polyoxyethylene sorbitan alkyl ester, glycerol ester, and derivatives thereof.

Specific examples of polyoxyethylene alkyl ethers: polyoxyethylene lauryl ether, polyoxyethylene cetyl ether, polyoxyethylene stearyl ether, polyoxyethylene oleyl ether, and polyoxyethylene behenyl ether.

Specific examples of polyoxyethylene alkyl phenyl ethers: polyoxyethylene nonylphenyl ether, and polyoxyethylene octylphenyl ether.

Specific examples of polyoxyethylene alkyl esters: polyethylene glycol monolaurate, polyethylene glycol monooleate, and polyethylene glycol monostearate.

Specific examples of sorbitan alkyl esters: polyoxyethylene sorbitan monolaurate, polyoxyethylene sorbitan monopalmitate, polyoxyethylene sorbitan monostearate, and polyoxyethylene sorbitan monooleate.

Specific examples of polyoxyethylene sorbitan alkyl esters: polyoxyethylene sorbitan monolaurate, polyoxyethylene sorbitan monopalmitate, and polyoxyethylene sorbitan monostearate.

Specific examples of glycerol esters: glycerol monomyristate, glycerol monostearate, and glycerol monooleate.

Specific examples of the derivatives: polyoxyethylene alkylamine, polyoxyethylene alkylphenyl-formaldehyde condensate, and polyoxyethylene alkyl ether phosphate.

The ethers and esters may have an HLB value of 10 to 18.

Examples of nonionic surfactants include Triton® X series (X15, X45, X100, etc.), Tergitol® 15-S series, Tergitol® TMN series (TMN-6, TMN-10, TMN-100, etc.), and Tergitol® L series, which are available from Dow Chemical Company, and Pluronic® R series (31R1, 17R2, 10R5, 25R4 (m to 22, n to 23) and Iconol® TDA series (TDA-6, TDA-9, TDA-10), which are available from BASF.

Examples of the anionic hydrocarbon surfactant include Versatic® 10 available from Resolution Performance Products and Avanel S series (S-70, S-74, etc.) available from BASF.

The different compound with surface activity may also be an anionic surfactant represented by R-L-M (wherein R is a linear or branched alkyl group containing 1 or more carbon atoms and optionally containing a substituent, or a cyclic alkyl group containing 3 or more carbon atoms and optionally containing a substituent, and optionally contains a monovalent or divalent heterocycle or optionally forms a ring when containing 3 or more carbon atoms; L is - $ArSO_3^-$, $-SO_3^-$, $-SO_4^-$, $-PO_3^-$ or $-COO^-$, and, M is, H, a metal atom, $NR^5_4$ where $R^5$s may be the same as or different from each other and are each H or an organic group (preferably a fluorine-free organic group), imidazolium optionally containing a substituent, pyridinium optionally containing a substituent, or phosphonium optionally containing a substituent; and $-ArSO_3^-$ is an aryl sulfonate. $R^5$ is preferably H or an organic group containing 1 to 10 carbon atoms, more preferably H or an organic group containing 1 to 4 carbon atoms.

Specific examples thereof include a compound represented by $CH_3-(CH_2)_n-L-M$ (wherein n is an integer of 6 to 17, and L and M are the same as described above) as typified by lauryl acid.

Mixtures of those in which R is an alkyl group containing 12 to 16 carbon atoms and L-M is sulfate or sodium dodecyl sulfate (SDS) can also be used.

The different compound with surface activity may also be an anionic surfactant represented by $R^6(-L-M)_2$ (wherein $R^6$ is a linear or branched alkylene group containing 1 or more carbon atoms and optionally containing a substituent, or a cyclic alkylene group containing 3 or more carbon atoms and optionally containing a substituent, and optionally contains a monovalent or divalent heterocycle or optionally forms a ring when containing 3 or more carbon atoms; L is $-ArSO_3^-$, $-SO_3^-$, $-SO_4^-$, $-PO_3^-$ or $-COO^-$, and M is H, a metal atom, $NR^5_4$, imidazolium optionally containing a substituent, pyridinium optionally containing a substituent, or phosphonium optionally containing a substituent, where $R^5$ is H or an organic group (preferably a fluorine-free organic group), and $-ArSO_3^-$ is an aryl sulfonate).

The different compound with surface activity may also be an anionic surfactant represented by $R^7(-L-M)_3$ (wherein $R^7$ is a linear or branched alkylidine group containing 1 or more carbon atoms and optionally containing a substituent, or a cyclic alkylidine group containing 3 or more carbon atoms and optionally containing a substituent, and optionally contains a monovalent or divalent heterocycle or optionally forms a ring when containing 3 or more carbon atoms; L is $-ArSO_3^-$, $-SO_3^-$, $-SO_4^-$, $-PO_3^-$ or $-COO^-$, and, M is H, a metal atom, $NR^5_4$, imidazolium optionally containing a substituent, pyridinium optionally containing a substituent, or phosphonium optionally containing a substituent, $R^5$ is H or an organic group (preferably a fluorine-free organic group); and $-ArSO_3^-$ is an aryl sulfonate).

Examples of the siloxane hydrocarbon surfactant include those described in Silicone Surfactants, R. M. Hill, Marcel Dekker, Inc., ISBN: 0-8247-00104. The structure of the siloxane surfactant includes defined hydrophobic and hydrophilic moieties. The hydrophobic moiety contains one or more dihydrocarbyl siloxane units, where the substituents on the silicone atoms are completely hydrocarbon.

In the sense that the carbon atoms of the hydrocarbyl groups are fully replaced by hydrogen atoms where they can be replaced by halogen such as fluorine, these siloxane surfactants can also be regarded as hydrocarbon surfactants, i.e. the monovalent substituents on the carbon atoms of the hydrocarbyl groups are hydrogen.

In the siloxane surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The hydrophilic moiety of the siloxane hydrocarbon surfactant may contain one or more polar moieties, including ionic groups such as a sulfate, a sulfonate, a phosphonate, a phosphate, a carboxylate, a carbonate, a sulfosuccinate, a taurate (in the form of a free acid, salt, or ester), a phosphine oxide, a betaine, a betaine copolyol, and a quaternary

ammonium salt. The ionic hydrophobic moiety can also contain an ionically functionalized siloxane graft.

Examples of such a siloxane hydrocarbon surfactant include polydimethylsiloxane-graft-(meth)acrylic acid salts, polydimethylsiloxane-graft-polyacrylate salts, and polydimethylsiloxane-grafted quaternary amines.

The polar moieties of the hydrophilic moiety of the siloxane surfactant may contain nonionic groups formed by polyethers, such as polyethylene oxide (PEO), and mixed polyethylene oxide/polypropylene oxide polyethers (PEO/PPO); mono- and disaccharides; and water-soluble heterocycles such as pyrrolidinone. The ratio of ethylene oxide to propylene oxide (EO/PO) may be varied in mixed polyethylene oxide/polypropylene oxide polyethers.

The hydrophilic moiety of the siloxane hydrocarbon surfactant can also contain a combination of an ionic moiety and a nonionic moiety. Such moieties include, for example, ionically end-functionalized or randomly functionalized polyether or polyol. Preferred for carrying out the disclosure is a siloxane having a nonionic moiety, i.e., a nonionic siloxane hydrocarbon surfactant.

The arrangement of the hydrophobic and hydrophilic moieties of the structure of a siloxane hydrocarbon surfactant may take the form of a diblock polymer (AB), triblock polymer (ABA), wherein the "B" represents the siloxane portion of the molecule, or a multi-block polymer. Alternatively, the siloxane surfactant may contain a graft polymer.

The siloxane hydrocarbon surfactants also include those disclosed in U.S. Pat. No. 6,841,616.

Examples of siloxane-based anionic hydrocarbon surfactants include Noveon® available from Lubrizol Advanced Materials, Inc. and SilSense™ PE-100 silicone and SilSense™ CA-1 silicone available from Consumer Specialties.

Examples of the anionic hydrocarbon surfactant also include a sulfosuccinate surfactant Lankropol® K8300 available from Akzo Nobel Surface Chemistry LLC.

Examples of the sulfosuccinate surfactant include sodium diisodecyl sulfosuccinate (Emulsogen® SB10 by Clariant) and sodium diisotridecyl sulfosuccinate (Polirol® TR/LNA by Cesapinia Chemicals).

Examples of the different compound with surface activity also include PolyFox® surfactants (e.g., PolyFox™ PF-156A or PolyFox™ PF-136A) available from Omnova Solutions, Inc.

The different compound with surface activity is preferably an anionic hydrocarbon surfactant. The anionic hydrocarbon surfactant may be one described above. For example, the following compound can be suitably used.

An example of the anionic hydrocarbon surfactant is a compound (α) represented by the following formula (α):

$$R^{100}\text{-COOM} \qquad (\alpha)$$

wherein $R^{100}$ is a monovalent organic group (preferably a fluorine-free organic group) containing 1 or more carbon atoms; and M is H, a metal atom, $NR^{101}_4$, imidazolium optionally containing a substituent, pyridinium optionally containing a substituent, or phosphonium optionally containing a substituent, wherein $R^{101}$s are each H or an organic group (preferably a fluorine-free organic group) and may be the same as or different from each other. The organic group for $R^{101}$ is preferably an alkyl group. $R^{101}$ is preferably H or an organic group containing 1 to 10 carbon atoms, more preferably H or an organic group containing 1 to 4 carbon atoms, still more preferably H or an alkyl group containing 1 to 4 carbon atoms.

From the viewpoint of surface activity, the number of carbon atoms in $R^{100}$ is preferably 2 or more, more preferably 3 or more. From the viewpoint of water-solubility, the number of carbon atoms in $R^{100}$ is preferably 29 or less, more preferably 23 or less.

Examples of the metal atom as M include alkali metals (Group 1) and alkaline earth metals (Group 2), and preferred is Na, K, or Li. M is preferably H, a metal atom, or $NR^{101}_4$, more preferably H, an alkali metal (Group 1), an alkaline earth metal (Group 2), or $NR^{101}_4$, still more preferably H, Na, K, Li, or $NH_4$, further more preferably Na, K, or $NH_4$, particularly preferably Na or $NH_4$, most preferably $NH_4$.

The compound (α) may also be an anionic surfactant represented by $R^{102}$-COOM (wherein $R^{102}$ is a linear or branched alkyl, alkenyl, alkylene, or alkenylene group containing 1 or more carbon atoms and optionally containing a substituent or a cyclic alkyl, alkenyl, alkylene, or alkenylene group containing 3 or more carbon atoms and optionally containing a substituent, which optionally contains an ether bond; when containing 3 or more carbon atoms, $R^{102}$ optionally contains a monovalent or divalent heterocycle or optionally forms a ring; and M is as defined above).

Specific examples include a compound represented by $CH_3$-$(CH_2)_n$-COOM wherein n is an integer of 2 to 28 and M is as defined above.

The compound (α) may be free from a carbonyl group (other than the carbonyl group in the carboxy group) from the viewpoint of emulsion stability. A preferred example of the carbonyl group-free hydrocarbon-containing surfactant is a compound represented by the following formula (A1):

$$R^{103}\text{-COO-M} \qquad (A1)$$

wherein $R^{103}$ is an alkyl, alkenyl, alkylene, or alkenylene group containing 6 to 17 carbon atoms, which optionally contains an ether bond; and M is H, a metal atom, $NR^{101}_4$, imidazolium optionally containing a substituent, pyridinium optionally

containing a substituent, or phosphonium optionally containing a substituent, wherein $R^{101}$s are the same as or different from each other and each are H or an organic group (preferably, a fluorine-free organic group).

In the formula (A1), $R^{103}$ is preferably an alkyl or alkenyl group (which may contain an ether group). The alkyl or alkenyl group for $R^{103}$ may be linear or branched. The number of carbon atoms in $R^{103}$ may be, but is not limited to, 2 to 29.

When the alkyl group is linear, the number of carbon atoms in $R^{103}$ is preferably 3 to 29, more preferably 5 to 23. When the alkyl group is branched, the number of carbon atoms in $R^{103}$ is preferably 5 to 35, more preferably 11 to 23.

When the alkenyl group is linear, the number of carbon atoms in $R^{103}$ is preferably 2 to 29, more preferably 9 to 23. When the alkenyl group is branched, the number of carbon atoms in $R^{103}$ is preferably 2 to 29, more preferably 9 to 23.

Examples of the alkyl and alkenyl groups include methyl, ethyl, isobutyl, t-butyl, and vinyl groups.

Examples of the compound ($\alpha$) include butyric acid, valeric acid, caproic acid, enanthic acid, caprylic acid, pelargonic acid, capric acid, lauric acid, myristic acid, pentadecylic acid, palmitic acid, palmitoleic acid, margaric acid, stearic acid, oleic acid, vaccenic acid, linoleic acid, (9,12,15)-linolenic acid, (6,9,12)-linolenic acid, eleostearic acid, arachidic acid, 8,11-eicosadienoic acid, mead acid, arachidonic acid, behenic acid, lignoceric acid, nervonic acid, cerotic acid, montanic acid, melissic acid, crotonic acid, myristoleic acid, palmitoleic acid, sapienic acid, oleic acid, elaidic acid, vaccenic acid, gadoleic acid, eicosenoic acid, erucic acid, nervonic acid, linoleic acid, eicosadienoic acid, docosadienoic acid, linolenic acid, pinolenic acid, $\alpha$-eleostearic acid, $\beta$-eleostearic acid, mead acid, dihomo-$\gamma$-linolenic acid, eicosatrienoic acid, stearidonic acid, arachidonic acid, eicosatetraenoic acid, adrenic acid, bosseopentaenoic acid, eicosapentaenoic acid, osbondic acid, sardonic acid, tetracosapentaenoic acid, docosahexaenoic acid, and herring acid, and salts thereof.

Particularly, preferred is at least one selected from the group consisting of lauric acid, capric acid, myristic acid, pentadecylic acid, palmitic acid, and salts thereof.

Non-limiting examples of the salts include those in which the hydrogen atom of the carboxy group is a metal atom, $NR^{11}{}_4$, imidazolium optionally containing a substituent, pyridinium optionally containing a substituent, or phosphonium optionally containing a substituent as M in the above-described formula.

The anionic hydrocarbon surfactant may also be a compound ($\beta$) represented by the following formula ($\beta$):

$$R^{100}\text{-}SO_3M \qquad (\beta)$$

wherein $R^{100}$ is a monovalent organic group (preferably a fluorine-free organic group) containing 1 or more carbon atoms; and M is H, a metal atom, $NR^{101}{}_4$, imidazolium optionally containing a substituent, pyridinium optionally containing a substituent, or phosphonium optionally containing a substituent, wherein $R^{101}$s are each H or an organic group (preferably a fluorine-free organic group) and may be the same as or different from each other. The organic group for $R^{101}$ is preferably an alkyl group. $R^{101}$ is preferably H or an organic group containing 1 to 10 carbon atoms, more preferably H or an organic group containing 1 to 4 carbon atoms, still more preferably H or an alkyl group containing 1 to 4 carbon atoms.

From the viewpoint of surface activity, the number of carbon atoms in $R^{100}$ is preferably 2 or more, more preferably 3 or more. From the viewpoint of water-solubility, the number of carbon atoms in $R^{100}$ is preferably 29 or less, more preferably 23 or less.

Examples of the metal atom as M include alkali metals (Group 1) and alkaline earth metals (Group 2), and preferred is Na, K, or Li. M is preferably H, a metal atom, or $NR^{101}{}_4$, more preferably H, an alkali metal (Group 1), an alkaline earth metal (Group 2), or $NR^{101}{}_4$, still more preferably H, Na, K, Li, or $NH_4$, further more preferably Na, K, or $NH_4$, particularly preferably Na or $NH_4$, most preferably $NH_4$.

The compound ($\beta$) may also be an anionic surfactant represented by $R^{102}\text{-}SO_3M$ (wherein $R^{102}$ is a linear or branched alkyl, alkenyl, alkylene, or alkenylene group containing 1 or more carbon atoms and optionally containing a substituent, or a cyclic alkyl, alkenyl, alkylene, or alkenylene group containing 3 or more carbon atoms and optionally containing a substituent, each of which optionally contains an ether bond; when containing 3 or more carbon atoms, $R^{102}$ optionally contains a monovalent or divalent heterocycle or optionally forms a ring; and M is as defined above).

Specific examples include a compound represented by $CH_3\text{-}(CH_2)_n\text{-}SO_3M$ (wherein n is an integer of 2 to 28 and M is as defined above).

The compound ($\beta$) may be free from a carbonyl group (other than the carbonyl group in the carboxy group) from the viewpoint of emulsion stability. A preferred example of the carbonyl group-free hydrocarbon-containing surfactant is a compound represented by the following formula (B1):

$$R^{103}\text{-}SO_3\text{-}M \qquad (B1)$$

wherein $R^{103}$ is an alkyl, alkenyl, alkylene, or alkenylene group containing 6 to 17 carbon atoms, which optionally contains

an ether bond; and M is H, a metal atom, $NR^{101}_4$, imidazolium optionally containing a substituent, pyridinium optionally containing a substituent, or phosphonium optionally containing a substituent, wherein $R^{101}$s are the same as or different from each other and each are H or an organic group (preferably, a fluorine-free organic group).

In the formula (B1), $R^{103}$ is preferably an alkyl or alkenyl group (which may contain an ether group). The alkyl or alkenyl group for $R^{103}$ may be linear or branched. The number of carbon atoms in $R^{103}$ may be, but is not limited to, 2 to 29.

When the alkyl group is linear, the number of carbon atoms in $R^{103}$ is preferably 3 to 29, more preferably 5 to 23. When the alkyl group is branched, the number of carbon atoms in $R^{103}$ is preferably 5 to 35, more preferably 11 to 23.

When the alkenyl group is linear, the number of carbon atoms in $R^{103}$ is preferably 2 to 29, more preferably 9 to 23. When the alkenyl group is branched, the number of carbon atoms in $R^{103}$ is preferably 2 to 29, more preferably 9 to 23.

Examples of the alkyl and alkenyl groups include methyl, ethyl, isobutyl, t-butyl, and vinyl groups.

Examples of the compound (β) include sulfonic acids such as aliphatic sulfonic acids, unsaturated aliphatic sulfonic acids, and aromatic sulfonic acids, sulfate esters such as aliphatic sulfate esters, unsaturated aliphatic sulfate esters, and aromatic sulfate esters, and their salts.

Examples of the sulfonic acids include 1-hexanesulfonic acid, 1-octanesulfonic acid, 1-decanesulfonic acid, 1-dodecanesulfonic acid, perfluorobutanesulfonic acid, linear alkylbenzene sulfonic acid, toluene sulfonic acid, cumensulfonic acid, octylbenzene sulfonic acid, DBS, naphthalene sulfonic acid, naphthalene disulfonic acid, naphthalene trisulfonic acid, and butyl naphthalene sulfonic acid. Examples of the sulfate esters include sodium alkyl sulfate esters, alpha sulfo fatty acid ester salts, alkyl sulfate ester salts, polyoxyethylene alkyl ether sulfate ester salts, alpha olefin sulfonate salts, lauryl sulfate, myristyl sulfate, laureth sulfate, and polyoxyethyelne alkyl phenol sulfonate.

The compound (β) preferably includes at least one selected from the group consisting of saturated aliphatic sulfate esters, aromatic sulfate esters, and their salts, more preferably at least one selected from the group consisting of sodium alkyl sulfate esters, alpha sulfo fatty acid ester salts, alkyl sulfate ester salts, polyoxyethylene alkyl ether sulfate ester salts, alpha olefin sulfonate salts, lauryl sulfate, myristyl sulfate, laureth sulfate, polyoxyethyelne alkyl phenol sulfonate, and their salts.

Non-limiting examples of the salts include those in which the hydrogen atom of the sulfonic acid group is a metal atom, $NR^{11}_4$, imidazolium optionally containing a substituent, pyridinium optionally containing a substituent, or phosphonium optionally containing a substituent as M in the above-described formula.

The anionic hydrocarbon surfactant may also be a surfactant (1-0A) represented by the following formula (1-0A) :

[Chem. 31]

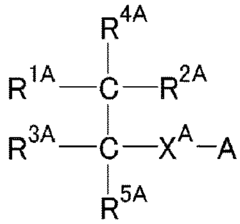

wherein $R^{1A}$ to $R^{5A}$ are each H, a monovalent hydrocarbon group optionally containing an ester group between carbon atoms, or a group represented by the formula: $-X^A-A$, with at least one of $R^{2A}$ or $R^{5A}$ being a group represented by the formula: $-X^A-A$;

$X^A$s at respective appearances are the same as or different from each other and are each a divalent hydrocarbon group or a bond;

As at respective appearances are the same as or different from each other and are each -COOM (wherein M is H, a metal atom, $NR^7_4$, imidazolium optionally containing a substituent, pyridinium optionally containing a substituent, or phosphonium optionally containing a substituent, wherein $R^7$s are each H or an organic group (preferably a fluorine-free organic group)); and

any two of $R^{1A}$ to $R^{5A}$ optionally bind to each other to form a ring.

In the formula (1-0A), the number of carbon atoms in the monovalent hydrocarbon group optionally containing an ester group between carbon atoms for each of $R^{1A}$ to $R^{5A}$ is preferably 1 to 50, more preferably 5 to 20. Any two of $R^{1A}$ to $R^{5A}$ optionally bind to each other to form a ring. The monovalent hydrocarbon group optionally containing an ester group between carbon atoms is preferably an alkyl group.

In the formula, the number of carbon atoms in the divalent hydrocarbon group for $X^A$ is preferably 1 to 50, more preferably 5 to 20. Examples of the divalent hydrocarbon group include an alkylene group and an alkanediyl group.

Preferred is an alkylene group.

In the formula (1-0A), either $R^{2A}$ or $R^{5A}$ is preferably a group represented by the formula: $-X^A-A$. More preferably, $R^{2A}$ is a group represented by the formula: $-X^A-A$.

In a preferred embodiment, in the formula (1-0A), $R^{2A}$ is a group represented by the formula: $-X^A-A$, and $R^{1A}$, $R^{3A}$, $R^{4A}$, and $R^{5A}$ are each H. In this case, $X^A$ is preferably a bond or an alkylene group containing 1 to 5 carbon atoms.

In a preferred embodiment, in the formula (1-0A), $R^{2A}$ is a group represented by the formula: $-X^A-A$, $R^{1A}$ and $R^{3A}$ are each a group represented by $-Y^A-R^6$, $Y^A$s at respective appearances are the same as or different from each other and are each -COO-, -OCO-, or a bond, and $R^6$s at respective appearances are the same as or different from each other and are each an alkyl group containing 2 or more carbon atoms. In this case, $R^{4A}$ and $R^{5A}$ are each preferably H.

Examples of the hydrocarbon surfactant represented by the formula (1-0A) include glutaric acid and a salt thereof, adipic acid and a salt thereof, pimelic acid and a salt thereof, suberic acid and a salt thereof, azelaic acid and a salt thereof, and sebacic acid and a salt thereof.

An aliphatic carboxylic acid-type hydrocarbon surfactant represented by the formula (1-0A) may be a double-chain, double-hydrophilic-group synthetic surfactant, and examples thereof include gemini surfactants including Gemsurf (Chukyo Yushi Co., Ltd.) such as Gemsurf $\alpha$142 (number of carbon atoms: 12, lauryl group), Gemsurf $\alpha$102 (number of carbon atoms: 10), and Gemsurf $\alpha$182 (number of carbon atoms: 14).

The anionic hydrocarbon surfactant may also be a compound I represented by the following formula I:

$$R\text{-}(XZ)_n \qquad (I)$$

wherein R is a hydrophobic hydrocarbon moiety containing one or more saturated or unsaturated, acyclic or cyclic aliphatic groups, where the percentage of total $CH_3$ groups relative to the sum of $CH_3$, $CH_2$, and CH groups in one or more aliphatic groups is at least about 70% and the hydrophobic moiety contains no siloxane unit; Xs may be the same as or different from each other and each represent an ionic hydrophilic moiety; and Zs may be the same as or different from each other and each represent one or more counter ions of the ionic hydrophilic moiety; and n is 1 to 3.

The compound I exhibits low reactivity with a polymerization initiator and/or a propagating fluoropolymer radical in emulsion polymerization of a fluoromonomer.

The compound I preferably includes a substituted moiety represented by the following formula:

[Chem. 32]

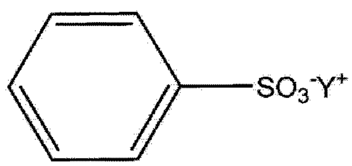

wherein $Y^+$ is hydrogen, ammonium, quaternary ammonium, a nitrogen heterocycle, an alkali metal, or an alkaline earth metal.

The compound I is preferably a compound II represented by the following formula II:

[Chem. 33]

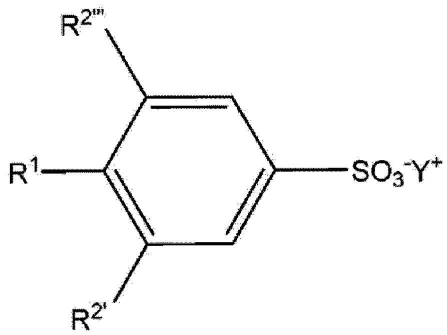

II

wherein $R^{2'}$ and $R^{2'''}$ are the same as or different from each other and are each a saturated or unsaturated, acyclic or cyclic aliphatic group containing 4 to 16 carbon atoms, where the percentage of total $CH_3$ groups relative to the sum of $CH_3$, $CH_2$, and CH groups in $R^{2'}$ and $R^{2'''}$ groups is at least about 70% or $R^{2'}$ and $R^{2'''}$ optionally bind to each other to

form a saturated or unsaturated aliphatic ring optionally containing an ether or ester bond with the percentage of total $CH_3$ groups relative to the sum of $CH_3$, $CH_2$, and CH groups in the ring being at least about 70%; $R^1$ is hydrogen, methoxy, ethoxy, or phenoxy; and $Y^+$ is hydrogen, ammonium, quaternary ammonium, a nitrogen heterocycle, an alkali metal, or an alkaline earth metal.

The following compounds are preferred as the compound II, for example.

[Chem. 34]

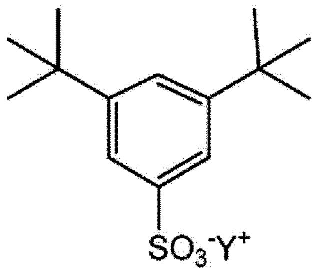

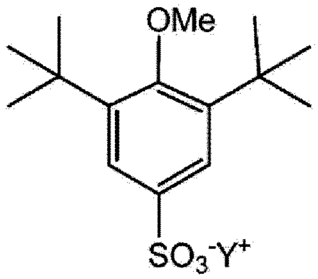

In the formulas, $Y^+$ may be hydrogen, ammonium, or an alkali metal.

The compound I is also preferably a compound III represented by the following formula III:

[Chem. 35]

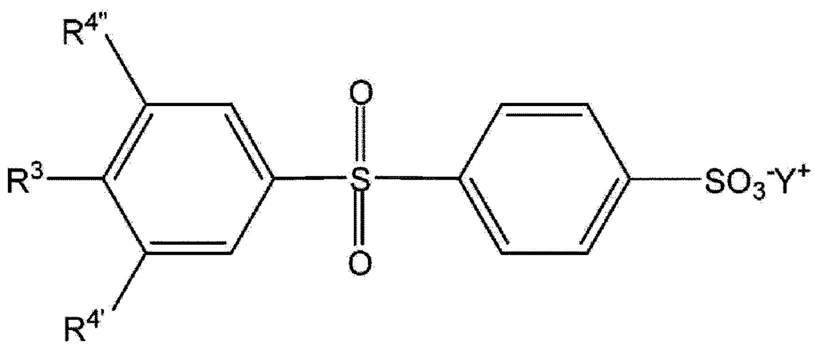

III

wherein $R^3$, $R^{4'}$, and $R^{4''}$ are the same as or different from each other and are each hydrogen or a saturated or unsaturated, acyclic or cyclic aliphatic group containing 4 to 16 carbon atoms, where the percentage of total $CH_3$ groups relative to the sum of $CH_3$, $CH_2$, and CH groups in $R^3$, $R^{4'}$, and $R^{4''}$ groups is at least about 70%, at least one of $R^3$, $R^{4'}$, and $R^{4''}$ is not hydrogen, when $R^{4'}$ and $R^{4''}$ are each hydrogen, $R^3$ is not hydrogen, and when $R^3$ is hydrogen, $R^{4'}$, and $R^{4''}$ are each not hydrogen; and $Y^+$ is hydrogen, ammonium, quaternary ammonium, a nitrogen heterocycle, an alkali metal, or an alkaline earth metal.

The compound III is preferably the following compound, for example.

[Chem. 36]

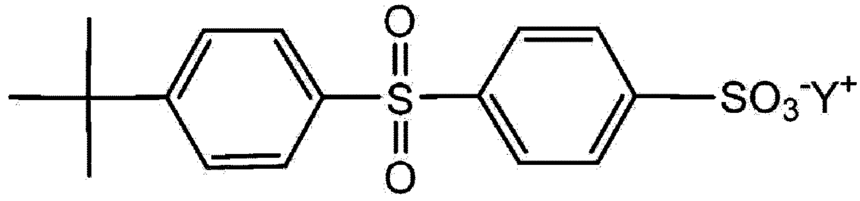

In the formula, $Y^+$ may be hydrogen, ammonium, or an alkali metal.

In the production method of the disclosure, two or more hydrocarbon surfactants may be used together.

The PTFE composition of the disclosure can be obtained by a production method including a polymerization step of polymerizing tetrafluoroethylene alone or polymerizing tetrafluoroethylene and a modifying monomer copolymerizable with tetrafluoroethylene in an aqueous medium having a pH of 4.0 or more in the presence of a hydrocarbon surfactant and a polymerization initiator to obtain PTFE even in a case where the specific hydrocarbon surfactant is not used.

Conventionally, the pH of the aqueous medium used in the polymerization was less than 4.0 because an acidic polymerization initiator was used in the polymerization step for producing PTFE. As a result of diligent studies by the disclosers, surprisingly, it has been found that by setting the pH of the aqueous medium used for polymerization to 4.0 or more, the stability of polymerization is improved and PTFE having a high molecular weight can be produced.

The production method includes polymerizing tetrafluoroethylene alone or tetrafluoroethylene and a modifying monomer copolymerizable with tetrafluoroethylene in an aqueous medium having a pH of 4.0 or more. The pH may be 4.0 or more, preferably more than 4.0, more preferably 4.5 or more, still more preferably 5.0 or more, further more preferably 5.5 or more, even more preferably 6.0 or more, particularly preferably 6.5 or more, particularly preferably 7.0 or more, particularly preferably 7.5 or more, particularly preferably 8.0 or more. The upper limit of the pH is not limited, but may be, for example, 13.0 or less. From the viewpoint of corrosion of the polymerization tank, it is preferably 12.0 or less, more preferably 11.5 or less, still more preferably 11.0 or less.

The pH can be measured with a pH meter.

In the production method, the method of adjusting the pH of the aqueous medium to 4.0 or more is not limited, but the pH can be made 4.0 or more by using, for example, an alkaline aqueous solution, an alkaline aqueous dispersion, or a pH adjuster. Still, the method is not limited.

Further, even in a case where a polymerization initiator that shows acidity when dissolved in an aqueous medium is used, the pH can be adjusted to 4.0 or more by further adding an alkaline compound such as sodium hydroxide. The alkaline compound may be any compound which dissolves in water and ionizes to produce $OH^-$, and non-limiting examples thereof include a hydroxide of an alkali metal such as sodium hydroxide or potassium hydroxide; a hydroxide of alkaline earth metals; ammonia; and amines. The polymerization step may include a step of adding an alkaline compound to an aqueous medium.

In the production method, the pH of the aqueous medium may be 4.0 or more during the entire period of the polymerization step. Further, the pH may be 4.0 or more in the middle of the polymerization step, or the pH may be 4.0 or more in the latter half of the polymerization step. Further, the pH may be 4.0 or more in the middle and the latter half of the polymerization step.

For example, in the polymerization step, the pH of the aqueous medium is preferably 4.0 or more when the polymer solid concentration is 3% by mass or more. In other words, preferably, the production method includes a polymerization step of polymerizing tetrafluoroethylene alone or polymerizing tetrafluoroethylene and a modifying monomer copolymerizable with tetrafluoroethylene in an aqueous medium in the presence of a hydrocarbon surfactant and a polymerization initiator to obtain PTFE, and the aqueous medium preferably has a pH of 4.0 or more when the polymer solid concentration is 3% by mass or more. The aqueous medium more preferably has a pH of 4.0 or more when the polymer solid concentration is 5% by mass or more, still more preferably has a pH of 4.0 or more when the polymer solid concentration is 8% by mass or more, further more preferably has a pH of 4.0 or more when the polymer solid concentration is 10% by mass or more, even more preferably has a pH of 4.0 or more when the polymer solid concentration is 15% by mass or more, particularly preferably has a pH of 4.0 or more when the polymer solid concentration is 18% by mass or more, more preferably has a pH of 4.0 or more when the polymer solid concentration is 20% by mass or more, still more preferably has a pH of 4.0 or more when the polymer solid concentration is 25% by mass or more.

In the polymerization step, the pH of the aqueous medium is preferably maintained at 4.0 or more from the time when the polymer solid concentration becomes 25% by mass to the completion of polymerization, more preferably maintained at 4.0 or more from the time when the polymer solid concentration becomes 20% by mass to the completion of polymerization, still more preferably maintained at 4.0 or more from the time when the polymer solid concentration

becomes 18% by mass to the completion of polymerization, further more preferably maintained at 4.0 or more from the time when the polymer solid concentration becomes 15% by mass to the completion of polymerization, even more preferably maintained at 4.0 or more from the time when the polymer solid concentration becomes 10% by mass to the completion of polymerization, particularly preferably maintained at 4.0 or more from the time when the polymer solid concentration becomes 8% by mass to the completion of polymerization, more preferably maintained at 4.0 or more from the time when the polymer solid concentration becomes 5% by mass to the completion of polymerization, and still more preferably maintained at 4.0 or more from the time when the polymer solid concentration becomes 3% by mass to the completion of polymerization.

In the polymerization step, the pH of the aqueous medium is also preferably 4.0 or more when the polymer solid concentration is less than 15% by mass. In the polymerization step, the pH of the aqueous medium is more preferably 4.0 or more when the polymer solid concentration is 3% by mass or more and less than 15% by mass, the pH of the aqueous medium is more preferably 4.0 or more when the polymer solid concentration is 5% by mass or more and less than 15% by mass, the pH of the aqueous medium is still more preferably 4.0 or more when the polymer solid concentration is 8% by mass or more and less than 15% by mass, and the pH of the aqueous medium is further preferably 4.0 or more when the polymer solid concentration is 10% by mass or more and less than 15% by mass.

In the polymerization step, the pH of the aqueous medium is preferably maintained at 4.0 or more while the polymer solid concentration is 10% by mass or more and up to 15% by mass, the pH of the aqueous medium is more preferably maintained at 4.0 or more while the polymer solid concentration is at 8% by mass or more and up to 15% by mass, and the pH of the aqueous medium is still more preferably maintained at 4.0 or more while the polymer solid concentration is 5% by mass or more and up to 15% by mass.

In any case, the pH of the aqueous medium is preferably more than 4.0, more preferably 4.5 or more, still more preferably 5.0 or more, further more preferably 5.5 or more, even more preferably 6.0 or more, particularly preferably 6.5 or more, more preferably 7.0 or more, still more preferably 7.5 or more, further more preferably 8.0 or more.

In the polymerization step, the pH of the aqueous medium is preferably 4.0 or more for at least 60% (preferably at least 70%, more preferably at least 80%, still more preferably at least 90%, further more preferably at least 95%, even more preferably at least 99%, particularly preferably 100%) of the period from the time of the initiation of the polymerization to the time when the polymer solid concentration is 3% by mass (preferably 5% by mass, more preferably 8% by mass, still more preferably 10% by mass, further more preferably 15% by mass, even more preferably 18% by mass, yet still further preferably 20% by mass, particularly preferably 25% by mass).

In the polymerization step, the pH of the aqueous medium is preferably 4.0 or more for at least 60% (preferably at least 70%, more preferably at least 80%, still more preferably at least 90%, further more preferably at least 95%, even more preferably at least 99%, particularly preferably 100%) of the period from the time when the polymer solid concentration is 10% by mass (preferably 8% by mass, more preferably 5% by mass, still more preferably 3% by mass, further more preferably from the time of polymerization initiation) to the time when the polymer solid concentration is 15% by mass.

In the polymerization step, the pH of the aqueous medium is preferably 4.0 or more for at least 60% (preferably at least 70%, more preferably at least 80%, still more preferably at least 90%, further more preferably at least 95%, even more preferably at least 99%, particularly preferably 100%) of the period from the time when the polymer solid concentration is 15% by mass to the time when the polymer solid concentration is 18% by mass (preferably 20% by mass, more preferably 25% by mass).

In the polymerization step, the pH of the aqueous medium is preferably 4.0 or more for at least 60% (preferably at least 70%, more preferably at least 80%, still more preferably at least 90%, further more preferably at least 95%, more preferably at least 99%, particularly preferably 100%) of the period from the time when the polymer solid concentration is 25% by mass (preferably 20% by mass, more preferably 18% by mass, still more preferably 15% by mass, further more preferably 10% by mass, even more preferably 8% by mass, particularly preferably 5% by mass, more preferably 3% by mass, still more preferably from the time of polymerization initiation) to the completion of polymerization.

In any case, the pH of the aqueous medium is preferably more than 4.0, more preferably 4.5 or more, still more preferably 5.0 or more, further more preferably 5.5 or more, even more preferably 6.0 or more, particularly preferably 6.5 or more, more preferably 7.0 or more, still more preferably 7.5 or more, further more preferably 8.0 or more.

In the production method, the hydrocarbon surfactant is a fluorine-free hydrocarbon surfactant, preferably an anionic hydrocarbon surfactant, more preferably a carboxylic acid-type hydrocarbon surfactant. The anionic hydrocarbon surfactant and the carboxylic acid-type hydrocarbon surfactant suitably used may be, for example, but not limited to, the compound ($\alpha$) exemplified in the different compounds with surface activity.

In the production method, the hydrocarbon surfactant is a fluorine-free hydrocarbon surfactant, preferably an anionic hydrocarbon surfactant, also preferably a sulfonic acid-type hydrocarbon surfactant. The anionic hydrocarbon surfactant and the sulfonic acid-type hydrocarbon surfactant are not limited. For example, the compound ($\beta$) exemplified in the different compounds with surface activity can be suitably used.

The PTFE composition of the disclosure can be obtained by a production method including a polymerization step of polymerizing tetrafluoroethylene alone or polymerizing tetrafluoroethylene and a modifying monomer copolymerizable with tetrafluoroethylene in an aqueous medium in the presence of an anionic hydrocarbon surfactant and a polymerization initiator to obtain PTFE even in a case where the specific hydrocarbon surfactant is not used, in which the hydrocarbon surfactant contains a salt of the hydrocarbon surfactant. In other words, at least a part of the anionic hydrocarbon surfactant in the polymerization step is in the form of a salt.

As a result of diligent studies by the disclosers and others, surprisingly, it has been found that an anionic hydrocarbon surfactant containing a salt of the anionic hydrocarbon surfactant improves the stability of polymerization and PTFE having a high molecular weight can be produced.

This is presumably attributable to the fact that the anionic surfactant containing a salt has better water solubility to exhibit emulsifying performance more easily.

The anionic hydrocarbon surfactant will be described later.

It can be confirmed by measuring the conductivity that the anionic hydrocarbon surfactant contains a salt of the hydrocarbon surfactant.

In the production method, the anionic hydrocarbon surfactant preferably has a salt concentration of 50% by mass or more, more preferably 60% by mass or more, still more preferably 70% by mass or more, further more preferably 80% by mass or more, even more preferably 90% by mass or more, particularly preferably 95% by mass or more, based on the total mass of the anionic hydrocarbon surfactant.

The ratio of the salt can be measured based on the solution concentration and the conductivity.

In the production method, the hydrocarbon surfactant is more preferably a carboxylic acid-type hydrocarbon surfactant. The hydrocarbon surfactant is free from fluorine.

In the salt of an anionic hydrocarbon surfactant, the cation that replaces the hydrogen atom of the acid (excluding hydrogen atom) is, for example, a metal atom, $NR^y_4$ ($R^y$s may be the same as or different from each other and are each H or an organic group (preferably a fluorine-free organic group)), imidazolium optionally containing a substituent, pyridinium optionally containing a substituent, or phosphonium optionally containing a substituent. $R^y$ is preferably H or an alkyl group, more preferably H or an alkyl group containing 1 to 10 carbon atoms, still more preferably H or an alkyl group containing 1 to 4 carbon atoms.

The cation in the salt of the anionic hydrocarbon surfactant is preferably a metal atom or $NR^y_4$, more preferably $NR^y_4$, still more preferably $NH_4$.

Since the conductivity varies greatly depending on the temperature, the conductivity is measured using a thermostatic bath while keeping the sample liquid temperature at 25°C and the cell temperature of the pH meter at the same temperature.

In the production method, the polymerization step is preferably performed substantially in the absence of the hydrocarbon surfactant in the form of an organic acid. Polymerization substantially in the absence of the hydrocarbon surfactant in the form of an organic acid further improves the stability of the polymerization, and high-molecular-weight PTFE can be obtained.

Substantially in the absence of the hydrocarbon surfactant in the form of an organic acid, the concentration of the organic acid is preferably 1.0% by mass or less, more preferably 0.5% by mass or less, still more preferably 0.1% by mass or less, even more preferably 0.05% by mass or less, particularly preferably 0.01% by mass or less, based on the mass of the resulting aqueous dispersion.

As used herein, the term "organic acid" means an organic compound that exhibits acidity. Examples of the organic acid include a carboxylic acid containing a -COOH group, and a sulfonic acid containing a $-SO_3H$ group, and preferred is a carboxylic acid from the viewpoint that the pH of an aqueous solution containing the organic acid can be easily adjusted.

Further, "form of an organic acid" is a form in which H is not free from the acidic group contained in the organic acid (for example, -COOH group, $-SO_3H$ group).

In the production method, the hydrocarbon surfactant is an anionic hydrocarbon surfactant.

In the polymerization step, the amount of the hydrocarbon surfactant at the initiation of the polymerization is preferably more than 50 ppm based on the aqueous medium. The amount of the hydrocarbon surfactant at the initiation of the polymerization is preferably 60 ppm or more, more preferably 70 ppm or more, still more preferably 80 ppm or more, further more preferably 100 ppm or more. The upper limit thereof is preferably, but not limited to, 10000 ppm, more preferably 5000 ppm, for example. When the amount of the hydrocarbon surfactant at the initiation of polymerization is in the above range, it is possible to obtain an aqueous dispersion having a smaller average primary particle size and superior stability.

It can be said that the polymerization started when the gas TFE in the reactor became PTFE and the pressure drop in the reactor occurred. U.S. Pat. No. 3,391,099 (Punderson) discloses a dispersion polymerization of tetrafluoroethylene in an aqueous medium comprising two separate steps of a polymerization process comprising: first the formation of a polymer nucleus as a nucleation site, and then the growth step comprising polymerization of the established particles. The polymerization is usually started when both the monomer to be polymerized and the polymerization initiator are charged in the reactor. Further, in the disclosure, an additive related to the formation of a nucleation site is referred

to as a nucleating agent.

The polymerization step preferably includes an addition step of adding a composition containing a hydrocarbon surfactant after the initiation of the polymerization. The addition step further improves the stability of polymerization, and higher-molecular-weight PTFE can be obtained.

The hydrocarbon surfactant may be, for example, in the form of a solid (for example, powder of a hydrocarbon surfactant) or in the form of a liquid.

The composition is only required to contain a hydrocarbon surfactant, and may be composed of only a hydrocarbon surfactant or may be a solution or dispersion of a hydrocarbon surfactant containing a hydrocarbon surfactant and a liquid medium. Therefore, the addition step can also be said to be a step of adding a hydrocarbon surfactant alone or a composition containing the hydrocarbon surfactant after the initiation of polymerization.

The hydrocarbon surfactant is not limited to one type, and may be a mixture of two or more types.

The liquid medium may be either an aqueous medium or an organic solvent, or may be a combination of an aqueous medium and an organic solvent.

Specific examples of the composition include an aqueous solution in which a hydrocarbon surfactant is dissolved in an aqueous medium and an aqueous dispersion in which a hydrocarbon surfactant is dispersed in an aqueous medium.

The hydrocarbon surfactant added in the addition step is preferably 0.0001 to 10% by mass based on the aqueous medium. It is more preferably 0.001% by mass or more, still more preferably 0.01% by mass or more, particularly preferably 0.05% by mass or more based on the aqueous medium. Further, it is more preferably 5% by mass or less, still more preferably 3% by mass or less, particularly preferably 1% by mass or less based on the aqueous medium.

Since the stability of polymerization is improved and higher-molecular-weight PTFE can be obtained, the composition is preferably an aqueous solution containing a hydrocarbon surfactant and having a pH of 5.0 or more.

The pH of the aqueous solution is more preferably 6.0 or more, still more preferably 6.5 or more, further more preferably 7.0 or more, even more preferably 7.5 or more, particularly preferably 8.0 or more. The upper limit of pH is not limited, and may be 12.0 or less, or 11.0 or less.

The hydrocarbon surfactant in the addition step is preferably an anionic hydrocarbon surfactant, more preferably a carboxylic acid-type hydrocarbon surfactant.

The anionic hydrocarbon surfactant and the carboxylic acid-type hydrocarbon surfactant suitably used may be, for example, but not limited to, the compound ($\alpha$) exemplified in the different compounds with surface activity.

The carboxylic acid-type hydrocarbon surfactant used in the polymerization step and the addition step preferably includes at least one selected from the group consisting of: a surfactant containing a carboxy group (-COOH) or a group obtained by replacing the hydrogen atom of the carboxy group by an inorganic cation (e.g., metal atom, ammonium) among the surfactant (e), the anionic surfactant represented by $R^6(\text{-L-M})_2$ described above, and the anionic surfactant represented by $R^7(\text{-L-M})_3$ described above; the compound ($\alpha$); the surfactant (1-0A); and those obtained by radically treating or oxidizing these surfactants. The carboxylic acid-type hydrocarbon surfactant may be used alone or in a mixture of two or more.

The compound ($\alpha$) includes not only the anionic hydrocarbon surfactant represented by the formula: $R^{102}$-COOM (wherein $R^{102}$ and M are as defined above) (preferably, the compound represented by the formula (A1)), but also those containing a carboxy group (-COOH) or a group in which the hydrogen atom of the carboxy group is replaced by an inorganic cation (e.g., metal atom, ammonium) among the anionic surfactant represented by the formula: R-L-M (wherein R, L, and M are as defined above), the surfactant (c), and the surfactant (d).

The carboxylic acid-type hydrocarbon surfactant is preferably the compound ($\alpha$), more preferably includes at least one selected from the group consisting of a compound represented by the formula (A1), a compound represented by the formula (c) wherein $A^c$ is $\text{-COOX}^c$, a compound represented by the formula (d) wherein $A^d$ is $\text{-COOX}^d$, a compound represented by the formula (e) wherein $A^e$ is - $\text{COOM}^e$, a compound represented by the formula (1-0A) wherein A is -COOM, and those obtained by radically treating or oxidizing these surfactants, still more preferably includes at least one selected from the group consisting of a compound represented by the formula (A1) and a compound obtained by radically treating or oxidizing the compound.

In particular, preferred is at least one selected from the group consisting of lauric acid, capric acid, myristic acid, pentadecylic acid, palmitic acid, salts thereof, and those obtained by radically treating or oxidizing these compounds. Non-limiting examples of the salts include those in which the hydrogen atom of the carboxy group is a metal atom, $NR^{101}_4$, imidazolium optionally containing a substituent, pyridinium optionally containing a substituent, or phosphonium optionally containing a substituent as M in the above-described formula.

In the production method, tetrafluoroethylene is preferably polymerized substantially in the absence of a fluorine-containing surfactant.

The phrase "substantially in the absence of a fluorine-containing surfactant" in the production method means that the amount of a fluorine-containing surfactant in the aqueous medium is 10 ppm by mass or less, preferably 1 ppm by mass or less, more preferably 100 ppb by mass or less, still more preferably 10 ppb by mass or less, further more preferably less than 10 ppb by mass, further more preferably 1 ppb by mass or less, particularly preferably less than 1

ppb by mass.

The phrase "substantially in the absence of a fluorine-containing surfactant" also means that no fluorine-containing surfactant is intentionally added.

Examples of the fluorine-containing surfactant include fluorine-containing anionic surfactants.

The fluorine-containing anionic surfactant may be, for example, a fluorine atom-containing surfactant containing 20 or less carbon atoms in total in the portion excluding the anionic group.

The fluorine-containing surfactant may also be a surfactant containing fluorine and having a molecular weight of 1000 or less, preferably 800 or less in the anionic moiety.

The "anionic moiety" means the portion of the fluorine-containing surfactant excluding the cation. For example, in the case of $F(CF_2)_{n1}COOM$ represented by the formula (I) described later, the anionic moiety is the "$F(CF_2)_{n1}COO$" portion.

Examples of the fluorine-containing surfactant also include fluorine-containing surfactants having a Log POW of 3.5 or less. The Log POW is a partition coefficient between 1-octanol and water, which is represented by Log P (wherein P is the ratio between the concentration of the fluorine-containing surfactant in octanol and the concentration of the fluorine-containing surfactant in water in a phase-separated octanol/water (1:1) liquid mixture containing the fluorine-containing surfactant).

Log POW is determined as follows. Specifically, HPLC is performed on standard substances (heptanoic acid, octanoic acid, nonanoic acid, and decanoic acid) each having a known octanol/water partition coefficient using TOSOH ODS-120T (ϕ4.6 mm × 250 mm, Tosoh Corp.) as a column and acetonitrile/0.6% by mass HClO4 aqueous solution (= 1/1 (vol/vol%)) as an eluent at a flow rate of 1.0 ml/min, a sample amount of 300 μL, and a column temperature of 40°C with a detection light of UV 210 nm. For each standard substance, a calibration curve is drawn with respect to the elution time and the known octanol/water partition coefficient. Based on the calibration curve, Log POW is calculated from the elution time of the sample liquid in HPLC.

Specific examples of the fluorine-containing surfactant include those disclosed in US 2007/0015864 A, US 2007/0015865 A, US 2007/0015866 A, US 2007/0276103 A, US 2007/0117914 A, US 2007/142541 A, US 2008/0015319 A, US 3250808 B, US 3271341 B, JP 2003-119204 A, WO 2005/042593, WO 2008/060461, WO 2007/046377, WO 2007/119526, WO 2007/046482, WO 2007/046345, US 2014/0228531 A, WO 2013/189824, and WO 2013/189826.

Examples of the fluorine-containing anionic surfactant include a compound represented by the following formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group containing 3 to 20 carbon atoms in which some or all of Hs are replaced by F; the alkylene group optionally containing one or more ether bonds in which some of Hs are replaced by Cl; and $Y^0$ is an anionic group.

The anionic group for $Y^0$ may be -COOM, $-SO_2M$, or - $SO_3M$, and may be -COOM or $-SO_3M$.

M is H, a metal atom, $NR^7_4$, imidazolium optionally containing a substituent, pyridinium optionally containing a substituent, or phosphonium optionally containing a substituent, wherein $R^7$ is H or an organic group.

Examples of the metal atom include an alkali metal (Group 1) and an alkaline earth metal (Group 2), such as Na, K, and Li.

$R^7$ may be H or a $C_{1-10}$ organic group, may be H or a $C_{1-4}$ organic group, or may be H or a $C_{1-4}$ alkyl group.

M may be H, a metal atom, or $NR^7_4$, may be H, an alkali metal (Group 1), an alkaline earth metal (Group 2), or $NR^7_4$, or may be H, Na, K, Li, or $NH_4$.

In $Rf^{n0}$, 50% or more of H atoms may be replaced by fluorine.

Examples of the compound represented by the general formula ($N^0$) include:
a compound represented by the following formula ($N^1$):

$$X^{n0}\text{-}(CF_2)_{m1}\text{-}Y^0 \qquad (N^1)$$

wherein $X^{n0}$ is H, Cl, or F; m1 is an integer of 3 to 15; and $Y^0$ is as defined above;
a compound represented by the following formula ($N^2$):

$$Rf^{n1}\text{-O-}(CF(CF_3)CF_2O)_{m2}CFX^{n1}\text{-}Y^0 \qquad (N^2)$$

wherein $Rf^{n1}$ is a perfluoroalkyl group containing 1 to 5 carbon atoms; m2 is an integer of 0 to 3; $X^{n1}$ is F or $CF_3$; and $Y^0$ is as defined above;

a compound represented by the following formula ($N^3$):

$$Rf^{n2}(CH_2)_{m3}-(Rf^{n3})_q-Y^0 \quad (N^3)$$

wherein $Rf^{n2}$ is a partially or fully fluorinated alkyl group containing 1 to 13 carbon atoms and optionally containing an ether bond; m3 is an integer of 1 to 3; $Rf^{n3}$ is a linear or branched perfluoroalkylene group containing 1 to 3 carbon atoms; q is 0 or 1; and $Y^0$ is as defined above;
a compound represented by the following formula ($N^4$):

$$Rf^{n4}-O-(CY^{n1}Y^{n2})_pCF_2-Y^0 \quad (N^4)$$

wherein $Rf^{n4}$ is a linear or branched partially or fully fluorinated alkyl group containing 1 to 12 carbon atoms and optionally containing an ether bond; and $Y^{n1}$ and $Y^{n2}$ are the same as or different from each other and are each H or F; p is 0 or 1; and $Y^0$ is as defined above; and
a compound represented by the following formula ($N^5$):

[Chem. 37]

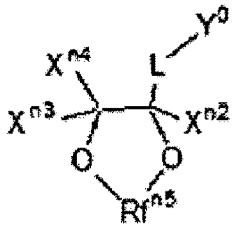

($N^5$)

wherein $X^{n2}$, $X^{n3}$, and $X^{n4}$ may be the same as or different from each other and are each H, F, or a linear or branched partially or fully fluorinated alkyl group containing 1 to 6 carbon atoms and optionally containing an ether bond; $Rf^{n5}$ is a linear or branched partially or fully fluorinated alkylene group containing 1 to 3 carbon atoms and optionally containing an ether bond; L is a linking group; and $Y^0$ is as defined above, with the proviso that the total carbon number of $X^{n2}$, $X^{n3}$, $X^{n4}$, and $Rf^{n5}$ is 18 or less.

More specific examples of the compound represented by the above formula ($N^0$) include a perfluorocarboxylic acid (I) represented by the following formula (I), an ω-H perfluorocarboxylic acid (II) represented by the following formula (II), a perfluoropolyethercarboxylic acid (III) represented by the following formula (III), a perfluoroalkylalkylenecarboxylic acid (IV) represented by the following formula (IV), a perfluoroalkoxyfluorocarboxylic acid (V) represented by the following formula (V), a perfluoroalkylsulfonic acid (VI) represented by the following formula (VI), an ω-H perfluorosulfonic acid (VII) represented by the following formula (VII), a perfluoroalkylalkylene sulfonic acid (VIII) represented by the following formula (VIII), an alkylalkylene carboxylic acid (IX) represented by the following formula (IX), a fluorocarboxylic acid (X) represented by the following formula (X), an alkoxyfluorosulfonic acid (XI) represented by the following formula (XI), and a compound (XII) represented by the following formula (XII).

The perfluorocarboxylic acid (I) is represented by the following formula (I):

$$F(CF_2)_{n1}COOM \quad (I)$$

wherein n1 is an integer of 3 to 14; and M is H, a metal atom, $NR^7_4$, imidazolium optionally containing a substituent, pyridinium optionally containing a substituent, or phosphonium optionally containing a substituent, wherein $R^7$ is H or an organic group.

The ω-H perfluorocarboxylic acid (II) is represented by the following formula (II):

$$H(CF_2)_{n2}COOM \quad (II)$$

wherein n2 is an integer of 4 to 15; and M is as defined above.

The perfluoropolyethercarboxylic acid (III) is represented by the following formula (III):

$$Rf^1-O-(CF(CF_3)CF_2O)_{n3}CF(CF_3)COOM \quad (III)$$

wherein $Rf^1$ is a perfluoroalkyl group containing 1 to 5 carbon atoms; n3 is an integer of 0 to 3; and M is as defined above.

The perfluoroalkylalkylenecarboxylic acid (IV) is represented by the following formula (IV):

$Rf^2(CH_2)_{n4}Rf^3COOM$ (IV)

wherein $Rf^2$ is a perfluoroalkyl group containing 1 to 5 carbon atoms; $Rf^3$ is a linear or branched perfluoroalkylene group containing 1 to 3 carbon atoms; n4 is an integer of 1 to 3; and M is as defined above.

The alkoxyfluorocarboxylic acid (V) is represented by the following formula (V):

$Rf^4\text{-O-}CY^1Y^2CF_2\text{-COOM}$ (V)

wherein $Rf^4$ is a linear or branched partially or fully fluorinated alkyl group containing 1 to 12 carbon atoms and optionally containing an ether bond; $Y^1$ and $Y^2$ are the same as or different from each other and are each H or F; and M is as defined above.

The perfluoroalkylsulfonic acid (VI) is represented by the following formula (VI):

$F(CF_2)_{n5}SO_3M$ (VI)

wherein n5 is an integer of 3 to 14; and M is as defined above.

The ω-H perfluorosulfonic acid (VII) is represented by the following formula (VII):

$H(CF_2)_{n6}SO_3M$ (VII)

wherein n6 is an integer of 4 to 14; and M is as defined above.

The perfluoroalkylalkylenesulfonic acid (VIII) is represented by the following formula (VIII):

$Rf^5(CH_2)_{n7}SO_3M$ (VIII)

wherein $Rf^5$ is a perfluoroalkyl group containing 1 to 13 carbon atoms; n7 is an integer of 1 to 3; and M is as defined above.

The alkylalkylenecarboxylic acid (IX) is represented by the following formula (IX):

$Rf^6(CH_2)_{n8}COOM$ (IX)

wherein $Rf^6$ is a linear or branched partially or fully fluorinated alkyl group containing 1 to 13 carbon atoms and optionally containing an ether bond; n8 is an integer of 1 to 3; and M is as defined above.

The fluorocarboxylic acid (X) is represented by the following formula (X):

$Rf^7\text{-O-}Rf^8\text{-O-}CF_2\text{-COOM}$ (X)

wherein $Rf^7$ is a linear or branched partially or fully fluorinated alkyl group containing 1 to 6 carbon atoms and optionally containing an ether bond; $Rf^8$ is a linear or branched partially or fully fluorinated alkyl group containing 1 to 6 carbon atoms; and M is as defined above.

The alkoxyfluorosulfonic acid (XI) is represented by the following formula (XI):

$Rf^9\text{-O-}CY^1Y^2CF_2\text{-}SO_3M$ (XI)

wherein $Rf^9$ is a linear or branched partially or fully fluorinated alkyl group containing 1 to 12 carbon atoms, optionally containing an ether bond, and optionally containing chlorine; $Y^1$ and $Y^2$ are the same as or different from each other and are each H or F; and M is as defined above.

The compound (XII) is represented by the following formula (XII):

[Chem. 38]

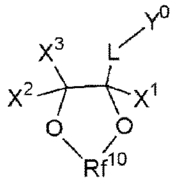

(X I I)

wherein $X^1$, $X^2$, and $X^3$ may be the same as or different from each other and are each H, F, or a linear or branched partially or fully fluorinated alkyl group containing 1 to 6 carbon atoms and optionally containing an ether bond; $Rf^{10}$ is a perfluoroalkylene group containing 1 to 3 carbon atoms; L is a linking group; and $Y^0$ is an anionic group.

$Y^0$ may be $-COOM$, $-SO_2M$, or $-SO_3M$, and may be $-SO_3M$ or COOM, where M is as defined above.

Examples of L include a single bond and a partially or fully fluorinated alkylene group containing 1 to 10 carbon atoms and optionally containing an ether bond.

As described above, examples of the fluorine-containing anionic surfactant include a carboxylic acid-based fluorine-containing surfactant and a sulfonic acid-based fluorine-containing surfactant.

The PTFE composition of the disclosure can be suitably produced by a production method including an addition step of adding at least one selected from the group consisting of a radical scavenger and a decomposer of a polymerization initiator. The addition step is performed during the step of performing the emulsion polymerization described above in an aqueous medium. The radical concentration during polymerization can be adjusted by adding a radical scavenger or a decomposer of a polymerization initiator. A radical scavenger is preferable from the viewpoint of reducing the radical concentration.

The radical scavenger used is a compound that has no reinitiation ability after addition or chain transfer to free radicals in the polymerization system. Specifically, used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or greater, still more preferably 1.0 or greater, further more preferably 5.0 or greater, particularly preferably 10 or greater.

The radical scavenger in the disclosure preferably includes, for example, at least one selected from the group consisting of aromatic hydroxy compounds, aromatic amines, N,N-diethylhydroxylamine, quinone compounds, terpenes, thiocyanates, and cupric chloride ($CuCl_2$).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphtresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate ($NH_4SCN$), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to reduce the standard specific gravity, the amount of the radical scavenger added is preferably an amount equivalent to 3% to 500% (on a molar basis) of the polymerization initiator concentration. The lower limit thereof is more preferably 5% (molar basis), still more preferably 8% (molar basis), still more preferably 10% (molar basis), further more preferably 15% (molar basis), even more preferably 20% (molar basis), particularly preferably 25% (molar basis), particularly preferably 30% (molar basis), particularly preferably 35% (molar basis). The upper limit thereof is more preferably 400% (molar basis), still more preferably 300% (molar basis), further more preferably 200% (molar

basis), even more preferably 100% (molar basis).

The decomposer of a polymerization initiator may be any compound that can decompose the polymerization initiator used, and preferably includes, for example, at least one selected from the group consisting of sulfites, bisulfites, bromates, diimine, diimine salts, oxalic acid, oxalates, copper salts, and iron salts. Examples of sulfites include sodium sulfite and ammonium sulfite. An example of copper salts is copper(II) sulfate and an example of iron salts is iron(II) sulfate.

The amount of the decomposer of a polymerization initiator added is in the range of 25 to 300% by mass based on the amount of the oxidizing agent combined as a polymerization initiator (redox initiator described later). The amount thereof is preferably 25 to 150% by mass, still more preferably 50 to 100% by mass.

In order to reduce the standard specific gravity, the amount of the decomposer of a polymerization initiator added is preferably an amount equivalent to 3% to 500% (on a molar basis) of the polymerization initiator concentration. The lower limit thereof is more preferably 5% (molar basis), still more preferably 8% (molar basis), still more preferably 10% (molar basis), still more preferably 13% (molar basis), further more preferably 15% (molar basis). The upper limit thereof is more preferably 400% (molar basis), still more preferably 300% (molar basis), further more preferably 200% (molar basis), even more preferably 100% (molar basis).

At least one selected from the group consisting of a radical scavenger and a decomposer of a polymerization initiator is preferably added when the concentration of PTFE formed in the aqueous medium is 5% by mass or more. More preferably, it is added when the concentration thereof is 10% by mass or more.

Further, it is preferably added when the concentration of PTFE formed in the aqueous medium is 40% by mass or less. It is more preferably added when the concentration thereof is 35% by mass or less, still more preferably when the concentration thereof is 30% by mass or less.

The addition step may be a step of continuously adding at least one selected from the group consisting of a radical scavenger and a decomposer of a polymerization initiator.

Continuously adding at least one selected from the group consisting of a radical scavenger and a decomposer of a polymerization initiator means, for example, adding the at least one selected from the group consisting of a radical scavenger and a decomposer of a polymerization initiator not all at once but over time without interruption or in portions.

The polymerization step may include polymerization of tetrafluoroethylene further in the presence of a nucleating agent.

The nucleating agent preferably includes at least one selected from the group consisting of, for example, fluoropolyether, a nonionic surfactant, and a chain transfer agent.

In this case, the polymerization step is preferably a step of polymerizing tetrafluoroethylene in an aqueous medium in the presence of a hydrocarbon surfactant and the nucleating agent to obtain PTFE.

As the fluoropolyether, perfluoropolyether is preferable.

The fluoropolyether preferably has a repeating unit represented by any of the formulas (1a) to (1d):

$(-CFCF_3-CF_2-O-)_n$ (13)

$(-CF_2-CF_2-CF_2-O-)_n$ (1b)

$(-CF_2-CF_2-O-)_n-(-CF_2-O-)_m$ (1c)

$(-CF_2-CFCF_3-O-)_n-(-CF_2-O-)_m$ (1d)

wherein m and n are integers of 1 or more.

The fluoropolyether is preferably fluoropolyetheric acid or a salt thereof, and the fluoropolyetheric acid is preferably a carboxylic acid, a sulfonic acid, a sulfonamide, or a phosphonic acid, more preferably a carboxylic acid. Among the fluoropolyetheric acid or a salt thereof, a salt of fluoropolyetheric acid is preferable, an ammonium salt of fluoropolyetheric acid is more preferable, and an ammonium salt of fluoropolyethercarboxylic acid is still more preferable.

The fluoropolyetheric acid or a salt thereof can have any chain structure in which oxygen atoms in the main chain of the molecule are separated by saturated fluorocarbon groups containing 1 to 3 carbon atoms. Two or more types of fluorocarbon groups can be present in the molecule.

The fluoropolyetheric acid or its salt is preferably a compound represented by the following formula:

$CF_3-CF_2-CF_2-O(-CFCF_3-CF_2-O-)_nCFCF_3-COOH$,

$CF_3-CF_2-CF_2-O(-CF_2-CF_2-CF_2-O-)_n-CF_2-CF_2OOH$,

or

$HOOC-CF_2-O(-CF_2-CF_2-O-)_n-(-CF_2-O-)_mCF_2COOH,$

wherein m and n are the same as above,
or a salt thereof.

These structures are described in J. Appl. Polymer Sci., 57, 797 (1995) examined by Kasai. As disclosed herein, such fluoropolyethers can have a carboxylic acid group or a salt thereof at one end or both ends. Similarly, such fluoropolyethers may have a sulfonic acid or phosphonic acid group or a salt thereof at one end or both ends. In addition, fluoropolyethers having acid functional groups at both ends may have different groups at each end. Regarding monofunctional fluoropolyether, the other end of the molecule is usually perfluorinated, but may contain a hydrogen or chlorine atom.

Fluoropolyethers having acid groups at one or both ends contains at least two ether oxygens, preferably at least four ether oxygens, still more preferably at least six ether oxygens. Preferably, at least one fluorocarbon group separating ether oxygens, more preferably at least two of such fluorocarbon groups contain 2 or 3 carbon atoms. Still more preferably, at least 50% of the fluorocarbon groups separating ether oxygens contains 2 or 3 carbon atoms. Also preferably, the fluoropolyether contains at least 15 carbon atoms in total, and for example, a preferable minimum value of n or n + m in the repeating unit structure is preferably at least 5. Two or more fluoropolyethers having an acid group at one end or both ends can be used in the method according to the disclosure. Typically, fluoropolyethers may contain a plurality of compounds in varying proportions within the molecular weight range relative to the average molecular weight, unless special care is taken in the production of a single specific fluoropolyether compound.

The fluoropolyether preferably has a number-average molecular weight of 800 g/mol or more. The fluoropolyether acid or the salt thereof preferably has a number-average molecular weight of less than 6000 g/mol, because the fluoropolyether acid or the salt thereof may be difficult to disperse in an aqueous medium. The fluoropolyether acid or the salt thereof more preferably has a number-average molecular weight of 800 to 3500 g/mol, still more preferably 1000 to 2500 g/mol.

The amount of the fluoropolyether is preferably 5 to 3000 ppm, more preferably 5 to 2000 ppm based on the aqueous medium. The lower limit thereof is still more preferably 10 ppm and the upper limit thereof is still more preferably 100 ppm.

Examples of the nonionic surfactant as the nucleating agent include the nonionic surfactant described above, and preferred is a fluorine-free nonionic surfactant. Examples of the nonionic surfactant include a compound represented by the following general formula (i):

$$R^3\text{-O-}A^1\text{-H} \qquad \text{(i)}$$

wherein $R^3$ is a linear or branched primary or secondary alkyl group containing 8 to 18 carbon atoms, and $A^1$ is a polyoxyalkylene chain.
$R^3$ preferably contains 10 to 16, more preferably 12 to 16 carbon atoms. When $R^3$ contains 18 or less carbon atoms, the aqueous dispersion tends to have good dispersion stability. When $R^3$ contains more than 18 carbon atoms, it is difficult to handle due to its high flowing temperature. When $R^3$ contains less than 8 carbon atoms, the surface tension of the aqueous dispersion becomes high, so that the permeability and wettability are likely to decrease.

The polyoxyalkylene chain may be composed of oxyethylene and oxypropylene. The polyoxyalkylene chain is composed of an average repeating number of 5 to 20 oxyethylene groups and an average repeating number of 0 to 2 oxypropylene groups, and is a hydrophilic group. The number of oxyethylene units may have either a broad or narrow monomodal distribution as typically supplied, or a broader or bimodal distribution which may be obtained by blending. When the average repeating number of oxypropylene groups is more than 0, the oxyethylene groups and oxypropylene groups in the polyoxyalkylene chain may be arranged in blocks or randomly.

From the viewpoint of viscosity and stability of the aqueous dispersion, a polyoxyalkylene chain composed of an average repeating number of 7 to 12 oxyethylene groups and an average repeating number of 0 to 2 oxypropylene groups is preferred. In particular, when $A^1$ has 0.5 to 1.5 oxypropylene groups on average, good low foaming properties can be achieved, which is preferable.

More preferably, $R^3$ is (R')(R")HC-, where R' and R" are the same or different linear, branched, or cyclic alkyl groups, and the total number of carbon atoms is at least 5, preferably 7 to 17. Preferably, at least one of R' or R" is a branched or cyclic hydrocarbon group.

Specific examples of the polyoxyethylene alkyl ether include $C_{13}H_{27}\text{-O-}(C_2H_4O)_{10}\text{-H}$, $C_{12}H_{25}\text{-O-}(C_2H_4O)_{10}\text{-H}$, $C_{10}H_{21}CH(CH_3)CH_2\text{-O-}(C_2H_4O)_9\text{-H}$, $C_{13}H_{27}\text{-O-}(C_2H_4O)_9\text{-}(CH(CH_3)CH_2O)\text{-H}$, $C_{16}H_{33}\text{-O-}(C_2H_4O)_{10}\text{-H}$, and

$HC(C_5H_{11})(C_7H_{15})$-O-$(C_2H_4O)_9$-H. Examples of commercially available products of the polyoxyethylene alkyl ethers include Genapol X080 (product name, available from Clariant), NOIGEN TDS series (available from DKS Co., Ltd.) exemplified by NOIGEN TDS-80 (trade name), LEOCOL TD series (available from Lion Corp.) exemplified by LEOCOL TD-90 (trade name), LIONOL® TD series (available from Lion Corp.), T-Det A series (available from Harcros Chemicals Inc.) exemplified by T-Det A 138 (trade name), and TERGITOL® 15 S series (available from Dow).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all product names, available from Dow Chemical Co., Ltd.).

The hydrophobic group of the nonionic surfactant may be any of an alkylphenol group, a linear alkyl group, and a branched alkyl group.

Examples of the polyoxyethylene alkylphenyl ether-based nonionic compound include, for example, a compound represented by the following general formula (ii):

$$R^4\text{-}C_6H_4\text{-}O\text{-}A^2\text{-}H \qquad \text{(ii)}$$

wherein $R^4$ is a linear or branched primary or secondary alkyl group containing 4 to 12 carbon atoms, and $A^2$ is a polyoxyalkylene chain. Specific examples of the polyoxyethylene alkylphenyl ether-based nonionic compound include Triton® X-100 (trade name, available from Dow Chemical Co., Ltd.).

Examples of the nonionic surfactant also include polyol compounds. Specific examples thereof include those described in WO 2011/014715.

Typical examples of the polyol compound include compounds having one or more sugar units as polyol unit. The sugar units may have been modified to contain at least one long chain. Examples of suitable polyol compounds containing at least one long chain moiety include alkyl glycosides, modified alkyl glycosides, sugar esters, and combinations thereof. Examples of the sugars include, but are not limited to, monosaccharides, oligosaccharides, and sorbitans. Examples of monosaccharides include pentoses and hexoses. Typical examples of monosaccharides include ribose, glucose, galactose, mannose, fructose, arabinose, and xylose. Examples of oligosaccharides include oligomers of 2 to 10 of the same or different monosaccharides. Examples of oligosaccharides include, but are not limited to, saccharose, maltose, lactose, raffinose, and isomaltose.

Typically, sugars suitable for use as the polyol compound include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to the carbon ring atoms. Typically, the sugars have been modified in that one or more of the hydrogen atoms of a hydroxy group (and/or hydroxyalkyl group) bonded to the carbon ring atoms has been replaced by the long chain residues such that an ether or ester bond is created between the long chain residue and the sugar moiety.

The sugar-based polyol may contain a single sugar unit or a plurality of sugar units. The single sugar unit or the plurality of sugar units may be modified with long chain moieties as described above. Specific examples of sugar-based polyol compound include glycosides, sugar esters, sorbitan esters, and mixtures and combinations thereof.

A preferred type of polyol compounds are alkyl or modified alkyl glucosides. These types of surfactants contain at least one glucose moiety. Examples thereof include compounds represented by the formula:

[Chem. 39]

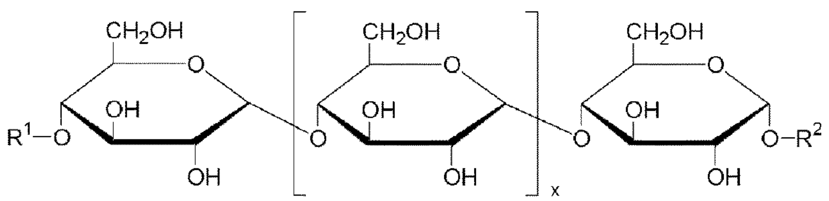

wherein x represents 0, 1, 2, 3, 4, or 5 and $R^1$ and $R^2$ each independently represent H or a long chain unit containing at least 6 carbon atoms, with the proviso that at least one of $R^1$ or $R^2$ is not H. Typical examples of $R^1$ and $R^2$ include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl

alcohol), eicosanoic acid, and combinations thereof.

It is understood that the above formula represents specific examples of alkyl polyglucosides showing glucose in its pyranose form but other sugars or the same sugars but in different enantiomeric or diastereomeric forms may also be used.

Alkyl glucosides are available, for example, by acid-catalyzed reactions of glucose, starch, or n-butyl glucoside with aliphatic alcohols which typically yield a mixture of various alkyl glucosides (Alkyl polyglycylside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional block copolymers supplied from BASF as Pluronic® R series, tridecyl alcohol alkoxylates supplied from BASF Corporation as Iconol® TDA series, and hydrocarbon-containing siloxane surfactants, preferably hydrocarbon surfactants. In the sense that the hydrocarbyl groups are fully replaced by hydrogen atoms where they can be replaced by halogen such as fluorine, these siloxane surfactants can also be regarded as hydrocarbon surfactants, i.e. the monovalent substituents on the hydrocarbyl groups are hydrogen.

In the production method, in addition to the specific hydrocarbon surfactant and other compounds with surface activity used as necessary, an additive may also be used to stabilize the compounds. Examples of the additive include a buffer, a pH adjuster, a stabilizing aid, and a dispersion stabilizer.

The stabilizing aid is preferably paraffin wax, fluorine-containing oil, a fluorine-containing solvent, silicone oil, or the like. The stabilizing aids may be used alone or in combination of two or more. The stabilizing aid is more preferably paraffin wax. The paraffin wax may be in the form of liquid, semi-solid, or solid at room temperature, and is preferably a saturated hydrocarbon containing 12 or more carbon atoms. The paraffin wax usually preferably has a melting point of 40°C to 65°C, more preferably 50°C to 65°C.

The amount of the stabilizing aid used is preferably 0.1 to 12% by mass, more preferably 0.1 to 8% by mass, based on the mass of the aqueous medium used. It is desirable that the stabilizing aid is sufficiently hydrophobic so that the stabilizing aid is completely separated from the PTFE aqueous emulsion after emulsion polymerization of TFE, and does not serve as a contaminating component.

In the production method, the emulsion polymerization may be performed by charging a polymerization reactor with an aqueous medium, the hydrocarbon surfactant, a monomer, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, the components such as the monomers, the polymerization initiator, a chain transfer agent, and the surfactant may additionally be added depending on the purpose. The hydrocarbon surfactant may be added after the polymerization reaction is initiated.

In the emulsion polymerization, the polymerization temperature and the polymerization pressure are appropriately determined in accordance with the type of the monomer used, the target molecular weight of PTFE, and the reaction rate. The polymerization temperature is typically 5°C to 150°C. The polymerization temperature is preferably 10°C or higher, more preferably 30°C or higher, still more preferably 50°C or higher. The polymerization temperature is more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher. The polymerization pressure is more preferably 5.0 MPaG or lower, still more preferably 3.0 MPaG or lower.

In particular, from the viewpoint of improving the yield, the polymerization pressure is preferably 1.0 MPaG or higher, more preferably 1.2 MPaG or higher, still more preferably 1.5 MPaG or higher, further more preferably 1.8 MPaG or higher, particularly preferably 2.0 MPaG or higher.

In the emulsion polymerization, the hydrocarbon surfactant is preferably added when the concentration of PTFE formed in the aqueous medium is less than 0.60% by mass. The hydrocarbon surfactant is more preferably added when the concentration is 0.50% by mass or less, still more preferably 0.36% by mass or less, further more preferably 0.30% by mass or less, even more preferably 0.20% by mass or less, particularly preferably 0.10% by mass or less. Most preferably, the hydrocarbon surfactant is added along with the initiation of polymerization. The concentration is the concentration with respect to the total of the aqueous medium and PTFE.

In the emulsion polymerization, the amount of the hydrocarbon surfactant at the initiation of the polymerization is preferably 1 ppm or more based on the aqueous medium. The amount of the hydrocarbon surfactant at the initiation of the polymerization is preferably 10 ppm or more, more preferably 50 ppm or more, still more preferably 100 ppm or more, further more preferably 200 ppm or more. The upper limit thereof is preferably, but not limited to, 100000 ppm, more preferably 50000 ppm, for example. When the amount of the hydrocarbon surfactant at the initiation of polymerization is in the above range, it is possible to obtain an aqueous dispersion having a smaller average primary particle size and superior stability.

The polymerization initiator may be any initiator capable of generating radicals within the polymerization temperature range, and any known oil-soluble and/or water-soluble polymerization initiator may be used. The polymerization initiator may be combined with a reducing agent, for example, into the form of a redox agent, which initiates the polymerization. The concentration of the polymerization initiator is appropriately determined in accordance with the type of the monomer, the target molecular weight of the PTFE, and the reaction rate.

The polymerization initiator to be used may be an oil-soluble radical polymerization initiator or a water-soluble radical polymerization initiator.

The oil-soluble radical polymerization initiator may be a known oil-soluble peroxide. Typical examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, dialkyl peroxides such as di-t-butyl peroxide, as well as di(perfluoroacyl) or di(fluorochloroacyl) peroxides such as di(ω-hydro-dodecafluoroheptanoyl)peroxide, di(ω-hydro-tetradecafluoroheptanoyl)peroxide, di(ω-hydro-hexadecafluorononanoyl) peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl) peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The oil-soluble radical polymerization initiator is preferably free from fluorine atoms.

The water-soluble radical polymerization initiator may be a known water-soluble peroxide, and examples thereof include ammonium salts, potassium salts, and sodium salts of persulfuric acid, perboric acid, perchloric acid, perphosphoric acid, and percarbonic acid, t-butyl permaleate, and t-butyl hydroperoxide. The initiator may also contain a reducing agent such as a sulfite or a sulfurous acid salt. The amount thereof used may be 0.1 to 20 times the amount of the peroxide.

For example, in the case of polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, bisulfite, bromate, diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of copper salts is copper(II) sulfate and an example of iron salts is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continuously or intermittently added thereto to start polymerization. For example, in the case of using potassium permanganate/ammonium oxalate, preferably, a polymerization vessel is charged with ammonium oxalate and potassium permanganate is continuously added thereto.

In the redox initiator herein, "potassium permanganate/ammonium oxalate" refers to a combination of potassium permanganate and ammonium oxalate. The same applies to other compounds.

The redox initiator used is preferably an oxidizing agent or a reducing agent capable of adjusting the pH of the redox initiator aqueous solution to 4.0 or more. The redox initiator aqueous solution means a 0.50% by mass aqueous solution of an oxidizing agent or a 0.50% by mass aqueous solution of a reducing agent.

That is, at least one of the 0.50% by mass aqueous solution of the oxidizing agent and the 0.50% by mass aqueous solution of the reducing agent may have a pH of 4.0 or more, and it is preferable that both the 0.50% by mass aqueous solution of the oxidizing agent and the 0.50% by mass aqueous solution of the reducing agent have a pH of 4.0 or more.

The pH of the redox initiator aqueous solution (0.50% by mass aqueous solution of oxidizing agent and 0.50% by mass aqueous solution of reducing agent) is more preferably 5.0 or more, still more preferably 5.5 or more, particularly preferably 6.0 or more.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium(IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably ammonium oxalate.

Specifically, the redox initiator preferably includes at least one selected from the group consisting of potassium permanganate/ammonium oxalate, potassium bromate/ammonium sulfite, manganese triacetate/ammonium oxalate, and ammonium cerium nitrate/ammonium oxalate, preferably at least one selected from the group consisting of potassium permanganate/ammonium oxalate, potassium bromate/ammonium sulfite, and ammonium cerium nitrate/ammonium oxalate.

Use of a redox initiator in the polymerization step can increase the molecular weight of the resulting PTFE. Therefore, the SSG can be made small and the PTFE is stretchable.

Use of a redox initiator in the polymerization step can also increase the number of PTFE particles generated in the aqueous dispersion. The yield of the resulting PTFE can also be increased.

When a redox initiator is used, the oxidizing agent and the reducing agent may be added all at once at the initial stage of polymerization, or the reducing agent may be added all at once at the initial stage of polymerization and the oxidizing agent may be added continuously. Alternatively, the oxidizing agent may be added all at once at the initial stage of polymerization and the reducing agent may be added continuously, or both the oxidizing agent and the reducing agent may be added continuously.

When a redox initiator is used as the polymerization initiator, the amount of the oxidizing agent added to the aqueous medium is preferably 5 to 10000 ppm, more preferably 10 to 1000 ppm, and the amount of the reducing agent added is preferably 5 to 10000 ppm, more preferably from 10 to 1000 ppm.

When a redox initiator is used in the polymerization step, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

The polymerization initiator may be added in any amount. For example, it may be added in an amount that does not significantly decrease the polymerization rate (e.g., concentration of several parts per million relative to water) or more at once in the initial stage of polymerization or successively or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces. More specifically, the amount of the polymerization initiator added is preferably 1 ppm or more, more preferably 10 ppm or more, still more preferably 50 ppm or more based on the aqueous medium. The amount of the polymerization initiator added is preferably 100000 ppm or less, more preferably 10000 ppm or less, still more preferably 5000 ppm or less.

The aqueous medium is a reaction medium in which polymerization is allowed to occur, and means a liquid that contains water. The aqueous medium may be any medium that contains water, and may be one containing water and, for example, a fluorine-free organic solvent such as an alcohol, ether, or ketone and/or a fluorine-containing organic solvent having a boiling point of 40°C or lower.

In the emulsion polymerization, a known chain transfer agent may be further added to adjust the polymerization rate and the molecular weight depending on the purpose.

Examples of the chain transfer agent include esters such as dimethyl malonate, diethyl malonate, methyl acetate, ethyl acetate, butyl acetate, and dimethyl succinate, as well as isopentane, methane, ethane, propane, isobutane, methanol, ethanol, isopropanol, acetone, various mercaptans, various halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the following formula:

$$R^aI_xBr_y$$

wherein x and y are each an integer of 0 to 2 and satisfy $1 \leq x + y \leq 2$; and $R^a$ is a saturated or unsaturated fluorohydrocarbon or chlorofluorohydrocarbon group containing 1 to 16 carbon atoms, or a hydrocarbon group containing 1 to 3 carbon atoms, each of which optionally contains an oxygen atom. Use of a bromine compound or an iodine compound allows iodine or bromine to be introduced into the polymer to serve as a crosslinking point.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

Of these, 1,4-diiodoperfluorobutane, 1,6-diiodoperfluorohexane, and 2-iodoperfluoropropane are preferably used from the viewpoints of polymerization reactivity, crosslinkability, availability, and the like.

The amount of the chain transfer agent used is usually 1 to 50000 ppm, preferably 1 to 20000 ppm, based on the total amount of the fluoromonomer fed.

The chain transfer agent may be added to the reaction vessel at once before initiation of the polymerization, may be added at once after initiation of the polymerization, may be added in multiple portions during the polymerization, or may be added continuously during the polymerization.

A PTFE aqueous dispersion can be obtained by the above production method. The PTFE aqueous dispersion normally contains PTFE, the compound (1) and/or the compound (2), and the aqueous medium. The PTFE aqueous dispersion may have any solid content concentration. For example, the solid content concentration may be 1.0 to 70% by mass. The solid content concentration is preferably 8.0% by mass or higher, more preferably 10.0% by mass or higher, while preferably 60.0% by mass or lower, more preferably 50.0% by mass or lower.

In the production method, the amount attached is preferably 3.0% by mass or less, more preferably 2.0% by mass or less, more preferably 1.0% by mass or less, still more preferably 0.8% by mass or less, further more preferably 0.7% by mass or less, particularly preferably 0.6% by mass or less, relative to the PTFE finally obtained.

The coagulation in the step (B) can be performed by a known method.

In the case of the PTFE aqueous dispersion, coagulation is normally performed by diluting the aqueous dispersion obtained by polymerization, such as polymer latex, to a polymer concentration of 10 to 25% by mass (preferably a polymer concentration of 10 to 20% by mass) using water, optionally adjusting the pH to a neutral or alkaline pH, and stirring the dilution in a container equipped with a stirrer more vigorously than the stirring during the reaction. In the coagulation, stirring may be performed with addition of a coagulant such as a water-soluble organic compound (e.g., methanol, acetone), an inorganic salt (e.g., potassium nitrate, ammonium carbonate), or an inorganic acid (e.g., hydrochloric acid, sulfuric acid, nitric acid). The coagulation may be performed continuously using a device such as an inline mixer.

The coagulation method preferably includes at least one selected from the group consisting of coagulation by stirring, ultrasonic coagulation, coagulation using ultrafine bubbles, coagulation using an alkali, coagulation using an acid, coagulation using an oxidizing agent, coagulation using an organic solvent, and coagulation using a radical generator. In the production method of the disclosure, non melt-processible PTFE is also preferably coagulated by stirring the aqueous dispersion as well as using at least one coagulation method selected from the group consisting of ultrasonic coagulation, coagulation using ultrafine bubbles, coagulation using an alkali, coagulation using an acid, coagulation using an oxidizing agent, coagulation using an organic solvent, and coagulation using a radical generator.

As described later, heat treatment at a relatively low temperature may fail to sufficiently reduce the amount of a fluorine-containing compound containing a hydrophilic group in the wet powder. In such a case, non melt-processible PTFE which can be extrusion-molded at a stable extrusion pressure may not be obtained. In contrast, heat treatment at too high a temperature provides non melt-processible PTFE whose extrusion pressure is too high, though it can reduce the amount of a fluorine-containing compound containing a hydrophilic group in the wet powder. A combination of heat treatment at a relatively low temperature and coagulation by the above method can successfully achieve both sufficient removal of a fluorine-containing compound containing a hydrophilic group and stabilization of low pressure extrusion.

The temperature of the aqueous dispersion for coagulating non melt-processible PTFE may be 3°C to 95°C. It may be 5°C or higher or 10°C or higher, while it may be 85°C or lower, 75°C or lower, or 60°C or lower.

In the coagulation by stirring, the aqueous dispersion is stirred strongly enough to coagulate the non melt-processible PTFE particles. Stirring can be performed, for example, using a container equipped with a stirrer. The coagulation by stirring may be performed continuously using a device such as an inline mixer.

In the ultrasonic coagulation, the aqueous dispersion is irradiated with ultrasonic waves strong enough to coagulate the non melt-processible PTFE particles.

The ultrasonic output is preferably 100 W or higher, more preferably 200 W or higher, still more preferably 300 W or higher, even more preferably 400 W or higher, particularly preferably 500 W or higher, while preferably 3000 W or lower, more preferably 1000 W or lower, still more preferably 800 W or lower.

The ultrasonic frequency is preferably 15 kHz or higher, more preferably 20 kHz or higher, still more preferably 25 kHz or higher, even more preferably 30 kHz or higher, particularly preferably 40 kHz or higher, while preferably 100

kHz or lower, more preferably 80 kHz or lower, still more preferably 50 kHz or lower.

The duration of ultrasonic irradiation is preferably 60 seconds or longer, more preferably 300 seconds or longer, while preferably 20 minutes or shorter.

Ultrasonic irradiation can be performed using a commercially available ultrasonic generator. Examples of ultrasonic irradiation devices include commercially available ultrasonic transmitting devices (e.g., ultrasonic homogenizer), ultrasonic transmitters, circulating ultrasonic irradiators, ultrasonic transducers, and ultrasonic cleaners.

Examples of specific methods for ultrasonic irradiation include irradiation performed by immersing a nozzle portion of an ultrasonic homogenizer in the aqueous dispersion, irradiation performed by immersing a throw-in ultrasonic transducer in a container into which the PTFE aqueous dispersion has been introduced, irradiation performed by introducing a container containing the PTFE aqueous dispersion into an ultrasonic cleaner preliminarily filled with an aqueous medium or the like, irradiation performed by introducing the PTFE dispersion into an ultrasonic cleaner or ultrasonic transmitter produced in the shape of a tank, and ultrasonic irradiation performed by introducing the PTFE aqueous dispersion into a tank equipped with a rod-shaped ultrasonic irradiator. Also preferred is ultrasonic irradiation of the aqueous dispersion with stirring of the aqueous dispersion.

In the coagulation using ultrafine bubbles, ultrafine bubbles in an amount enough to coagulate the non melt-processible PTFE particles are generated in the aqueous dispersion. Ultrafine bubbles refer to bubbles with a diameter of 1 $\mu$m or smaller. Ultrafine bubbles can be generated by irradiating the aqueous dispersion with ultrasonic waves to cause cavitation. Also preferred is stirring of the aqueous dispersion in which ultrafine bubbles have been generated.

The duration of treatment with ultrafine bubbles is preferably 60 seconds or longer, more preferably 300 seconds or longer, while preferably 20 minutes or shorter.

In the coagulation using an alkali, an alkali such as sodium hydroxide, potassium hydroxide, lithium hydroxide, or ammonia can be used. Ammonium hydrogen carbonate or ammonium carbonate is preferred as ammonia. The alkali preferably includes at least one selected from the group consisting of sodium hydroxide, potassium hydroxide, lithium hydroxide, and ammonia, more preferably sodium hydroxide. Also preferred is stirring of the aqueous dispersion containing the alkali.

When coagulation using an alkali is performed on the aqueous dispersion containing a fluorine-containing compound containing an anionic group as a fluorine-containing compound containing a hydrophilic group, the anionic group in the fluorine-containing compound is converted to a salt form, thereby increasing the water solubility of the fluorine-containing compound. Accordingly, the fluorine-containing compound is advantageously easily removed from the wet powder obtained by the coagulation by cleaning. The fluorine-containing compound containing a salt-form anionic group remaining in the wet powder after cleaning is difficult to volatilize, and therefore tends to be difficult to remove by heat treatment of the wet powder. Here, cleaning the wet powder with an acid prior to the heat treatment enables even more smooth reduction of the amount of the fluorine-containing compound. Accordingly, in a preferred embodiment, the wet powder obtained by coagulation using an alkali is cleaned with an acid, and the resulting wet powder is heat-treated.

In the coagulation using an acid, an organic acid or an inorganic acid can be used. The acid is preferably an inorganic acid because it is less likely to remain after heat treatment. In particular, the acid preferably includes at least one selected from the group consisting of nitric acid, sulfuric acid, fuming sulfuric acid, perchloric acid, and hydrochloric acid, more preferably includes at least one selected from the group consisting of nitric acid, sulfuric acid, and hydrochloric acid. Examples of the organic acid include succinic acid, oxalic acid, citric acid, and trifluoroacetic acid. The amount of the acid is not limited and may be determined as appropriate according to the pH of the aqueous dispersion or the like. Also preferred is stirring of the aqueous dispersion containing the acid.

In the coagulation using an oxidizing agent, at least one selected from the group consisting of inorganic acids and salts thereof can be used. Examples of inorganic acids include nitrous acid, nitric acid, sulfurous acid, sulfuric acid, persulfuric acid, hydrochloric acid, hypochlorous acid, chlorous acid, chloric acid, perchloric acid, hydrofluoric acid, bromic acid, iodic acid, phosphoric acid, boric acid, chromic acid, dichromic acid, and permanganic acid. Examples of salts of inorganic acids include sodium salt, potassium salt, ammonium salt, magnesium salt, calcium salt, aluminum salt, and silver salt. The oxidizing agent preferably includes at least one selected from the group consisting of nitric acid and its salts, and perchloric acid and its salts, more preferably includes at least one selected from the group consisting of nitrates and perchlorates, particularly preferably includes at least one selected from the group consisting of sodium nitrate, potassium nitrate, ammonium nitrate, and ammonium perchlorate. Two or more oxidizing agents may be used in combination. For example, an inorganic acid may be used in combination with an inorganic acid salt. Nitric acid may be used in combination with a nitrate (e.g., sodium nitrate, ammonium nitrate). Also preferred is stirring of the aqueous dispersion containing the oxidizing agent.

The amount of the oxidizing agent is preferably 0.01 to 20% by mass relative to the non melt-processible PTFE in the aqueous dispersion. The amount is more preferably 0.1% by mass or more, still more preferably 0.3% by mass or more, while more preferably 10% by mass or less, still more preferably 5% by mass or less. In one embodiment, the non melt-processible PTFE is coagulated by adding the oxidizing agent to the aqueous dispersion and stirring the aqueous dispersion.

In the coagulation using an organic solvent, the following organic solvents, for example, can be used:

alcohols;
carboxylic acids such as acetic acid, propionic acid, ethoxyacetic acid, and valeric acid;
esters such as methyl acetate, ethyl acetate, propyl acetate, butyl acetate, methyl propionate, ethyl propionate, propyl propionate, and dimethyl carbonate;
ketones such as methyl ethyl ketone, methyl isobutyl ketone, cyclohexanone, diacetone alcohol, and 3-methyl-2-cyclopentenone;
aromatic hydrocarbons such as benzene, toluene, and xylene; and
ethers such as diethyl ether, tetrahydrofuran, dioxane, diethylene glycol diethyl ether, and 1,2-dimethoxyethane.

The organic solvent is preferably an alcohol. The alcohol may be any of monohydric, dihydric, and trihydric alcohols. The alcohol is preferably a monohydric alcohol. The number of carbon atoms of the alcohol is preferably 2 to 7, more preferably 3 or more and 5 or less, still more preferably 4 or less. The organic solvent preferably includes at least one selected from the group consisting of methanol, 1-propanol, 2-propanol, 2-butanol, and 1-pentanol, more preferably at least one selected from the group consisting of 1-propanol, 2-propanol, 2-butanol, and 1-pentanol, still more preferably at least one selected from the group consisting of 1-propanol, 2-butanol, and 1-pentanol.

The organic solvent is preferably added in an amount equivalent to 1.0% by mass or more relative to the non melt-processible PTFE in the aqueous dispersion. The amount of the organic solvent used for coagulation is more preferably 5.0% by mass or more, still more preferably 10% by mass or more, particularly preferably 20% by mass or more, while preferably an amount equivalent to not more than 50 times, more preferably not more than 10 times, still more preferably not more than 5 times the weight of the non melt-processible TFE-based polymer. Also preferred is stirring of the aqueous dispersion containing the organic solvent.

In the coagulation using a radical generator, a water-soluble radical generator can be suitably used. Examples of the radical generator include organic peroxides, inorganic peroxides, organic azo compounds, and combinations of oxidizing agents and reducing agents. The radical generator preferably includes at least one selected from inorganic peroxides, organic peroxides, and combinations of oxidizing agents and reducing agents. In one embodiment, the non melt-processible PTFE is coagulated by adding the radical generator to the aqueous dispersion and heating the aqueous dispersion to a temperature equal to or higher than the decomposition temperature of the radical generator. Also preferred is stirring of the aqueous dispersion containing the radical generator.

The inorganic peroxides are preferably water-soluble inorganic peroxides. Examples of the inorganic peroxides include hydrogen peroxide, perchlorates, perborates, perphosphates, percarbonates, and persulfates. Preferred is a persulfate. The persulfate preferably includes at least one selected from the group consisting of ammonium persulfate, sodium persulfate, and potassium persulfate, more preferably ammonium persulfate.

The organic peroxides are preferably water-soluble organic peroxides. Examples of the organic peroxides include peroxydicarbonates such as disuccinic acid peroxide and digultaric acid peroxide.

A combination of an oxidizing agent and a reducing agent can be used as a radical generator. In use of a combination of an oxidizing agent and a reducing agent, radicals can be generated from the radical generator by a redox reaction between the oxidizing agent and the reducing agent, thus lowering the temperature during the heat treatment.

Examples of the oxidizing agent include a persulfate, an organic peroxide, potassium permanganate, manganese triacetate, and ammonium cerium nitrate. Examples of the reducing agent include a sulfite, bisulfite, bromate, diimine, and oxalic acid. Examples of the persulfate include ammonium persulfate and potassium persulfate. Examples of the sulfite include sodium sulfite and ammonium sulfite. In order to accelerate the decomposition speed of the oxidizing agent, addition of a copper salt or an iron salt is also preferred. An example of copper salts is copper(II) sulfate and an example of iron salts is iron(II) sulfate.

The temperature of heating the aqueous dispersion containing a radical generator may be any temperature that is not lower than the temperature at which the radical generator is decomposed to generate radicals (decomposition temperature). Still, the temperature is preferably 35°C or higher, more preferably 40°C or higher, still more preferably 45°C or higher, particularly preferably 50°C or higher, while preferably 120°C or lower, more preferably 110°C or lower, still more preferably 100°C or lower, particularly preferably 90°C or lower.

In the production method of the disclosure, the coagulum produced by the coagulation of the non melt-processible PTFE is collected, whereby a wet powder was obtained, preferably followed by cleaning of the wet powder. The cleaning may be performed once, or twice or more.

The cleaning method preferably includes at least one selected from the group consisting of cleaning by stirring, ultrasonic cleaning, cleaning using ultrafine bubbles, cleaning using an alkali, cleaning using an acid, and cleaning using a radical generator.

As described later, heat treatment at a relatively low temperature may fail to sufficiently reduce the amount of a fluorine-containing compound containing a hydrophilic group in the wet powder. In such a case, non melt-processible

PTFE which can be extrusion-molded at a stable extrusion pressure may not be obtained. In contrast, heat treatment at too high a temperature provides non melt-processible PTFE whose extrusion pressure is too high, though it can reduce the amount of a fluorine-containing compound containing a hydrophilic group in the wet powder. A combination of heat treatment at a relatively low temperature and cleaning by the above method can successfully achieve both sufficient removal of a fluorine-containing compound containing a hydrophilic group and stabilization of low pressure extrusion. A combination of heat treatment at a relatively low temperature, coagulation by the above method, and cleaning by the above method can more easily and successfully achieve both sufficient removal of a fluorine-containing compound containing a hydrophilic group and stabilization of low pressure extrusion.

The temperature for cleaning of the wet powder may be 3°C to 95°C. The temperature for cleaning of the wet powder may be 5°C or higher or 10°C or higher. The temperature for cleaning of the wet powder may be 85°C or lower, 75°C or lower, or 60°C or lower.

In the cleaning by stirring, the wet powder is put into water and the water is stirred. Stirring can be performed, for example, using a container equipped with a stirrer. The cleaning is preferably performed multiple times. When the cleaning is performed multiple times, the last cleaning is preferably performed at 30°C or lower.

In the ultrasonic cleaning, the wet powder is put into a liquid and the liquid is ultrasonicated. Examples of the liquid include water and an alcohol. The alcohol preferably includes at least one selected from the group consisting of methanol, 1-propanol, 2-propanol, 2-butanol, and 1-pentanol, more preferably methanol.

The ultrasonic output is preferably 100 W or higher, more preferably 200 W or higher, still more preferably 300 W or higher, even more preferably 400 W or higher, particularly preferably 500 W or higher, while preferably 3000 W or lower, more preferably 1000 W or lower, still more preferably 800 W or lower.

The ultrasonic frequency is preferably 15 kHz or higher, more preferably 20 kHz or higher, still more preferably 25 kHz or higher, even more preferably 30 kHz or higher, particularly preferably 40 kHz or higher, while preferably 100 kHz or lower, more preferably 80 kHz or lower, still more preferably 50 kHz or lower.

The duration of ultrasonic irradiation is preferably 60 seconds or longer, more preferably 300 seconds or longer, while preferably 180 minutes or shorter, more preferably 150 minutes or shorter, still more preferably 120 minutes or shorter, particularly preferably 20 minutes or shorter.

Ultrasonic irradiation can be performed using a commercially available ultrasonic generator. Examples of ultrasonic irradiation devices include commercially available ultrasonic transmitting devices (e.g., ultrasonic homogenizer), ultrasonic transmitters, circulating ultrasonic irradiators, ultrasonic transducers, and ultrasonic cleaners.

Examples of specific methods for ultrasonic irradiation of a powder and a liquid include irradiation performed by immersing a nozzle portion of an ultrasonic homogenizer in the liquid, irradiation performed by immersing a throw-in ultrasonic transducer in a container into which the liquid has been introduced, irradiation performed by introducing a container containing the liquid into an ultrasonic cleaner preliminarily filled with an aqueous medium or the like, irradiation performed by introducing the liquid into an ultrasonic cleaner or ultrasonic transmitter produced in the shape of a tank, and ultrasonic irradiation performed by introducing the liquid into a tank equipped with a rod-shaped ultrasonic irradiator.

In the cleaning using ultrafine bubbles, the wet powder is put into water and ultrafine bubbles are generated in the water. Ultrafine bubbles refer to bubbles with a diameter of 1 $\mu$m or smaller. Ultrafine bubbles can be generated by irradiating water with ultrasonic waves to cause cavitation.

The duration of the cleaning using ultrafine bubbles is preferably 60 seconds or longer, more preferably 300 seconds or longer, while preferably 20 minutes or shorter.

In the cleaning using an alkali, an alkali such as sodium hydroxide, potassium hydroxide, lithium hydroxide, or ammonia can be used. Ammonium hydrogen carbonate or ammonium carbonate is preferred as ammonia. The alkali preferably includes at least one selected from the group consisting of sodium hydroxide, potassium hydroxide, lithium hydroxide, and ammonia, more preferably sodium hydroxide.

When cleaning using an alkali is performed on the wet powder containing a fluorine-containing compound containing an anionic group as a fluorine-containing compound containing a hydrophilic group, the anionic group in the fluorine-containing compound is converted to a salt form, thereby increasing the water solubility of the fluorine-containing compound. Accordingly, the fluorine-containing compound is advantageously easily removed from the obtained wet powder by cleaning. The fluorine-containing compound containing a salt-form anionic group remaining in the wet powder after cleaning is difficult to volatilize, and therefore tends to be difficult to remove by heat treatment of the wet powder. Here, cleaning the wet powder with an acid prior to the heat treatment enables even more smooth reduction of the amount of the fluorine-containing compound. Accordingly, in a preferred embodiment, the wet powder is cleaned using an alkali and then cleaned with an acid, followed by heat treatment of the resulting wet powder.

In the cleaning using an acid, an organic acid or an inorganic acid can be used. The acid is preferably an inorganic acid because it is less likely to remain after heat treatment. In particular, the acid preferably includes at least one selected from the group consisting of nitric acid, sulfuric acid, fuming sulfuric acid, perchloric acid, and hydrochloric acid, more preferably includes at least one selected from the group consisting of nitric acid, sulfuric acid, and hydrochloric acid. Examples of the organic acid include succinic acid, oxalic acid, citric acid, and trifluoroacetic acid. The amount of

the acid is not limited and may be determined as appropriate according to the pH of the water containing the powder or the like. In one embodiment, cleaning is performed by putting the wet powder and an acid into water and stirring the water.

In the cleaning using a radical generator, a water-soluble radical generator can be suitably used. Examples of the radical generator include organic peroxides, inorganic peroxides, organic azo compounds, and combinations of oxidizing agents and reducing agents. The radical generator preferably includes at least one selected from inorganic peroxides, organic peroxides, and combinations of oxidizing agents and reducing agents. In one embodiment, cleaning is performed by putting the wet powder and a radical generator into water, heating the water to a temperature equal to or higher than the decomposition temperature of the radical generator, and stirring the water.

As the radical generator used for the cleaning, the radical generator used in the coagulation using a radical generator can be used.

The temperature of heating the water may be any temperature that is not lower than the temperature at which the radical generator is decomposed to generate radicals (decomposition temperature). Still, the temperature is preferably 35°C or higher, more preferably 40°C or higher, still more preferably 45°C or higher, particularly preferably 50°C or higher, while preferably 120°C or lower, more preferably 110°C or lower, still more preferably 100°C or lower, particularly preferably 90°C or lower.

In the production method of the disclosure, after cleaning of the wet powder, the resulting powder is preferably subjected to heat treatment. The heat treatment can be performed as the step (C).

The water content of the wet powder to be heated is preferably 10% by mass or higher, more preferably 20% by mass or higher, still more preferably 30% by mass or higher, while preferably 150% by mass or lower, more preferably 100% by mass or lower relative to the wet powder.

The heat treatment temperature is preferably 10°C to 280°C. The heat treatment temperature may be 100°C or higher, 120°C or higher, 130°C or higher, 140°C or higher, 150°C or higher, or 160°C or higher. The heat treatment temperature may be 230°C or lower, 210°C or lower, 200°C or lower, 190°C or lower, 185°C or lower, or 180°C or lower. In the production method of the disclosure, the heat treatment is preferably performed at a relatively low temperature as above. The heat treatment at a relatively low temperature can reduce the amount of a fluorine-containing compound containing a hydrophilic group, leading to the production of non melt-processible PTFE which can be extrusion-molded at a low and stable extrusion pressure.

The duration of the heat treatment is preferably 5 to 3000 minutes. The duration of the heat treatment may be 10 minutes or longer, 15 minutes or longer, 20 minutes or longer, 30 minutes or longer, 50 minutes or longer, 100 minutes or longer, 150 minutes or longer, or 200 minutes or longer. The duration of the heat treatment may be 2500 minutes or shorter or 2000 minutes or shorter. In the production method of the disclosure, the heat treatment is preferably performed at a relatively low temperature for a relatively long period of time.

The heat treatment may be performed in the air. When the heat treatment is performed in oxygen-rich gas or ozone-containing gas, reduction of the amount of a fluorine-containing compound containing a hydrophilic group can be further promoted.

The heat treatment is preferably performed by a method of bringing the wet powder into contact with hot air or a method of heating the wet powder in the presence of water vapor. Heat treatment at a relatively low temperature may fail to sufficiently reduce the amount of a fluorine-containing compound containing a hydrophilic group in the wet powder. In such a case, non melt-processible PTFE which can be extrusion-molded at a stable extrusion pressure may not be obtained. In contrast, heat treatment at too high a temperature provides non melt-processible PTFE whose extrusion pressure is too high, though it can reduce the amount of a fluorine-containing compound containing a hydrophilic group in the wet powder. The heat treatment using hot air or water vapor, in addition to the heat treatment of the wet powder within the above temperature range, can successfully achieve both sufficient removal of a fluorine-containing compound containing a hydrophilic group and stabilization of low pressure extrusion.

The heat treatment using hot air can be performed by blowing hot air to the wet powder. In one embodiment, the wet powder is placed in a container with air permeability on the bottom and/or sides, and hot air is blown to the placed wet powder. In another embodiment, the wet powder is placed in a dryer, and hot air is circulated in the dryer to blow hot air.

The wind speed of the hot air blown to the wet powder may be 0.01 m/s or higher, 0.03 m/s or higher, 0.05 m/s or higher, 0.10 m/s or higher, 0.20 m/s or higher, 0.30 m/s or higher, or 0.40 m/s or higher. The wind speed of the hot air blown to the wet powder may be 10 m/s or lower, 5.0 m/s or lower, 3.0 m/s or lower, 2.0 m/s or lower, or 1.0 m/s or lower.

The treatment time in the heat treatment method in which the wet powder is placed in a container with air permeability on the bottom and/or sides and hot air is blown to the placed wet powder (also referred to as "through-flow drying treatment" in the disclosure) may be 5 minutes or longer, 10 minutes or longer, 15 minutes or longer, 20 minutes or longer, 30 minutes or longer, 40 minutes or longer, 50 minutes or longer, 60 minutes or longer, or 80 minutes or longer, and may be 300 minutes or shorter or 200 minutes or shorter.

The temperature of the hot air blown to the wet powder is as described above as the heat treatment temperature. The treatment temperature (temperature of hot air) in the through-flow drying treatment may be higher than 150°C,

155°C or higher, 160°C or higher, 165°C or higher, 170°C or higher, 175°C or higher, or 180°C or higher. The treatment temperature (temperature of hot air) in the through-flow drying treatment may be 260°C or lower, 235°C or lower, 230°C or lower, 225°C or lower, 220°C or lower, 215°C or lower, or 210°C or lower.

In the through-flow drying treatment, for example, the treatment temperature (temperature of hot air) can be set to higher than 250°C but not higher than 280°C and the treatment time can be set to 50 minutes or shorter. Alternatively, in the through-flow drying treatment, for example, the treatment temperature (temperature of hot air) can be set to higher than 200°C but not higher than 250°C and the treatment time can be set to 100 minutes or shorter. Further alternatively, in the through-flow drying treatment, for example, the treatment temperature (temperature of hot air) can be set to higher than 150°C but not higher than 200°C and the treatment time can be set to 200 minutes or shorter.

The wind speed of the hot air in the through-flow drying treatment may be 0.01 m/s or higher, 0.03 m/s or higher, 0.05 m/s or higher, or 0.10 m/s or higher. The wind speed of the hot air in the through-flow drying treatment may be 10 m/s or lower, 5.0 m/s or lower, 3.0 m/s or lower, 2.0 m/s or lower, or 1.0 m/s or lower.

In the case where an electric furnace is used in the heat treatment step, the amount of gas, air, or water vapor supplied to the electric furnace, the amount of gas, air, or water vapor circulated in the electric furnace, and the amount of gas, air, or water vapor discharged from the electric furnace can be adjusted.

The percentage of the amount of gas, air, or water vapor discharged from the electric furnace may be 3% by volume or more, 5% by volume or more, or 10% by volume or more, and may be 95% by volume or less, 80% by volume or less, or 75% by volume or less, relative to the amount thereof circulating in the electric furnace.

The percentage of the amount of gas, air, or water vapor discharged from the electric furnace in the through-flow drying treatment may be 3% by volume or more, 5% by volume or more, or 10% by volume or more, and may be 50% by volume or less, 40% by volume or less, or 30% by volume or less, relative to the amount thereof circulating in the electric furnace.

The percentage of the amount of gas, air, or water vapor discharged from the electric furnace in hot air circulation drying treatment may be 10% by volume or more, 20% by volume or more, or 30% by volume or more, and may be 95% by volume or less, 80% by volume or less, or 75% by volume or less, relative to the amount thereof circulating in the electric furnace.

When the heat treatment temperature is higher than 200°C, the percentage of the amount of gas, air, or water vapor discharged from the electric furnace may be 3% by volume or more, 5% by volume or more, or 10% by volume or more, and may be 50% by volume or less, 40% by volume or less, or 30% by volume or less, relative to the amount thereof circulating in the electric furnace.

When the heat treatment temperature is 200°C or lower, the percentage of the amount of gas, air, or water vapor discharged from the electric furnace may be 10% by volume or more, 20% by volume or more, or 30% by volume or more, and may be 95% by volume or less, 80% by volume or less, or 75% by volume or less, relative to the amount thereof circulating in the electric furnace.

The treatment time in the heat treatment method in which the wet powder is placed in a dryer and hot air is circulated in the dryer to blow hot air (also referred to as "hot air circulation drying treatment" in the disclosure) may be 120 minutes or longer, 180 minutes or longer, 240 minutes or longer, or 300 minutes or longer, and may be 1500 minutes or shorter, or 1200 minutes or shorter.

The temperature of the hot air blown to the wet powder is as described above as the heat treatment temperature. The treatment temperature (temperature of hot air) in the hot air circulation drying treatment may be higher than 150°C, 155°C or higher, 160°C or higher, 165°C or higher, 170°C or higher, 175°C or higher, or 180°C or higher, and may be 235°C or lower, 230°C or lower, 225°C or lower, 220°C or lower, 215°C or lower, or 210°C or lower.

The wind speed of the hot air in the hot air circulation drying treatment may be 0.10 m/s or higher, 0.50 m/s or higher, or 1.0 m/s or higher, and may be 10 m/s or lower, or 5.0 m/s or lower.

The heat treatment may be performed on the wet powder in a state of being placed in a container with air permeability on the bottom and/or sides. The container with air permeability on the bottom and/or sides may be any container capable of withstanding the heat treatment temperature. Preferably, it is made of metal such as stainless steel.

The container with air permeability on the bottom and/or sides is preferably a tray (bat) having air permeability on the bottom and/or sides, more preferably a tray (mesh tray) having the bottom and/or sides made of mesh. The mesh is preferably either a woven net or punched metal. When the mesh is a woven net, the woven net may be, for example, a plain-woven mesh, a twilled-woven mesh, a plain dutch-woven mesh, or a twilled dutch-woven mesh. Further, a mesh and a fabric may be combined.

The fabric may be in the form of a perforated pan liner used in tray drying in an oven or a continuous belt operated in an oven. In the case of a continuous belt, the process is carried out continuously. Specifically, the coagulum is continuously placed at one end of the belt passage and the refined PTFE fine particles are continuously collected from the opposite end of the belt passage. Here, a shallow bed of the coagulum is continuously exposed to heated air as it moves along the passage from one end to the opposite end. In either form, the fabric is a direct support for the coagulum and can be reused by additional polymer purification.

The fabric may have any structure. It may be, for example, a knitted fabric, spunbonded fabric, or woven fabric that provides the dimensional integrity required by the form of the fabric. In the case of a knitted or woven fabric structure, the fabric is formed from yarn. In the case of a spunbonded structure, the fabric is typically formed from fiber. The yarns or fibers constituting the fabric provide, in some cases, openings between the yarns or fibers constituting the fabric. The openings allow the heated air to pass through during the purification step but hold the PTFE coagulum/fine powder particles thereon (i.e., do not allow the PTFE fine powder to pass through). The openings in the fabric must be small for the purpose of holding the PTFE fine powder but must be big enough to allow the heated air or vaporized contaminants to pass through at a sufficient speed that enables purification in an appropriate contact time with hot air.

The opening of the mesh is preferably 2000 μm or less (mesh No. 10 or higher (ASTM)), more preferably 595 μm or less (mesh No. 30 or higher), still more preferably 297 μm or less (mesh No. 50 or higher), further more preferably 177 μm or less (mesh No. 80 or higher), even more preferably 149 μm or less (mesh No. 100 or higher), particularly preferably 74 μm or less (mesh No. 200 or higher). The opening is preferably 25 μm or more (mesh No. 500 or lower).

When the mesh is a punched metal, the porosity is preferably 10% or higher, more preferably 20% or higher, still more preferably 30% or higher. The porosity is preferably 95% or lower.

The amount of the wet powder placed is preferably 10 $g/cm^2$ or less, more preferably 8 $g/cm^2$ or less, still more preferably 5 $g/cm^2$ or less, particularly preferably 3 $g/cm^2$ or less, while preferably 0.01 $g/cm^2$ or more, more preferably 0.05 $g/cm^2$ or more, still more preferably 0.1 $g/cm^2$ or more.

The heat treatment using water vapor can be performed by blowing high-temperature steam to the wet powder. In one embodiment, the wet powder is placed in a container with air permeability on the bottom and/or sides, and high-temperature steam is blown to the placed wet powder.

The heat treatment using water vapor can be performed at normal pressure or under increased pressure. The pressure for the heat treatment using water vapor may be 0.10 to 4.0 MPa. The pressure for the heat treatment under increased pressure may be higher than 0.10 MPa and not higher than 0.2 MPa.

The heat treatment using water vapor may be performed under reduced pressure. The pressure for the heat treatment under reduced pressure may be lower than 0.10 MPa or 0.09 MPa or lower, and may be 0.01 MPa or higher.

The treatment time in the heat treatment using water vapor may be 5 minutes or longer, 10 minutes or longer, 15 minutes or longer, 30 minutes or longer, or 40 minutes or longer, and may be 10 hours or shorter, 8 hours or shorter, 6 hours or shorter, or 4 hours or shorter.

The temperature of the water vapor blown to the wet powder is as described above as the heat treatment temperature. The treatment temperature (temperature of water vapor) in the heat treatment using water vapor may be 100°C or higher, 120°C or higher, 140°C or higher, 160°C or higher, or 170°C or higher, and may be 350°C or lower, 300°C or lower, 250°C or lower, 230°C or lower, or 210°C or lower.

The amount of heated vapor generated in the heat treatment using water vapor may be 1 kg/h or more, 3 kg/h or more, 5 kg/h or more, or 10 kg/h or more, and may be 500 kg/h or less, 300 kg/h or less, 100 kg/h or less, 50 kg/h or less, or 30 kg/h or less.

The heat treatment can be performed using an electric furnace or a steam furnace. For example, the heat treatment may be performed with an electric furnace such as a co-flow box electric furnace, a ventilated box electric furnace, a ventilated conveyor electric furnace, a tunnel electric furnace, a band electric furnace, a vertical electric turbo furnace, a radiant conveyor electric furnace, a fluidized bed electric furnace, a ventilated rotary electric furnace, a grooved stirring electric furnace, a multi-stage disc-type electric furnace, a vacuum electric furnace, a cylindrical electric furnace, a vibrating electric furnace, a freezing electric furnace, a drum electric furnace, a grooved electric furnace, an inverted conical electric furnace, an extruding electric furnace, a steam tube rotary electric furnace, an infrared electric furnace, a superheated steam electric furnace, a high-frequency electric furnace, a microwave electric furnace, a stirring electric furnace, an convection electric furnace, or a hot air circulating electric furnace, or a steam furnace corresponding to any of the foregoing electric furnaces (a device of the type defined by replacing the "electric furnace" in the device name of the foregoing electric furnace with "steam furnace").

The wet powder is also preferably dried by the heat treatment. When the wet powder is heated in the presence of water vapor at normal pressure or under increased pressure, the wet powder is normally not sufficiently dried. In such a case, the wet powder is preferably dried after the heat treatment, whereby a non melt-processible PTFE powder is obtained.

Through the heat treatment or a combination of the heat treatment and drying of the wet powder, normally, a non melt-processible PTFE powder obtained has a water content of 0.01% by mass or less or 0.005% by mass or less relative to the wet powder.

In the step (C), the drying is typically performed by means such as vacuum, high frequency, or hot air, while the wet powder is kept in a state where it does not flow so much, preferably in a stationary state. Friction between powders, especially at high temperatures generally has an unfavorable effect on fine powder PTFE. This is because particles made of PTFE of this type are easily fibrillated even by a small shearing force to lose their original stable particle structure.

In order to lower the extrusion pressure, the drying temperature is preferably 300°C or lower, more preferably 250°C or lower, still more preferably 230°C or lower, further more preferably 210°C or lower, further more preferably 190°C or lower, particularly preferably 170°C or lower. In order to achieve improved tensile strength at break, the drying temperature is preferably 10°C or higher, more preferably 100°C or higher, still more preferably 150°C or higher, further more preferably 170°C or higher, further more preferably 190°C or higher, particularly preferably 210°C or higher. In order to further increase the strength ratio, the drying temperature is preferably appropriately adjusted within this temperature range.

The step (C) preferably includes placing the wet powder obtained in the step (B) in a container with air permeability on the bottom and/or sides and heating the powder at a temperature of 130°C to 300°C for two hours or longer. Such a heat treatment under extremely limited conditions as described above can efficiently remove the fluorine-containing compound having a molecular weight of 1000 or less together with water, setting the amounts of the compounds (1) and (2) described above and water within the above ranges.

In order to more efficiently remove water and the fluorine-containing compound, the temperature of the heat treatment in the step (C) is preferably 140°C or higher, more preferably 150°C or higher, still more preferably 160°C or higher, further more preferably 180°C or higher, still more preferably 200°C or higher, particularly preferably 220°C or higher, while preferably 280°C or lower, more preferably 250°C or lower.

In order to more efficiently remove water and the fluorine-containing compound, the duration of the heat treatment in the step (C) is preferably 5 hours or longer, more preferably 10 hours or longer, still more preferably 15 hours or longer. The upper limit is not limited. Still, it is preferably 100 hours, more preferably 50 hours, still more preferably 30 hours, for example.

In order to more efficiently remove water and the fluorine-containing compound, the wind speed in the step (C) is preferably 0.01 m/s or higher, more preferably 0.03 m/s or higher, still more preferably 0.05 m/s or higher, further more preferably 0.1 m/s or higher. In order to reduce or prevent powder scattering, the wind speed is preferably 50 m/s or lower, more preferably 30 m/s or lower, still more preferably 10 m/s or lower.

The heat treatment in the step (C) can be performed using an electric furnace or a steam furnace. For example, the heat treatment may be performed with an electric furnace such as a co-flow box electric furnace, a ventilated box electric furnace, a ventilated conveyor electric furnace, a band electric furnace, a radiant conveyor electric furnace, a fluidized bed electric furnace, a vacuum electric furnace, a stirring electric furnace, an convection electric furnace, or a hot air circulating electric furnace, or a steam furnace corresponding to any of the foregoing electric furnaces (a device of the type defined by replacing the "electric furnace" in the device name of the foregoing electric furnace with "steam furnace"). In order to more efficiently remove water, preferred are a co-flow box electric furnace, a ventilated box electric furnace, a ventilated conveyor electric furnace, a band electric furnace, a fluidized bed electric furnace, a hot air circulating electric furnace, and steam furnaces corresponding to the forgoing furnaces (devices of the types determined by replacing the "electric furnace" in the device names of the foregoing electric furnaces with "steam furnace").

In the heat treatment in the step (C), in order to more efficiently remove water and the fluorine-containing compound, the wet powder is placed in a container with air permeability on the bottom and/or sides. The container with air permeability on the bottom and/or sides may be any container capable of withstanding the heat treatment temperature. Preferably, it is made of metal such as stainless steel.

The container with air permeability on the bottom and/or sides is preferably a tray (bat) having air permeability on the bottom and/or sides, more preferably a tray (mesh tray) having the bottom and/or sides made of mesh.

The mesh is preferably either a woven net or punched metal.

The opening of the mesh is preferably 2000 μm or less (mesh No. 10 or higher (ASTM)), more preferably 595 μm or less (mesh No. 30 or higher), still more preferably 297 μm or less (mesh No. 50 or higher), further more preferably 177 μm or less (mesh No. 80 or higher), even more preferably 149 μm or less (mesh No. 100 or higher), particularly preferably 74 μm or less (mesh No. 200 or higher). The opening is preferably 25 μm or more (mesh No. 500 or lower).

When the mesh is a woven net, the woven net may be, for example, a plain-woven mesh, a twilled-woven mesh, a plain dutch-woven mesh, or a twilled dutch-woven mesh.

When the mesh is a punched metal, the porosity is preferably 10% or higher, more preferably 20% or higher, still more preferably 30% or higher. The porosity is preferably 95% or lower.

In order to more efficiently remove water and the fluorine-containing compound, the amount of the wet powder placed in the step (C) is preferably 10 $g/cm^2$ or less, more preferably 8 $g/cm^2$ or less, still more preferably 5 $g/cm^2$ or less, particularly preferably 3 $g/cm^2$ or less, while preferably 0.01 $g/cm^2$ or more, more preferably 0.05 $g/cm^2$ or more, still more preferably 0.1 $g/cm^2$ or more.

In order to more efficiently remove water and the fluorine-containing compound, the water content of the wet powder to be heated in the step (C) is preferably 10% by mass or higher, more preferably 20% by mass or higher, still more preferably 30% by mass or higher, while preferably 150% by mass or lower, more preferably 100% by mass or lower relative to the wet powder.

The PTFE fine powder of the disclosure has excellent physical properties that are not inferior in any way to

those of conventionally known PTFE fine powders, and can be used in the same manner and for the same applications as conventionally known PTFE fine powders.

The PTFE fine powder of the disclosure is particularly useful as a raw material for molded articles. In a preferred aspect, the disclosure also relates to a molded article containing the PTFE fine powder of the disclosure.

The molded article can be obtained by molding the PTFE fine powder of the disclosure.

The molding may be performed by any method, typically by paste extrusion.

The paste extrusion can be performed under the conditions appropriately set in accordance with, for example, the desired shape and application of the molded article. For example, the PTFE fine powder is mixed with an extrusion aid, aged for about 1 to 24 hours, pre-molded at a pressure of 0.5 to 5.0 MPa, and extruded at an extrusion pressure of 2 to 100 MPa, followed by sintering at 360°C to 460°C.

The molded article is suitably used as a product required to have heat resistance and/or chemical resistance, such as a printed board, an electric wire coating, or a tube, in the fields of, for example, aircraft, automobiles, medical equipment, and precision instrument. In particular, the molded article is preferably used as an electric wire coating material required to have core wire adhesion strength or a tube for medical use.

The embodiments have been described above, and it will be understood that various changes in form or detail can be made without departing from the gist and scope of the claims.

## EXAMPLES

The disclosure is more specifically described hereinbelow with reference to examples, but the disclosure is not limited to these examples.

Various physical properties were measured by the following methods.

<Polymer solid concentration>

A PTFE aqueous dispersion in an amount of 1 g was dried in an air dryer at 150°C for 60 minutes, and the ratio of the mass of the heating residue to the mass (1 g) of the aqueous dispersion, expressed as a percentage, was used as the polymer solid concentration.

<Average primary particle size>

A PTFE aqueous dispersion was diluted with water to a solid content concentration of 0.15% by mass. The transmittance of 550-nm light relative to the unit length of the resulting diluted latex was measured. The Feret diameters in a transmission electron microscopic image were measured and the number-based length average primary particle size was determined therefrom. A calibration curve was obtained from these values. Using this calibration curve, the average primary particle size was determined from the measured transmittance of 550-nm light incident on each sample.

<Water content>

The mass of the PTFE composition in an amount of about 20 g was weighed before and after heating at 150°C for two hours, and the water content was calculated by the following formula. The sample was taken three times, and this calculation was performed for each sample, and the values were then averaged. This average was taken as the water content.

Water content (% by mass) = [(mass (g) of PTFE composition before heating) - (mass (g) of PTFE composition after heating)]/(mass (g) of PTFE composition before heating) × 100

<Standard specific gravity (SSG)>

The SSG was determined by the water displacement method in conformity with ASTM D792 using a sample molded in conformity with ASTM D4895-89.

<Thermal instability index (TII)>

The thermal instability index was measured in conformity with ASTM D4895-89.

<Amount of modifying monomer>

The PTFE composition was press-molded into a thin-film disc and the thin-film disc was subjected to FT-IR measurement, so that infrared absorbances were obtained. The HFP content was determined by multiplying the ratio (absorbance at 982 $cm^{-1}$)/(absorbance at 935 $cm^{-1}$) by 0.3.

<Endothermic peak temperature>

The endothermic peak temperature was measured as follows. About 10 mg of a composition of PTFE that had never been heated to 300°C or higher was precisely weighed out, and placed in a special aluminum pan, followed by simultaneous thermogravimetry/differential thermal analysis (TG-DTA). The endothermic peak temperature was defined as the temperature corresponding to the minimum value on the differential thermal analysis (DTA) curve obtained by increasing the temperature of the aluminum pan in a temperature range from 25°C to 600°C at a rate of 10°C/min in the air atmosphere.

<0.1% Mass reduction temperature>

About 10 mg of a composition of PTFE that had never been heated to 300°C or higher was precisely weighed out, and placed in a special aluminum pan, followed by simultaneous thermogravimetry/differential thermal analysis (TG-DTA). The 0.1% mass reduction temperature was defined as a temperature corresponding to a point at which the weight was reduced by 0.1 mass% when the temperature of the aluminum pan was increased in a temperature range from 25°C to 600°C at a rate of 10°C/min in the air atmosphere.

<1.0% Mass reduction temperature>

About 10 mg of a composition of PTFE that had never been heated to 300°C or higher was precisely weighed out, and placed in a special aluminum pan, followed by simultaneous thermogravimetry/differential thermal analysis (TG-DTA). The 1.0% mass reduction temperature was defined as a temperature corresponding to a point at which the weight was reduced by 1.0 mass% when the temperature of the aluminum pan was increased in a temperature range from 25°C to 600°C at a rate of 10°C/min in the air atmosphere.

<Extrusion pressure>

The extrusion pressure was measured by the following method in conformity with the method described in JP 2002-201217 A.

To 100 g of the PTFE composition was added 21.7 g of lubricant (trade name: Isopar H (registered trademark), ExxonMobil Corp.), followed by mixing at room temperature for three minutes in a glass bottle. Next, the glass bottle was left to stand for at least one hour at room temperature (25°C) before extrusion, whereby a lubricated resin was obtained. The lubricated resin was paste-extruded through an orifice (diameter: 2.5 mm, land length: 11 mm, introduction angle: 30°) at room temperature at a reduction ratio of 100:1, whereby uniform beadings (extrudates) were obtained. The extrusion speed, i.e., ram speed was set to 20 inches/min (51 cm/min). The load at which the pressure was in equilibrium in the paste extrusion was measured, and the obtained value was divided by the cylinder cross-sectional area used in the paste extrusion, whereby the extrusion pressure was calculated.

<Expansion test>

The expansion test and the measurement of the tensile strength at break were performed by the following method in conformity with the method described in JP 2002-201217 A.

A beading obtained by the above paste extrusion was heated at 230°C for 30 minutes, whereby the lubricant was removed from the beading. The beading (extrudate) was cut to an appropriate length and the resulting sample was clamped at each end with a gap between the clamps of 1.5 inches (38 mm), followed by heating to 300°C in an air-circulating furnace. The clamps were then moved apart at a desired speed (stretching speed) until the separation distance corresponded to the desired degree of stretching (total degree of stretching). The expansion test (stretching test) was performed in this manner. The stretching method was essentially in conformity with the method disclosed in US 4576869 B, except that the extrusion speed was different (51 cm/min, not 84 cm/min). The "degree of stretching" shows the increase in length attributable to expansion, and is typically expressed in relation to the original length. In the above stretching method, the stretching speed was 1000%/sec and the total degree of stretching was 2400%. Beadings that did not break during the expansion test were evaluated as expandable.

<Tensile strength at break>

An expanded beading (article produced by stretching a beading) obtained in the above expansion test was clamped between movable jaws with a gauge length of 5.0 cm to be fixed, and subjected to a tensile test at 25°C at a rate of 300 mm/min. The strength at break was measured as the tensile strength at break.

<Amount of specific compound containing fluorine>

The amount was measured by liquid chromatography mass spectrometry under the following conditions.

<Method of measuring the amount of compound represented by the formula (1)>

Extraction from composition

To a 1-g portion of the composition was added 10 g (12.6 mL) of methanol, followed by ultrasonication for 60 minutes, whereby a supernatant solution containing the compound represented by the formula (1) was extracted. The resulting extract was appropriately concentrated by nitrogen purge, whereby a concentrated extract was obtained.

Measurement of the amount of compound represented by the formula (1) contained in extract

The amount of the compound represented by the formula (1) contained in the extract was obtained by conversion to perfluorooctanoic acid.

Calibration curve for perfluorooctanoic acid

Methanol standard solutions having five different known levels from 1 ng/mL to 100 ng/mL of perfluorooctanoic acid were prepared, and analyzed using a liquid chromatograph mass spectrometer (Waters, LC-MS ACQUITY UPLC/TQD). By first order approximation based on the sample concentrations and the peak integral values, the values of a and b were obtained by the following relational expression (1).

$$A = a \times X + b \quad (1)$$

A: Peak area of perfluorooctanoic acid
X: Concentration (ng/mL) of perfluorooctanoic acid

Instrument configuration and LC-MS measurement conditions

[Table 1]

| | | | | |
|---|---|---|---|---|
| LC system | | | | |
| | Device | Acquity UPLC from Waters | | |
| | Column | Acquity UPLC BEH C18 1.7 μm (2.1 × 50 mm) from Waters | | |
| | Mobile phase | A $CH_3CN$ | | |
| | | B 20 mM $CH_3COONH_4/H_2O$ | | |
| | | | 0 → 1.5 min | AB = 10:90 |
| | | | 1.5 → 8.5 min | AB = 10:90 → AB = 90:10 Linear gradient |
| | | | 8.5 → 10 min | AB = 90:10 |
| | Flow rate | | 0.4 mL/min | |
| | Column temperature | 40°C | | |
| | Sample injection amount | 5 μL | | |
| MS system | | | | |
| | Device | TQ Detecter | | |

(continued)

| MS system | | |
|---|---|---|
| | Measurement mode | MRM (Multiple Reaction Monitoring) |
| | Ionization method | Electrospray ionization<br>Negative mode |

MRM measurement parameter

[Table 2]

| Compound | Precursor | Product |
|---|---|---|
| Perfluorooctanoic acid | 413 | 369 |

Amount of compound represented by formula (1) containing 4 to 20 carbon atoms in extract

The amount of the compound represented by the formula (1) containing 4 to 20 carbon atoms was determined using a liquid chromatograph-mass spectrometer. For the extracted liquid phase, the peak areas of the compositions represented by the formula (1) with respective numbers of carbon atoms were determined by the MRM method.

MRM measurement parameter

[Table 3]

| Compound name | Number of carbon atoms | Precursor | Product |
|---|---|---|---|
| $(H-(CF_2)_3-COO)M$ | 4 | 195 | 131 |
| $(H-(CF_2)_4-COO)M$ | 5 | 245 | 181 |
| $(H-(CF_2)_5-COO)M$ | 6 | 295 | 231 |
| $(H-(CF_2)_6-COO)M$ | 7 | 345 | 281 |
| $(H-(CF_2)_7-COO)M$ | 8 | 395 | 331 |
| $(H-(CF_2)_8-COO)M$ | 9 | 445 | 381 |
| $(H-(CF_2)_9-COO)M$ | 10 | 495 | 431 |
| $(H-(CF_2)_{10}-CQQ)M$ | 11 | 545 | 481 |
| $(H-(CF_2)_{11}-COO)M$ | 12 | 595 | 531 |
| $(H-(CF_2)_{12}-COO)M$ | 13 | 645 | 581 |
| $(H-(CF_2)_{13}-COO)M$ | 14 | 695 | 631 |
| $(H-(CF_2)_{14}-COO)M$ | 15 | 745 | 681 |
| $(H-(CF_2)_{15}-COO)M$ | 16 | 795 | 731 |
| $(H-(CF_2)_{16}-COO)M$ | 17 | 845 | 781 |
| $(H-(CF_2)_{17}-COO)M$ | 18 | 895 | 831 |
| $(H-(CF_2)_{18}-COO)M$ | 19 | 945 | 881 |
| $(H-(CF_2)_{19}-COO)M$ | 20 | 995 | 931 |

The amount of the compound represented by the formula (1) containing m carbon atoms in the extract was calculated using the following equation (3). The values of a and b in the equation (3) were determined using the relational expression (1).

$$Xcm = ((ACm - b)/a) \times ((50 \times m + 45)/413) \quad (3)$$

XCm: Amount (ng/mL) of the compound represented by the formula (1) containing m carbon atoms in the extract
ACm: Peak area of the compound represented by the formula (1) containing m carbon atoms in the extract
The quantitation limit in this measurement method is 1 ng/mL.

Amount of compound represented by formula (1) containing m carbon atoms in composition

The amount of the compound represented by the formula (1) containing m carbon atoms in the composition was determined using the following equation (4).

$$YCm = XCm \times 12.6 \quad (4)$$

YCm: Amount (ppb relative to PTFE) of the compound represented by the formula (1) containing m carbon atoms in the composition
The quantitation limit was 10 ppb by mass.

(Method of measuring the amount of compound represented by the formula (2))

Extraction from composition

To a 1-g portion of the composition was added 10 g (12.6 mL) of methanol, followed by ultrasonication for 60 minutes, whereby a supernatant solution containing the compound represented by the formula (2) was extracted. The resulting extract was appropriately concentrated by nitrogen purge, whereby a concentrated extract was obtained.

Measurement of the amount of compound represented by the formula (2) in extract

The amount of the compound represented by the formula (2) contained in the extract was obtained by conversion to perfluorooctanesulfonic acid.

Calibration curve for perfluorooctanesulfonic acid

Methanol standard solutions having five different known levels from 1 ng/mL to 100 ng/mL of perfluorooctanesulfonic acid were prepared, and analyzed using a liquid chromatograph mass spectrometer (Waters, LC-MS ACQUITY UPLC/TQD). By first order approximation based on the sample concentrations and the peak integral values, the values of a and b were obtained by the following relational expression (1).

$$A = a \times X + b \quad (1)$$

A: Peak area of perfluorooctanesulfonic acid
X: Concentration (ng/mL) of perfluorooctanesulfonic acid

Instrument configuration and LC-MS measurement conditions

[Table 4]

| LC system | | |
|---|---|---|
| Device | Acquity UPLC from Waters | |
| Column | Acquity UPLC BEH C181.7 μm (2.1 × 50 mm) from Waters | |
| Mobile phase | A $CH_3CN$ | |
| | B 20mM$CH_3COONH_4/H_2O$ | |
| | 0 → 1.5 min | AB = 10:90 |

(continued)

| LC system | | | |
|---|---|---|---|
| | | 1.5 → 8.5 min | AB = 10:90 → AB = 90:10 Linear gradient |
| | | 8.5 → 10 min | AB = 90:10 |
| Flow rate | | 0.4 mL/min | |
| Column temperature | 40°C | | |
| Sample injection amount | 5 μL | | |
| MS system | | | |
| Device | TQ Detecter | | |
| Measurement mode | MRM (Multiple Reaction Monitoring) | | |
| Ionization method | Electrospray ionization<br>Negative mode | | |

MRM measurement parameter

[Table 5]

| Compound | Precursor | Product |
|---|---|---|
| Perfluorooctanesulfonic acid | 499 | 99 |

Amount of compound represented by formula (2) containing 4 to 20 carbon atoms in extract

The amount of the compound represented by the formula (2) containing 4 to 20 carbon atoms was determined using a liquid chromatograph-mass spectrometer. For the extracted liquid phase, the peak areas of the compositions represented by the formula (2) with respective numbers of carbon atoms were determined by the MRM method.

MRM measurement parameter

[Table 6]

| Compound | Number of carbon atoms | Precursor | Product |
|---|---|---|---|
| $(H-(CF_2)_4-SO_3)M$ | 4 | 281 | 99 |
| $(H-(CF_2)_5-SO_3)M$ | 5 | 331 | 99 |
| $(H-(CF_2)_6-SO_3)M$ | 6 | 381 | 99 |
| $(H-(CF_2)_7-SO_3)M$ | 7 | 431 | 99 |
| $(H-(CF_2)_8-SO_3)M$ | 8 | 481 | 99 |
| $(H-(CF_2)_9-SO_3)M$ | 9 | 531 | 99 |
| $(H-(CF_2)_{10}-SO_3)M$ | 10 | 581 | 99 |
| $(H-(CF_2)_{11}-SO_3)M$ | 11 | 631 | 99 |
| $(H-(CF_2)_{12}-SO_3)M$ | 12 | 681 | 99 |
| $(H-(CF_2)_{13}-SO_3)M$ | 13 | 731 | 99 |
| $(H-(CF_2)_{14}-SO_3)M$ | 14 | 781 | 99 |
| $(H-(CF_2)_{15}-SO_3)M$ | 15 | 831 | 99 |
| $(H-(CF_2)_{16}-SO_3)M$ | 16 | 881 | 99 |
| $(H-(CF_2)_{17}-SO_3)M$ | 17 | 931 | 99 |
| $(H-(CF_2)_{18}-SO_3)M$ | 18 | 981 | 99 |

(continued)

| Compound | Number of carbon atoms | Precursor | Product |
|---|---|---|---|
| $(H-(CF_2)_{19}-SO_3)M$ | 19 | 1031 | 99 |
| $(H-(CF_2)_{20}-SO_3)M$ | 20 | 1081 | 99 |

The amount of the compound represented by the formula (2) containing n carbon atoms in the extract was calculated using the following equation (3). The values of a and b in the equation (3) were determined using the relational expression (1).

$$XSn = ((ASn - b)/a) \times ((50 \times n + 81)/499) \quad (3)$$

XSn: Amount (ng/mL) of the compound represented by the formula (2) containing n carbon atoms in the extract
ASn: Peak area of the compound represented by the formula (2) containing n carbon atoms in the extract
The quantitation limit in this measurement method is 1 ng/mL.

Amount of compound represented by formula (2) containing n carbon atoms in composition

The amount of the compound represented by the formula (2) containing n carbon atoms in the composition was determined using the following equation (4).

$$YSn = XSn \times 12.6 \quad (4)$$

YSn: Amount (ppb relative to PTFE) of the compound represented by the formula (2) containing n carbon atoms in the composition
The quantitation limit was 10 ppb by mass.

Preparation Example 1

To 16 g of deionized water was added 0.273 g of lauric acid, to which 2.77 g of a 2.8% concentration ammonia aqueous solution was gradually added with stirring, whereby aqueous solution C was obtained.
To 100 g of deionized water was added 10 g of lauric acid, to which 25 g of a 10% concentration ammonia aqueous solution was gradually added with stirring, whereby aqueous solution D was obtained. The pH at this time was 9.6.

Production Example 1

A 3-L SUS reactor equipped with a stirrer was charged with 1748 g of deionized water, 90 g of paraffin wax, the aqueous solution C obtained in Preparation Example 1, and 0.5 g of ammonium oxalate. The pH of the aqueous dispersion at this time was 9.0. The reactor was hermetically sealed, and the inside of the reactor was replaced with nitrogen for oxygen removal. The temperature of the reactor was increased to 70°C, and 2.0 g of HFP was added to the reactor. Further, the pressure inside the reactor was increased with TFE to 2.70 MPa. When continuous feeding of a potassium permanganate aqueous solution at a concentration of 0.5% by mass, as a polymerization initiator, to the reactor was started, the pressure dropped and the reaction started. TFE was fed so that the reaction pressure was constant at 2.70 MPa. Stirring was stopped when 80 g of TFE had been added, and depressurization was performed until the reaction pressure reached the atmospheric pressure.
Immediately thereafter, the reactor was filled with TFE to set the reaction pressure to 2.70 MPa, and stirring was restarted, whereby the reaction was continued. At the same time, continuous feeding of the aqueous solution D obtained in Preparation Example 1 to the reactor was started. Stirring was stopped when 680 g of TFE had been added, and depressurization was performed until the pressure inside the reactor reached the atmospheric pressure. By the end of the reaction, 56.0 g of the potassium permanganate aqueous solution and 26.2 g of the aqueous solution D were fed. The resulting aqueous dispersion was taken out of the reactor and cooled, and the paraffin wax was separated, whereby a PTFE aqueous dispersion was obtained. The resulting PTFE aqueous dispersion had a pH of 8.8, a solid content concentration of 27.1% by mass, and a primary particle size of 220 nm.

Comparative Example 1

The PTFE aqueous dispersion obtained in Production Example 1 was diluted with deionized water to a solid content concentration of 13% by mass. The dilution was stirred vigorously in a container equipped with a stirrer for coagulation, and water was filtered out, whereby a wet powder was obtained. The water content of the wet powder was approximately 52% by mass.

The resulting wet powder was placed in a stainless-steel flat tray (tray with no air permeability on the bottom and sides) (amount: 2.0 g/$cm^2$), and the mesh tray was heated in a hot air circulating electric furnace at 180°C. After five hours, the flat tray was taken out and air-cooled, whereby a PTFE composition was obtained.

The resulting PTFE composition had a water content of 0.131% by mass and an extrusion pressure of 11.6 MPa, and was expandable. The PTFE composition had a tensile strength at break of 8.7 N.

The physical properties of the resulting PTFE composition are shown in Tables 7 and 8 below.

Example 1

A PTFE composition was obtained as in Comparative Example 1, except that the heat treatment time was changed to 18 hours.

The resulting PTFE composition had a water content of 0.025% by mass, a standard specific gravity of 2.170, a thermal instability index of 44, a HFP content of 0.002% by mass, a 0.1% mass reduction temperature of 386°C, a 1.0% mass reduction temperature of 490°C, and an endothermic peak temperature of 342°C. The extrusion pressure was 20.8 MPa, and the PTFE composition was expandable and had a tensile strength at break of 25.8 N.

The physical properties of the resulting PTFE composition are shown in Tables 7 and 8 below.

Example 2

A PTFE composition was obtained as in Example 1, except that the flat tray was replaced with a mesh tray and the heat treatment temperature was changed to 210°C.

The resulting PTFE composition had a water content of 0.002% by mass, a standard specific gravity of 2.170, a thermal instability index of 44, a HFP content of 0.002% by mass, a 0.1% mass reduction temperature of 391°C, a 1.0% mass reduction temperature of 491°C, and an endothermic peak temperature of 342°C. The extrusion pressure was 24.9 MPa, and the PTFE composition was expandable and had a tensile strength at break of 32.2 N.

The physical properties of the resulting PTFE composition are shown in Tables 7 and 8 below.

Example 3

A PTFE composition was obtained as in Example 2, except that the heat treatment temperature was changed to 240°C.

The resulting PTFE composition had a water content of 0.001% by mass, a standard specific gravity of 2.170, a thermal instability index of 44, a HFP content of 0.002% by mass, a 0.1% mass reduction temperature of 391°C, a 1.0% mass reduction temperature of 491°C, and an endothermic peak temperature of 342°C. The extrusion pressure was 27.0 MPa, and the PTFE composition was expandable and had a tensile strength at break of 35.1 N.

The amount of the compound represented by the formula (1) wherein m is 4 to 20 and the amount of the compound represented by the formula (2) wherein n is 4 to 20 in the resulting PTFE composition were each less than the quantitation limit (less than 10 ppb by mass).

Preparation Example 2

A mixture of 10-undecen-1-ol (16 g), 1,4-benzoquinone (10.2 g), DMF (160 mL), water (16 mL), and $PdCl_2$ (0.34 g) was heated and stirred at 90°C for 12 hours.

Then, the solvent was removed under reduced pressure. The resulting residue was purified by separation and column chromatography, whereby 11-hydroxyundecan-2-one (15.4 g) was obtained.

A mixture of 11-hydroxyundecan-2-one (13 g), sulfur trioxide-triethylamine complex (13.9 g), and tetrahydrofuran (140 mL) was stirred at 50°C for 12 hours. A solution of sodium methoxide (3.8 g)/methanol (12 mL) was added dropwise to the reaction solution.

The precipitated solid was filtered under reduced pressure and washed with ethyl acetate, whereby sodium 10-oxoundecyl sulfate (15.5 g) (hereinafter referred to as surfactant A) was obtained.

To a 1-L glass reactor equipped with a stirrer was added 588.6 g of deionized water and 70.0 g of the surfactant A. The reactor was hermetically sealed, and the inside of the reactor was replaced with nitrogen for oxygen removal.

The temperature of the reactor was increased to 90°C and the pressure was increased with nitrogen to 0.4 MPaG. Ammonium persulfate (APS) in an amount of 41.4 g was fed, followed by stirring for three hours. Stirring was stopped, and depressurization was performed until the pressure inside the reactor reached the atmospheric pressure, followed by cooling, whereby surfactant aqueous solution B was obtained.

Production Example 2

To a 6-L SUS reactor equipped with a stirrer was added 3600 g of deionized water, 180 g of paraffin wax, and 0.540 g of the surfactant A. The reactor was hermetically sealed, and the inside of the reactor was replaced with nitrogen for oxygen removal. The temperature of the reactor was increased to 70°C and the reactor was filled with TFE to set the pressure at 2.70 MPa. As polymerization initiators, 0.620 g of ammonium persulfate (APS) and 1.488 g of disuccinic acid peroxide (DSP) were fed. TFE was fed so that the reaction pressure was constant at 2.70 MPa. While feeding of TFE was started, continuous feeding of the surfactant aqueous solution B was started. When 540 g of TFE had been fed, 20 g of deionized degassed water containing 0.76 g of hydroquinone dissolved therein was added. Stirring was stopped when 1200 g of TFE had been fed, and depressurization was performed until the pressure inside the reactor reached the atmospheric pressure. By the end of the reaction, 103 g of the surfactant aqueous solution B was fed. The contents were taken out of the reactor and cooled, and the paraffin wax was separated, whereby a PTFE aqueous dispersion was obtained.

The resulting PTFE aqueous dispersion had a solid content concentration of 25.9% by mass and an average primary particle size of 290 nm.

Example 4

The PTFE aqueous dispersion obtained in Production Example 2 was diluted with deionized water to a solid content concentration of 13% by mass. The dilution was stirred vigorously in a container equipped with a stirrer for coagulation, and water was filtered out, whereby a wet powder was obtained. The water content of the wet powder was approximately 52% by mass.

The resulting wet powder was placed in a stainless-steel mesh tray (amount: 2.0 g/$cm^2$), and the mesh tray was heated in a hot air circulating electric furnace at 210°C. After 18 hours, the mesh tray was taken out and air-cooled, whereby a PTFE composition was obtained.

The resulting PTFE composition had a water content of 0.001% by mass, a standard specific gravity of 2.151, a thermal instability index of 42, a 0.1% mass reduction temperature of 397°C, a 1.0% mass reduction temperature of 492°C, and an endothermic peak temperature of 342°C. The extrusion pressure was 18.9 MPa, and the PTFE composition was expandable and had a tensile strength at break of 20.2 N.

The physical properties of the resulting PTFE composition are shown in Tables 7 and 8 below.

Example 5

The PTFE aqueous dispersion obtained in Production Example 1 was diluted with deionized water to a solid content concentration of 13% by mass. The dilution was stirred vigorously in a container equipped with a stirrer for coagulation, and water was filtered out, whereby a wet powder was obtained.

The resulting wet powder was placed in a stainless-steel mesh tray (amount: 1.2 g/$cm^2$). Superheated steam at 180°C was introduced at a rate of 20 kg/hr into a furnace equipped with a high-temperature superheated steam generator. The mesh tray was heated in the furnace at 180°C for seven hours, whereby a PTFE composition was obtained.

The resulting PTFE composition had a water content of 0.002% by mass, a standard specific gravity of 2.170, a thermal instability index of 44, a 0.1% mass reduction temperature of 391°C, a 1.0% mass reduction temperature of 491°C, an endothermic peak temperature of 342°C, and an extrusion pressure of 19.1 MPa, and was expandable.

The amount of $(H-CF_2)_{m-1}-COO)H$ (wherein m is 13 or 14) was less than 10 ppb by mass relative to the PTFE composition, and the amount of $(H-CF_2)_n-SO_3)H$ (wherein n is 4 to 20) was less than 10 ppb by mass relative to the PTFE composition.

[Table 7]

| Amount of $(H-CF_2)_{m-1}-COO)M$ Unit: ppb by mass/PTFE | | | | |
|---|---|---|---|---|
| m | Comparative Example 1 | Example 1 | Example 2 | Example 4 |
| 4 | 138 | < 10 | < 10 | < 10 |

(continued)

| Amount of $(H-CF_2)_{m-1}-COO)M$<br>Unit: ppb by mass/PTFE | | | | |
|---|---|---|---|---|
| m | Comparative Example 1 | Example 1 | Example 2 | Example 4 |
| 5 | 1074 | < 10 | < 10 | < 10 |
| 6 | 103 | < 10 | < 10 | < 10 |
| 7 | 5714 | < 10 | < 10 | < 10 |
| 8 | 158 | < 10 | < 10 | < 10 |
| 9 | 1918 | < 10 | < 10 | < 10 |
| 10 | 91 | 32 | < 10 | < 10 |
| 11 | 6428 | 33 | < 10 | < 10 |
| 12 | 956 | 33 | < 10 | < 10 |
| 13 | 1226 | 47 | < 10 | < 10 |
| 14 | 153 | 48 | < 10 | < 10 |
| 15 | 253 | 123 | 41 | 73 |
| 16 | 96 | 69 | < 10 | 141 |
| 17 | 123 | 76 | < 10 | < 10 |
| 18 | 76 | 44 | < 10 | < 10 |
| 19 | 82 | 47 | 26 | < 10 |
| 20 | 61 | 26 | < 10 | < 10 |

[Table 8]

| Amount of $(H-(CF_2)_n-SO_3)M$<br>Unit: ppb by mass/PTFE | | | | |
|---|---|---|---|---|
| n | Comparative Example 1 | Example 1 | Example 2 | Example 4 |
| 4 | < 10 | < 10 | < 10 | 45 |
| 5 | < 10 | < 10 | < 10 | < 10 |
| 6 | < 10 | < 10 | < 10 | 973 |
| 7 | < 10 | < 10 | < 10 | < 10 |
| 8 | < 10 | < 10 | < 10 | 1412 |
| 9 | < 10 | < 10 | < 10 | < 10 |
| 10 | < 10 | < 10 | < 10 | 786 |
| 11 | < 10 | < 10 | < 10 | < 10 |
| 12 | < 10 | < 10 | < 10 | 209 |
| 13 | < 10 | < 10 | < 10 | < 10 |
| 14 | < 10 | < 10 | < 10 | 112 |
| 15 | < 10 | < 10 | < 10 | < 10 |
| 16 | < 10 | < 10 | < 10 | < 10 |
| 17 | < 10 | < 10 | < 10 | < 10 |
| 18 | < 10 | < 10 | < 10 | < 10 |

(continued)

| Amount of $(H-(CF_2)_n-SO_3)M$ Unit: ppb by mass/PTFE | | | | |
|---|---|---|---|---|
| n | Comparative Example 1 | Example 1 | Example 2 | Example 4 |
| 19 | < 10 | < 10 | < 10 | < 10 |
| 20 | < 10 | < 10 | < 10 | < 10 |

## Claims

1. A polytetrafluoroethylene composition comprising:

   polytetrafluoroethylene; and
   at least one compound selected from the group consisting of a compound represented by the following formula (1) and a compound represented by the following formula (2),
   the polytetrafluoroethylene composition being substantially free from water:

   Formula (1): $(H-(CF_2)_{m-1}-COO)_pM^1$

   wherein m is 4 to 20; $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2; and

   Formula (2) : $(H-(CF_2)_n-SO_3)_qM^2$

   wherein n is 4 to 20; $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

2. The polytetrafluoroethylene composition according to claim 1, wherein $M^1$ in the formula (1) is H or $NH_4$ and $M^2$ in the formula (2) is H or $NH_4$.

3. The polytetrafluoroethylene composition according to claim 1 or 2, wherein the polytetrafluoroethylene is contained in an amount of 99.95% by mass or more relative to the polytetrafluoroethylene composition.

4. The polytetrafluoroethylene composition according to any one of claims 1 to 3, wherein the compound (1) is contained in an amount of 1 ppb by mass or more and 1000 ppb by mass or less and the compound (2) is contained in an amount of 5000 ppb by mass or less, relative to the polytetrafluoroethylene composition.

5. The polytetrafluoroethylene composition according to claim 4, wherein the polytetrafluoroethylene composition is substantially free from a compound represented by the following formula (3):

   Formula (3): $(H-(CF_2)_8-SO_3)_qM^2$

   wherein $M^2$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and q is 1 or 2.

6. The polytetrafluoroethylene composition according to claim 5, wherein the compound represented by the formula (3) amounts to 25 ppb by mass or less relative to the polytetrafluoroethylene.

7. The polytetrafluoroethylene composition according to any one of claims 1 to 6,

wherein the polytetrafluoroethylene composition contains at least one compound selected from the group consisting of a compound represented by the following formula (4) and a compound represented by the following formula (4'), each in an amount of 1000 ppb by mass or less relative to the polytetrafluoroethylene composition:

Formula (4) : $(H-(CF_2)_{15}-COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and

Formula (4'): $(H-(CF_2)_{16}-COO)_pM^1$

wherein $M^1$ is H, a metal atom, $NR^5_4$ (where $R^5$ is as defined above), imidazolium optionally containing a substituent, pyridinium optionally containing a substituent, or phosphonium optionally containing a substituent; and p is 1 or 2.

**8.** The polytetrafluoroethylene composition according to any one of claims 1 to 7,
wherein the polytetrafluoroethylene composition contains at least one compound selected from the group consisting of a compound represented by the following formula (5) and a compound represented by the following formula (5'), each in an amount of 1000 ppb by mass or less relative to the polytetrafluoroethylene composition:

Formula (5) : $(H-(CF_2)_{13}-COO)_pM^1$

wherein $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and

Formula (5'): $(H-(CF_2)_{14}-COO)_pM^1$

wherein $M^1$ is H, a metal atom, $NR^5_4$ (where $R^5$ is as defined above), imidazolium optionally containing a substituent, pyridinium optionally containing a substituent, or phosphonium optionally containing a substituent; and p is 1 or 2.

**9.** The polytetrafluoroethylene composition according to any one of claims 1 to 8,
wherein the polytetrafluoroethylene composition has an average primary particle size of 100 to 500 nm.

**10.** The polytetrafluoroethylene composition according to any one of claims 1 to 9,
wherein the water amounts to 0.050% by mass or less relative to the polytetrafluoroethylene composition.

**11.** The polytetrafluoroethylene composition according to any one of claims 1 to 10,
wherein the polytetrafluoroethylene composition has an extrusion pressure at a reduction ratio of 100 of 10 MPa or higher.

**12.** The polytetrafluoroethylene composition according to any one of claims 1 to 11,
wherein the polytetrafluoroethylene composition is expandable.

**13.** The polytetrafluoroethylene composition according to any one of claims 1 to 12,
wherein the polytetrafluoroethylene contains a tetrafluoroethylene unit and a modifying monomer unit based on a modifying monomer copolymerizable with tetrafluoroethylene.

**14.** The polytetrafluoroethylene composition according to claim 13,
wherein the modifying monomer includes at least one selected from the group consisting of perfluoro(methyl vinyl ether), hexafluoropropylene, vinylidene fluoride, and chlorotrifluoroethylene.

**15.** A polytetrafluoroethylene composition having a tensile strength at break of 10.0 N or higher and a 0.1% mass reduction temperature of 400°C or lower, and being substantially free from water.

**16.** A polytetrafluoroethylene composition having a tensile strength at break of 10.0 N or higher and a 1.0% mass reduction temperature of 492°C or lower, and being substantially free from water.

**17.** A polytetrafluoroethylene composition having a tensile strength at break of 10.0 N or higher and a thermal stability index (TII) of 20 or higher, and being substantially free from water.

**18.** A polytetrafluoroethylene composition having a standard specific gravity of 2.200 or less and a 0.1% mass reduction temperature of 400°C or lower, and being substantially free from water.

**19.** A polytetrafluoroethylene composition having a standard specific gravity of 2.200 or less and a 1.0% mass reduction temperature of 492°C or lower, and being substantially free from water.

**20.** The polytetrafluoroethylene composition according to claim 19,
wherein the polytetrafluoroethylene composition has a standard specific gravity of 2.130 or more and a 1.0% mass reduction temperature of 470°C or higher.

**21.** The polytetrafluoroethylene composition according to claim 19 or 20,
wherein the polytetrafluoroethylene is contained in an amount of 99.95% by mass or more relative to the polytetrafluoroethylene composition.

**22.** The polytetrafluoroethylene composition according to any one of claims 1 to 21,
wherein the polytetrafluoroethylene composition is used in a battery binder.

**INTERNATIONAL SEARCH REPORT**

International application No. **PCT/JP2024/001345**

**A. CLASSIFICATION OF SUBJECT MATTER**

***C08L 27/18***(2006.01)i; ***C08K 5/09***(2006.01)i; ***C08K 5/42***(2006.01)i
FI: C08L27/18; C08K5/09; C08K5/42

According to International Patent Classification (IPC) or to both national classification and IPC

**B. FIELDS SEARCHED**

Minimum documentation searched (classification system followed by classification symbols)

C08L27/18; C08K5/09; C08K5/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-126769 A (DAIKIN INDUSTRIES, LTD.) 30 August 2022 (2022-08-30) claims, paragraph [0080], examples | 1-21 |
| Y | | 22 |
| X | WO 2021/015291 A1 (DAIKIN INDUSTRIES, LTD.) 28 January 2021 (2021-01-28) claims, paragraphs [0392]-[0397], [0537], examples | 1-22 |
| Y | | 22 |
| X | WO 2020/162623 A1 (DAIKIN INDUSTRIES, LTD.) 13 August 2020 (2020-08-13) claims, examples | 1-21 |
| Y | | 22 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/001345**

| Patent document cited in search report | Publication date (day/month/year) | Patent family member(s) | Publication date (day/month/year) |
|---|---|---|---|
| JP 2022-126769 A | 30 August 2022 | US 2021/0221992 A1<br>claims, paragraph [0174], examples<br>WO 2020/022355 A1<br>EP 3828208 A1<br>CN 112638957 A | |
| WO 2021/015291 A1 | 28 January 2021 | US 2022/0275119 A1<br>claims, paragraphs [0758]-[0765], [1160], examples<br>EP 4006063 A1<br>CN 114127131 A | |
| WO 2020/162623 A1 | 13 August 2020 | US 2022/0119556 A1<br>claims, examples<br>EP 3922435 A1<br>CN 113423557 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015516029 T
- JP 2005527652 T
- JP 2002201217 A
- US 4576869 B
- WO 2020022355 A
- JP 2013542308 T
- JP 2013542309 T
- JP 2013542310 T
- US 6841616 B
- US 3391099 A, Punderson
- US 20070015864 A
- US 20070015865 A
- US 20070015866 A
- US 20070276103 A
- US 20070117914 A
- US 2007142541 A
- US 20080015319 A
- US 3250808 B
- US 3271341 B
- JP 2003119204 A
- WO 2005042593 A
- WO 2008060461 A
- WO 2007046377 A
- WO 2007119526 A
- WO 2007046482 A
- WO 2007046345 A
- US 20140228531 A
- WO 2013189824 A
- WO 2013189826 A
- WO 2011014715 A


### Non-patent literature cited in the description


- **SUWA, T. ; TAKEHISA, M. ; MACHI, S.** *J. Appl. Polym. Sci.,* 1973, vol. 17, 3253
- **R. M. HILL.** Silicone Surfactants. Marcel Dekker, Inc,
- *J. Appl. Polymer Sci.,* 1995, vol. 57, 797
- **ROMPP.** Lexikon Chemie. Georg Thieme Verlag, 1999